(19) Europäisches Patentamt
European Patent Office
Office européen des brevets

(11) EP 0 517 521 B1

# (12) EUROPEAN PATENT SPECIFICATION

(45) Date of publication and mention of the grant of the patent:
**10.05.2000 Bulletin 2000/19**

(51) Int. Cl.[7]: **B41J 2/205**

(21) Application number: **92305134.6**

(22) Date of filing: **04.06.1992**

(54) **Tone recording method using ink jet recording head**

Halbtonaufzeichnungsverfahren unter Verwendung eines Farbstrahlkopfes

Méthode d'enregistrement en demi-teintes utilisant une tête à jet d'encre

(84) Designated Contracting States:
**AT BE CH DE DK ES FR GB GR IT LI LU NL PT SE**

(30) Priority: **05.06.1991 JP 13420291**
**07.06.1991 JP 13651991**
**07.06.1991 JP 13652691**
**07.06.1991 JP 13652991**
**07.06.1991 JP 13660791**
**07.06.1991 JP 13660991**
**07.06.1991 JP 13661091**
**07.06.1991 JP 13661191**

(43) Date of publication of application:
**09.12.1992 Bulletin 1992/50**

(73) Proprietor:
**CANON KABUSHIKI KAISHA**
**Tokyo (JP)**

(72) Inventors:
- **Shioya, Makoto**
  **Ohta-ku, Tokyo (JP)**
- **Tamura, Yasuyuki**
  **Ohta-ku, Tokyo (JP)**
- **Takahashi, Hiroto**
  **Ohta-ku, Tokyo (JP)**
- **Tachihara, Masayoshi**
  **Ohta-ku, Tokyo (JP)**
- **Yamamoto, Tadashi**
  **Ohta-ku, Tokyo (JP)**
- **Inada, Genji**
  **Ohta-ku, Tokyo (JP)**
- **Kimura, Tatsuo**
  **Ohta-ku, Tokyo (JP)**
- **Ashiwa, Jun**
  **Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:

| | |
|---|---|
| **EP-A- 0 172 592** | **EP-A- 0 300 595** |
| **EP-A- 0 376 596** | **US-A- 4 312 005** |
| **US-A- 4 401 991** | **US-A- 4 746 935** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 517 521 B1

Printed by Xerox (UK) Business Services
2.16.7 (HRS)/3.6

## Description

FIELD OF THE INVENTION AND RELATED ART

The present invention relates to an ink jet recording method and apparatus using an ink jet recording head having a plurality of ejection outlets (nozzles), capable of tone recording.

In an ink jet recording system using the recording head, the ink is ejected to a recording material in accordance with recording signals. The system is widely used because of the low running cost and the quietness. A great number of nozzles are arranged in a line extending perpendicular to the relative movement direction between the recording material and the recording head, and therefore, one scan of the recording head over the recording material can cover a recording width corresponding to the number of nozzles, so that the high speed recording is accomplished relatively easily.

When a tone gradation is to be provided in the ink jet recording system, it will be considered to change the size of liquid droplet ejected. However, there is no practical method for accomplishing this. Usually, therefore, the number of ink droplets per unit area is controlled on the basis of pseudo-half-tone image processing. In another method called "multi-droplet system", a smaller size ink droplet is used, and a plurality of such ink droplets are deposited substantially at the same point on the recording material to provide one recorded dot, in which the number of ink droplets is changed to reproduce the tone. This system permits the tone recording without reduction of the image resolution, and is particularly effective for the ink jet recording system in which difficulties arise in significantly changing the size of one liquid droplet.

However, in a conventional multi-droplet system, one picture element (pixel) is recorded by a plurality of ink droplets ejected from one and the same nozzle, and therefore, if there is a variation in the sizes of the ink droplets of the individual nozzles, a non-uniform image results which includes stripes and/or image density unevenness.

This problem becomes more significant where the number of nozzles of a recording head is increased to expand the recording width covered by one scan in an attempt to accomplish the high speed recording. The increase of the nozzle number and therefore the recording width results in a greater no frequency component of the spatial frequency of the unevenness, and therefore, in the more conspicuous unevenness. Thus, the image quality is degraded. In the case of the tone recording, the unevenness is so conspicuous that only a several % variation among the ejection quantities of the nozzles is enough for one to recognize stripes caused by the density unevenness.

In order to avoid the problem, the conventional multi-droplet system requires the very accurate head manufacturing in order to reduce the variation in the ejection quantities through the individual nozzles. This brings about the high cost and low yield. As a method for removing the density unevenness through software, it is effective to change the number of ink ejections to compensate for the variation among the nozzles with the aid of image processing of error diffusing method or the like. However, such an image processing system results in increase of the system cost. In addition, even if such a processing is used, the number of ink droplets has to be readjusted if the variation among nozzles in the ink volumes changes with time. This makes the maintenance operation difficult. Furthermore, this method does not work where there is a non-ejection nozzle.

This system also involves the problem that the density unevenness is not sufficiently suppressed when the variation in the ink droplet volume is larger.

In order to accomplish a high quality tone recording of not less than 16 tone gradations in the above-described system, the stabilized ink ejections with a very small droplets is required. Therefore, the manufacturing accuracy of the recording head has to be very high, so that the manufacturing method is totally different from that for the bi-level recording heads. This results in high cost and low yield.

In the case of multi-droplet system of 3 - 5 tone gradations, the droplet size, volume or quantity is permitted to be relatively large as compared with that in the case of the 16 or more tone gradations. Therefore, the manufacturing tolerance in the recording head is so large that the same manufacturing method as in the bi-level recording head can be used. The cost can be suppressed.

The image provided by the recording head having such a large number of tone gradations is better in the image quality than the image recorded by the bi-level recording head because of grains are not conspicuous. However, as compared with the image provided by the recording head having the 16 or the like tone levels, particularly in the grains in the high light portions.

U.S. Patent No. 4,746,935 proposes multi-tone ink jet printer capable of accomplishing the tone recording on the basis of combinations of 1 pl, 2 pl and 4 pl, for one pixel. According to this proposal, 8 kinds of ink droplet volumes, i.e., 0, 1, 2, 1+2(=3), 4, 1+4(=5), 2+4(=6), 1+2+4(=7), can be provided by three kinds of ink droplets (volume ratio). Therefore, the printing speed is increased as compared with the case where one ink droplet is overlaid 7 times. However, as shown in Figure 5, the curve representing the relationship between the reflection density and the total volume of the ink droplets for one pixel is steep and convex-up. For this reason, even if the differences between adjacent total volumes of the ink for one picture element are the same, the differences, in the reflection density, corresponding thereto, are not the same. Therefore, in the zone where the volume of the ink droplet for one pixel is small, the differences of the adjacent possible reflection densities is large. On the contrary, in the zone where the volume of the ink droplet for one pixel is large, the difference between the possible reflection densities is small. In other words, the volume of the ink droplet does not significantly influence the tone gradation in the zone where the volume of the ink droplet for one pixel is large. In addition, since the number of combinations of different ink droplets for one picture element is large (8 combinations in the case of 1 pl, 2 pl and 4 pl), and therefore, the image processing circuit becomes complicated with the result of high design and manufacturing cost.

Another problem of the ink jet printer of the U.S. Patent is that one recording head has to be provided with the nozzles having different ejection volumes, the difference being as large as 4 times (4 pl/1 pl), or 8 times in the case of 1 pl to 8 pl. In this case, the difficulties arise in the manufacturing of the recording head. Generally, the recording head parameters influential to the volume of the ink droplet ejected, a distance between the heater and the ejection outlet, a size of the heater, a configuration of the ink outlet or barrier and an ejection outlet area. In order to change the volume of the ink droplet from 1 to 4, the changes of the heater-outlet distance, the heater area and the ejection outlet area has to be changed. The manufacturing will be difficult only using the conventional practical method. Therefore, in order to accomplish such a recording head, a new process has to be added, with the result of increase of the manufacturing cost.

In the ink jet printer disclosed in the U.S. Patent, the ink ejection outlets providing the different ejection volumes (1 pl, 2 pl, 3 pl and 4 pl) are arranged along a scanning direction of the recording head and closely with each other at the front side of the recording head, so that the plural ink droplet ejections for a given one pixel can be effected through one scan. Therefore, the ink droplets are sequentially overlaid before the previous ink droplet has not yet been seeped or fixed on the recording material. In the image region in which the number of overlying droplets is large, the adjacent pixels are contacted with the result of feathering. If this occurs, the characters or the like become less clear. In the case of color image, the edges of the image becomes blurred by the feathering and ink mixture adjacent the edge of the monochromatic region, with the result of significant problem of the unacceptable degradation of the record quality.

In the case of color image in the ink jet recording head, there is a problem that the edges of the image is blurred due to the smear resulting from ink mixture before the fixing at the edge of the monochromatic region, particularly. In order to avoid this problem, in the pixel area modulating method such as dithering method, there are known methods in which special recording material having a coated layer of high ink absorbing nature to prevent the color mixture for individual dots, or in which different color dots are arranged in a staggered fashion as a preventing method for individual picture elements. However, if such method as used as they are, the running cost for the image output is increased, or the image resolution is decreased due to the staggered arrangement.

The feathering or expansion of the ink in the recording material can be reduced by providing a certain length of fixing period. As a method using this, Japanese Laid-Open Patent Application No. 4523/1990 (JP-A-02 004 523) proposes the recording material is scanned on the same line plural times, while the recording material is at rest, the number of scans being larger than the number of required colors. However, with this method, when black, yellow, magenta and cyan ink materials are used, the required time is 4 times with the result of significant reduction of the output speed.

On the other hand, in order to provide a wide tone gradation range with the multi-droplet system, the adjacent liquid droplets are not in contact with the result of less expansion of the liquid when the number of liquid droplets overlaid on the recording material is small, although a sufficiently small liquid droplet is required as compared with the bi-level recording. However, where the number of liquid droplets overlaid is large, the adjacent liquid dots are in contact with the result of the large expansion or feathering.

According to one aspect of the present invention, there is provided a method of recording in accordance with claim 1.

In another aspect, the present invention provides a recording apparatus in accordance with claim 31.

An ink jet recording method and apparatus embodying the invention enable tone recording to be improved.

An embodiment of the present invention provides an ink jet recording method and apparatus in which the tone recording is improved even if the ink droplet volumes varies among the nozzles.

An embodiment of the present invention provides an ink jet recording method and apparatus in which the tone recording is improved even if one or some nozzles failed.

An embodiment of the present invention provides an ink jet recording method and apparatus in which uniform tone gradation can be provided despite property change of the recording head with time.

An embodiment of the present invention provides an ink jet recording method and apparatus wherein the variations in the volumes of the ink droplets ejected through individual nozzles is reduced for any tone gradation to suppress the unevenness of the image.

An embodiment of the present invention provides an ink jet recording method and apparatus in which the high quality tone recording without conspicuous grains is possible without extremely reducing the ink droplet volume.

An embodiment of the present invention provides an ink jet recording method and apparatus in which a large number of tone gradation levels can be provided with a small number of droplets.

An embodiment of the present invention provides an ink jet recording method and apparatus in which the expansion or feathering of the image dot is suppressed to provide desired colors of the image.

An embodiment of the present invention, provides a liquid jet recording method of recording on a recording material with liquid droplets discharged trough plural scanning nozzles, the improvements residing in:

$$n/(s/p) \geqq 2$$

$$n/(s/p) \times k = g - 1$$

are satisfied, where n (n ≧ 2) is a number of the nozzles arranged at pitch P (μm); s (μm) is a distance of relative movement between the nozzles and the recording material between adjacent scans; k (k ≧ 1) is a maximum number of ink droplets per pixel and per scan; g (g ≧ 3) is a number of tone levels.

Then, one pixel is recorded by m nozzles through m main scans, where m = n/(s/nozzle pitch) . As a result, when the ink droplet volume variation among the nozzles is in the form of the normal distribution with a standard deviation σ, for example, the variation of the ink quantity per pixel is reduced to $\sigma/\sqrt{m}$ , since one pixel is recorded by different m nozzles.

According to another embodiment of the present invention, there is provided a liquid jet recording method of recording on a recording material with liquid droplets discharged trough plural scanning nozzles, the improvements residing in:

$$n/(s/p) \geqq 2$$

$$n/(s/p) \times k > g - 1$$

are satisfied, where n (n ≧ 2) is a number of the nozzles arranged at pitch P (μm); s (μm) is a distance of relative movement between the nozzles and the recording material between adjacent scans; k (k ≧ 1) is a maximum number of ink droplets per pixel and per scan; g (g ≧ 3) is a number of tone levels.

Then, s/(nozzle pitch) = t represents the relative movement distance between the recording head and the recording material by the sub-direction scan (sheet feed amount in the case of a serial printer) on the basis of a distance between adjacent nozzles. The number of scans for one picture element is m or m+1, where n/t = m (the decimal fraction is neglected, and in the case of no decimal fraction, the number of scans is m for one picture element).

The maximum number of ink droplets for one pixel is (m+1) x k, or m x k (where n/t includes no decimal fraction), but the number of droplets per one pixel is 0-g-1. Therefore, according to this aspect of this invention, the capacity of the number of ink droplets is larger than the number of ink droplets to be supplied to one pixel, and therefore, even if one or some of the ejection nozzles failed, they can be compensated for by other nozzles, so that the image is maintained uniform.

According to a further embodiment of the present invention, there is provided a liquid jet recording method in which plural liquid droplets are deposited at substantially the same portion to record a tone image, the improvement residing in that a plurality of nozzles for discharging the droplets are prepared, and the nozzles are operated to discharge the droplets in accordance with a scheme determined to operate the nozzles at substantially even frequencies.

Then, the actuation frequencies of the individual nozzles are more uniform, and therefore, the limited number of nozzles actuation does not occur.

Embodiments of the present invention will now be described, by way of example, with reference to the accompanying drawings, in which:

<u>BRIEF DESCRIPTION OF THE DRAWINGS</u>

Figure 1 is a perspective view of an ink jet recording apparatus according to an embodiment of the present invention.
Figure 2 illustrates a recording operation in the first embodiment.
Figure 3 illustrates the image formation process in the first embodiment.
Figure 4 is a perspective view of an ink jet recording apparatus according to a second embodiment of the present invention.
Figure 5 represents the image formation process in the second embodiment.
Figure 6 illustrates a recording operation in the third embodiment.

Figures 7 - 9 illustrate image formation process in the third, fourth and fifth embodiments.
Figure 10 illustrates the recording method in the first - sixth embodiments.
Figure 11 is a table of ink droplet numbers for respective scans in the sixth embodiment.
Figure 12 is a block diagram of a control system with which the present invention is usable.
Figure 13 illustrates the recording operation in the seventh embodiment of the present invention.
Figures 14, 15 and 16 show the image formation process in the seventh, eighth and ninth embodiments.
Figure 17 is a block diagram of a control system usable with the present invention.
Figures 18, 19 and 21 show tables of ink ejections capable of providing the tone gradation in the tenth, eleventh and twelfth embodiment.
Figure 20 is a table of image densities corresponding to the tone gradation in the eleventh embodiment.
Figure 22 is a block diagram of a control system usable with the thirteenth embodiment.
Figure 23 illustrates the recording operation in the thirteenth embodiment.
Figure 24 illustrates the image forming process in the thirteenth embodiment.
Figure 25 is a flow chart of an image forming operation in the thirteenth embodiment.
Figure 26 is a table for nozzle selection in the thirteenth embodiment.
Figures 27 and 28 are block diagrams of the control systems usable with the fourteenth and fifteenth embodiment.
Figure 29 illustrates the difference in the tone gradation due to the picture element formation difference.
Figure 30 is a table showing the components of the recording liquid. Figure 31 illustrates the image formation process in the sixteenth embodiment.
Figure 32 shows the detail of the image formation in the sixteenth embodiment.
Figure 33 illustrates the tone gradation in the sixteenth embodiment.
Figure 34 shows the detail of the image formation in the seventeenth embodiment.
Figure 35 illustrates the tone gradation in the seventeenth embodiment.
Figure 36 is a perspective view of a recording head according to the eighteenth embodiment.
Figure 37 illustrates the recording operation using the recording head of the eighteenth embodiment.
Figure 38 is a graph of reflection density vs. ink volume per pixel in the eighteenth embodiment.
Figure 39 is a perspective view of a recording head according to a nineteenth embodiment.
Figures 40 - 44 illustrates the recording methods in the twentieth - twenty fourth embodiments.
Figure 45 is a perspective view of an major part of an ink jet recording apparatus according to an embodiment of the present invention.
Figure 46 is a perspective view of a nozzle arrangement of the ink jet recording head of Figure 45.
Figure 47 is a block diagram of a control system for an ink jet recording apparatus.
Figure 48 is a timing chart of ejection signals.
Figure 49 is a side view illustrating image forming process.
Figure 50 is a timing chart of ejection signals in a comparison example.
Figure 51 is a top plan view showing image formation process with the ejection signals applied in accordance with the timing of Figure 50.
Figure 52 is a timing chart of ejection signals according to the twenty fifth embodiment of the present invention.
Figure 53 is a top plan view illustrating image formation with the ejection signals applied with the timing of Figure 52.
Figures 54 and 55 are timing charts of ejection signals in twenty sixth and twenty seventh embodiments of the present invention.
Figure 56 is a top plan view illustrating image formation with the ejection signals at the timing of Figure 55.

DESCRIPTION OF THE PREFERRED EMBODIMENTS

Referring to the accompanying drawings, the preferred embodiments of the present invention will be described in detail.

Embodiment 1

Figure 1 shows an ink jet recording apparatus according to this invention. It comprises a recording head 1 having 128 nozzles (ink ejection or discharging outlets) at the density of 16 nozzles/mm (400 dpi). Each of the nozzles is provided with a heater (heat generating element) in the liquid passage communicating with the associated nozzle to produce ink ejection energy. The heater generates heat in response to electric pulse signal applied thereto. Upon the electric pulse supply thereto, the film boiling occurs in the ink. With the expansion of the bubble created by the film boiling, the ink is ejected. In this example, the ejection frequency of each of the nozzles is 2 kHz, and therefore, the driving frequency for the heater is 2 kHz.

The recording apparatus further comprises a carriage 4 for carrying the recording head 1. The carriage 4 moves along the guiding shafts 5A and 5B. An ink supply tube 6 functions to supply the ink to the recording head 1 from an unshown ink container. A flexible cable 7 functions to supply driving signals and controlling signals from an unshown controller to a head driving circuit mounted on the recording head 1 in accordance with record data (image information). The ink supply tube 6 and the flexible cable 7 are made of flexible material capable of following the movement of the carriage 4.

To the carriage 4, an unshown belt extending in parallel with the guiding shafts 5A and 5B, is connected. The belt is driven by an unshown carriage motor, so that the carriage 4 is moved.

A platen 3 extends also in parallel with the guiding shafts 5A and 5B. Designated by a reference numeral 2 is a recording material. While the carriage 4 is moved, the recording head 1 eject the ink to the recording material 2 at the portion faced thereto to effect the recording operation.

The description will be made as to the method for 17 tone gradation recording, in which the number of liquid droplets per pixel is variable in the range of 0 - 16 inclusive. Figures 2 and 3 illustrate the concept of the recording method of this embodiment. The recording head 1 has vertically arranged 128 nozzles. For the convenience of explanation, the nozzles are identified by the numerals 1, 2, ..., 128 from the tog in this Figure.

In operation, while the carriage is moved at the speed of 31.75 mm/sec in the main scan direction, the recording operation is carried out using only nozzles Nos. 121 - 128. Then, as shown in Figure 3 at portion (a), the pixels 1 - 8 (from the top of the recording material) are recorded 0 or 1 ink droplet. Subsequently, the recording material is fed upwardly (sub-scan direction) by a distance corresponding to 8 pixels (for the convenience of explanation, the recording head is shown as moving downwardly relative to the recording material in the Figure). Then, the recording operation is carried out using the nozzles Nos. 113 - 128. Then, as shown in Figure 3 at portion (b), the nozzles Nos. 113 - 120 effect the recording on the picture elements 1 - 8 which have already been recorded by the nozzles Nos. 121 - 128 in the previous scan, and the nozzles Nos. 121 - 128 effect the recording on new picture elements 9 - 16. Thus, the picture elements 1 - 8 are recorded by 0 - 2 ink droplet per pixel.

Thereafter, the recording material (sheet) is fed upwardly by the distance corresponding to the 8 pixels, and then, the recording operation is carried out using the nozzles Nos. 105 - 128. By repeating sequentially such recording operations, the pixels 1 - 8 are recorded by 0 - 16 ink droplets per pixel, after 16 scanning operations are completed, as shown in Figure 3 at portions (c) and (d). In this manner, 17 tone gradation recording is effected. The similar operations are repeated thereafter so that the 17-tone-gradation image is formed on the entire surface of the recording material. At the bottom of the image, each 8 nozzles is sequentially stopped from the bottom each time the scanning operation is completed.

Noting one pixel, No. 1 pixel, for example in the resultant image, the pixel receives the liquid, 0 or 1 from 16 nozzles, i.e., Nos. 1, 9, 17, 25, 33, 41, 49, 57, 65, 73, 81, 89, 97, 105, 113, 121 (the order of nozzle actuations is the opposite). Therefore, the variation of the ink ejection volume from the nozzles is averaged, so that the resultant image does not have any conspicuous stripe or unevenness, as contrasted to the image recorded through a conventional method in which one pixel is recorded by plural ink droplets from the same nozzle.

<u>Embodiment 2</u>

Figure 4 is a perspective view of an ink jet recording apparatus of the second embodiment. A recording head 11 is a thermal energy ink jet recording head having 512 nozzles at the density of 16 nozzles/mm. The nozzles are arranged in the horizontal direction on the Figure. The recording head is movable along the rail 14. The recording material 12 is wrapped on a drum 13, which is rotated by an unshown motor.

Referring to Figure 5, the image formation process will be described in this method to provide 9 tone gradation recording. First, the recording head 11 is moved to the leftmost position in Figure 4. The recording operation is carried out using only 64 nozzles, i.e., nozzles Nos. 449 - 512, while the drum 13 is rotated one full turn (main scan) (Figure 5, portion (a)). Then, the recording head 11 is moved to the right by a distance corresponding to 64 pixels (sub-scan direction). Then, the recording operation is carried out using nozzles Nos. 385 - 512, while rotating the drum 13 through one turn (Figure 5, portion(b)). The rightward movement of the recording head 11 and the rotation of the drum 13, are repeated to effect the recording on the recording material.

As a result, the first pixel, for example, is recorded by 8 nozzles, i.e., nozzles Nos. 1, 65, 129, 193, 257, 321, 385 and 449. The 9 level tone recording is effected by 0 - 8 droplets of the ink.

Various images have been recorded with this method, and it has been confirmed that uniform and sharp images are provided without stripe.

<u>Embodiment 3</u>

In this embodiment, 17 tone gradation recording is possible. The structures of the apparatus are the same as that of the second embodiment except for the recording head. The recording head 11 has 256 nozzles, each of which ejects a smaller volume of ink droplet than in the second embodiment.

Figure 6 shows the concept of the recording in this embodiment. In this Figure, the recording material 12 is removed from the drum 13, and is expanded vertically. The position of the recording head 11 is designated by a reference numeral 11a. In this embodiment, the recording head 11 moves to the right (sub-scan direction) when the drum 13 rotates (main scan direction). The movement speed is such that the recording head 11 moves to the right by the distance corresponding to 16 pixels when the drum 1 rotates one full turn. In other words, the continuous motion is used such that the recording head 11 is at a position 1b at the start of the second rotation of the drum 13 and at a position 1c at the start of the third rotation. As a result, the recording operation is effected along a helical line on the drum. Similarly to the first and second embodiment, any one pixel is recorded by plural different nozzles. The image formation process is shown in Figure 7. Various images have been recorded, and it has been confirmed that the images are substantially free from stripe and unevenness.

In this embodiment, the image is slightly oblique, but the inclination is 16 (pixels)/image size, and therefore, when, for example, the image size is 200 mm, the inclination is as small as 0.3 degrees which is not noticeable by human eyes. If the recording material 12 is inclined in the opposite direction when it is mounted on the drum 13, the deviation is compensated for, and therefore, the image is free from inclination.

Embodiment 4

The same recording apparatus and recording head 1 as in Embodiment 1 (Figure 1) was used, but the recording method was different. The number of toner gradation levels was 17 in this embodiment.

Figure 8 shows the image formation process in this embodiment.

In operation for recording on the recording material 2, the carriage 4 is moved (main scan) using nozzles Nos. 113 - 128 (16 nozzles). Each of the nozzles ejects 0, 1 or 2 ink droplets per pixel in accordance with the image density (Figure 8, portion (a)). Then, the recording medium 2 is fed upwardly (sub-scan) through a distance corresponding to 16 pixels. Subsequently, the recording operation is carried out using nozzles Nos. 97 - 128. At this time, the nozzles Nos. 97 - 112 effect additional recording on the pixels 1 - 16 which have been subjected to the recording operation by the nozzles 113 - 128 during the previous scan, whereas the nozzles Nos. 113 - 128 effect recording on the new pixels 17 - 32 (Figure 8, portion (b)). Therefore, each of the pixels 1 - 16 is recorded by 0 - 4 droplets of the ink.

Then, the recording material 2 is fed upwardly through the distance of 16 pixels, and the recording operation is carried out using the nozzles Nos. 81 - 128 (Figure 8, portion (c)). By repeating this printing operation, each of the pixels 1 - 16 is recorded by 0 - 16 droplets of the ink after completion of the eighth scan. Thus, 17 tone gradation record is provided. The same operation is repeated from the ninth scan so as to provide the 17 tone level image is provided on the entire surface.

Various images have been recorded through this recording method, and it has been confirmed that the sharp and uniform images can be provided without stripe.

In this embodiment, the selectable number of ink droplets is 3 (0, 1, 2) per picture element during one scan, but it may be larger.

Embodiment 5

In this embodiment, only the recording head 11 is different from Embodiment 3 apparatus. The number of toner gradations is 4. The recording head 11 has 129 nozzles and ejects large volume droplets.

Figure 9 illustrates the image formation process of this embodiment. In this embodiment, the movement speed of the drum 13 (main scan) is such that the recording head 11 moves rightwardly (sub-scan) through the distance corresponding to 43 pixels per one full turn of the drum 1. As a result, similarly to Embodiment 3, the image is recorded along a helical line on the drum 13. The same pixel is recorded by different 3 nozzles.

Various images have been recorded, and it has been confirmed that sharp images can be provided without stripe and unevenness.

In this embodiment, the image is oblique as in Embodiment 3. However, the inclination is 43 pixels/image size, and therefore, the inclination is not noticeable with human eyes. However, if the recording material 12 is mounted on the drum 13 with the opposite inclination, so that the image is without the inclination.

Figure 10 summarizes the above-described embodiments. Here, n is the number of nozzles, s is the number of nozzles corresponding to the feed distance in the sub-scan direction; k is the maximum number of the ink droplets per pixel and per scan; g is the number of capable tone gradations or levels; and $m = n/s$ . In the foregoing embodiments, $m \geqq 3$, and therefore one pixel is recorded by m main scans and by different m nozzles. When, therefore, the variation of the ink droplet volumes among the nozzles is in the form of the normal distribution with a standard deviation $\sigma$, for example, the variation of the ink volumes for the respective picture elements each recorded by different m nozzles

is reduced to σ/√m . The ink volume variation among the pixels, is recognized as the variation in the image density, but the image density variation is not necessarily required to be 0 for the purpose of clear image. Rather, it will suffice if it is small enough. Accordingly, as compared with the conventional apparatus, the clearer images can be provided with a simple structure. As for the value of m, it is desirably large in order to reduce the variations among the picture elements. If it is not less than 3 (m ≧ 3), very clear record of the pixel can be provided. The inventors' investigations have revealed that the image is sufficiently clearer when m = 2 than the conventional record.

Embodiment 6

In this embodiment, the same apparatus as in Embodiment 1 was used. A different recording method is used to provide 17 tone gradation recording. Here, the maximum number of ink droplets per pixel and per scan (k) is 4, and the number of scans required for forming one pixel is 4 (Figure 10).

In this embodiment, when the maximum ink droplet number (k) per pixel and per scan is not less than 2, the ink droplet ejections are uniformly allotted to the individual nozzles so as to avoid concentration of ejecting actions on limited number of working nozzles.

In operation, the recording operation is carried out using nozzles Nos. 97 - 128 (s = 32) out of 128 nozzles (n = 128) in the first scan, while the carriage 4 is moved at a speed of 31.75 mm/sec in the main scan direction. During the recording, A1 (number) droplets (Kx, y/n/s: decimal fraction is rounded up to an integer) are ejected at a pixel (x, y) on the recording material 2 in accordance with the tone level information Kx,y (0 - 16) given for each pixels. Thereafter, the tone level information Kx,y is replaced by K1x,y (K1x,y = Kx,y-A1 ). Assuming that the tone level information Kx,y is 13, A1 is 4, and K1x,y is 9.

In the second scan, the recording sheet 2 is fed in the upward direction by a distance corresponding to s nozzles (sub-scan direction). Then, the recording operation is carried out using 2 x s nozzles, i.e., nozzles Nos. 65 - 128, while the carriage 4 is moved at the speed of 31.75 mm. At this time, the nozzles Nos. 97 - 128 effect the similar recording operation in accordance with new tone level information Kx,y, whereas the s nozzles Nos. 65 - 96 ejects A2 ink droplets (K1x,y/(n/s-1 ), the decimal fraction is rounded up to an integer. At the pixel position (x, y) on the recording material 2 in accordance with the tone level information K1x,y produced after the first scan. Then, the tone level information K1x,y is replaced with K2x,y (K2x,y = K1x,y = A2 . In the same example, A1 is 4, K2x,y is 5.

In the third scan, the recording material is fed up through a distance corresponding to s nozzles. The recording operation is carried out using 3 x s nozzles, i.e., the nozzles Nos. 33 - 128, while the carriage is moved at a speed of 31.75 mm. During this operation, the nozzles Nos. 97 - 128 effects the similar recording operation in accordance with new tone level information Kx,y. The s nozzles, that is, the nozzles Nos. 65 - 96 effects the similar recording operation in accordance with the tone level information K1x,y produced after the previous main scan. The s nozzles Nos. 33 - 64 eject A3 ink droplets (K2x,y/(n/s-2 ), the decimal fraction is rounded up to an integer) at the pixel position (x, y) on the recording material. Then, the tone level information K2x,y is replaced with K3x,y (K3x,y = K2x,y - A3) . In the same example, A3 is 4, K3x,y is 1.

Before the fourth scan, the recording material 2 is fed up through a distance of s nozzles. Then, the recording operation is carried out using all the nozzles, i.e., the nozzles Nos. 1 - 128, while the carriage 4 is moved at the speed of 31.75 mm/sec. During the recording, the nozzles Nos. 97 - 128 effect the similar recording operation in accordance with new tone level information Kx,y. The s nozzles, i.e., the nozzles Nos. 65 - 96 effect the similar recording in accordance with the tone level information K1x,y produced after the previous main scan. The s nozzles Nos. 33 - 64 effect the similar recording operation in accordance with the tone level information K2x,y produced after the previous scan. The s nozzles Nos. 1 - 32 eject A4 ink droplets (K3x,y/(n/s-3) = K3x,y ) on the pixel (x, y) on the recording material in accordance with the tone level information K3x,y produced after the previous main scan. The operations in the fourth scan are sequentially repeated to effect the recording on the entire surface of the recording material 2. As a result, a pixel at a position (x, y) on the recording material 2 has received Kx,y (number) ink droplets, the number being equal to the tone level information Kx,y.

A pixel having the tone level information Kx,y which is not less than 2 in the image, is recorded by not less than 2 nozzles (the maximum number is n/s, here it is 4), and therefore, the variation in the ink volumes from the nozzles is reduced, so that the unevenness stripes is not recognized or less conspicuous.

Figure 11 shows the number of ink droplets A1 - A4 ejected in a scan in response to 0 - 16 tone level information K.

Referring to Figure 12, the description will be made as to the structure of the control system usable with the present invention. The image information supplied from a host computer 101 is once stored in a frame memory 103 by a main controller 102. The main controller 102 processes the image information to convert it to tone gradation or level signals suitable for the system (recording apparatus) used therewith. For example, the image information having 0 - 255 levels is converted to 17 tone signals (0 - 16) in the foregoing Embodiment 1. The tone signal is supplied to a driver controller 104 which divide the tone signal into plural scans, and the divided signals are supplied to the head driver 105 as the recording signals. The head driver 105 drives the recording head 106 in accordance with the supplied recording signal, thus ejecting droplets of the ink. Motor drivers 107 and 108 are effective to control a carriage moving motor 109 and a sheet feeding motor 110.

Embodiment 7

In this embodiment, the same apparatus of Embodiment 1 is used except for the recording head. In this embodiment, the recording is effected with 7 tone gradations. The recording head 1 has 129 nozzles which are capable of ejecting the droplets at the frequency of 12 kHz, in other words, the heater driving frequency is 12 kHz. The carriage 4 is moved at a speed of 0.25 m/sec. The recording material 2 is fed up by 268.75 microns which corresponds to 43 nozzles, after each scan.

The 7 tone gradation recording using the apparatus of this embodiment will be described. The number of ink droplets per pixel (square of 1/16 mm x 1/16 mm (62.5 x 62.5 microns)) is changed within the range of 0 - 6 inclusive.

Figures 13 and 14 illustrate the recording method in this embodiment. The recording head 1 which is schematically shown in provided with 129 nozzles arranged in the vertical direction. For the convenience of explanation, the nozzles are numbered 1, 2, ..., 128 and 129 from the top of the Figure.

In operation, the recording operation is carried out using only the nozzles Nos. 87 - 129, while the carriage is moved in the main scan direction. At this time, in this embodiment, 3, at the maximum, ink droplets can be ejected per pixel because of the relation among the size of the pixel (62.5 microns), the carriage movement speed (0.25 m/sec) and the nozzle actuating frequency (12 kHz), as will be understood from the following equation. However, the recording operation is carried out using only two droplets.

[time required for the carriage to gass one pixel] = [size of pixel]/[carriage speed]

[maximum number of droplets in one pixel] = [carriage passing time] x [ejection frequency]

As a result, as shown in Figure 14, at portion (a), the pixels 1 - 43 from the top of the recording material is recorded by 0 - 2 droplets of the ink. then, the recording material is fed up in the sub-scan direction through a distance corresponding to 43 pixels (in the Figure, the recording head is shown as being moved down, for the simplicity of explanation). Then, the recording operation is carried out using the nozzles Nos. 44 - 129. As a result, as shown in Figure 14 at portion (b), the nozzles Nos. 44 - 86 record the 1 - 43 pixels having been recorded by the nozzles Nos. 87 - 129 in the previous scan. The nozzles Nos. 87 - 129 carry out the recording operation for the fresh pixel (44 - 86). Therefore, each of the pixels 1 - 43 are now recorded by 0 - 4 droplets of the ink.

Then, the recording material is refed up through the distance of 43 pixels. The recording operation is carried out using the nozzles Nos. 1 - 129. Thereafter, the recording material is fed up through the distance of 48 pixels. As shown in Figure 14 at portions (c) and (d), the recording operation is repeated using all the nozzles Nos. 1 - 129. Then, the pixel 1, for example, receives 0 - 6 droplets of the ink supplied from 3 nozzles, i.e., the nozzles Nos. 1, 44 and 87 (the order of the ejecting operation is opposite), so that 7 tone gradation record is provided. Each of all the other pixels has uniform volume of ink droplets, and therefore, the image has less conspicuous unevenness.

If there is a failed nozzle, that is, a nozzle incapable of ejecting the ink droplet, in this embodiment, for example, the nozzle No. 44 is failed, then the pixel to receive 2 droplets (at the maximum) from the nozzles Nos. 1, 44 and 87, is recorded by ejecting 3 ink droplets (at the maximum) from the remaining two nozzles, i.e., the nozzles Nos. 1 and 87. If the existence of the failed nozzle is known during the recording apparatus manufacturing process, the information to that event is stored in the memory (ROM or RAM) in the recording apparatus, and the controller properly selects the ejecting nozzles. If one or more nozzles become failed during use of the apparatus after the manufacturing thereof, a service man or user can write the information in the RAM of the recording apparatus, so that the other working nozzles can compensate for the failed nozzle or nozzles.

Embodiment 8

In this embodiment, the recording head has 288 nozzles which are operable at the ejecting frequency of 4 kHz, and the carriage moving distance per scan is 4500 microns (72 nozzles). The number of recordable tone gradations per pixel is 4. In the other respects, the apparatus is the same as in Embodiment 7.

Figure 15 illustrates concept of the recording method of this embodiment. In this embodiment, the number of droplets per pixel and per scan is 0 - 1, and one pixel is recorded by 4 scans, and therefore, the maximum number of droplets capable of being supplied to one pixel 4 as a total. On the other hand, the number of ink droplets to be supplied to one pixel is 0 - 3, and therefore, when all of the nozzles are in order, 3 scanning operations are enough. One or more nozzles can fail. If this occurs, during 3 scans other than the scan using the nozzle, the other 3 nozzles are used, so that the resultant image is free from stripes.

For example, pixel 1 is to be recorded by 0 - 3 ink droplets ejected through 4 nozzles, i.e., the nozzles Nos. 1, 73, 145 and 217 (the order of ejecting operation is the opposite). If the nozzle No. 73 fails, the pixel is recorded by 3 (at the maximum) ink droplets through the nozzles Nos. 1, 145 and 217. Similarly to the foregoing embodiment, if the existence of the non-ejecting nozzle is known during the recording apparatus manufacturing process, the information to that event may be stored in memory of the recording apparatus (ROM or RAM), and the nozzles are properly selected through the control system.

Embodiment 9

In this embodiment, the recording head has 36 nozzles which are capable of being operated at frequency of 4 kHz. The carriage feeding distance per scan is 687.5 microns (11 nozzles). The number of tone gradations per pixel is 4. In the other respects, the apparatus of this embodiment is the same as Embodiment 7.

Figure 16 illustrates the conception of the recording method of this embodiment. In this embodiment, the carriage feeding distance per scan in the unit of nozzle number is not a reciprocal of an integer multiplied by the number of the nozzles of the head. Therefore, the number of scans for recording one pixel is either 3 or 4. In this embodiment, the number of ink droplets capable of being ejected per pixel per scan is 0 - 1, and therefore, the number of droplets capable of being ejected to one pixel is 3 at the maximum (Figure 16, at portion A) or 4 (Figure 16 at portion A).

Since the number of droplets to be supplied to one pixel is 0 - 3, the portion A has a margin of one drop. Therefore, as regards the nozzles Nos. 1, 2, 3, 12, 13, 14, 23, 24, 25, 34, 35 and 36, even if they fail, the other nozzles can compensate for them similarly to Embodiments 7 and 8, so that the resultant image is free from stripes.

Figure 17 is a block diagram of an ink jet recording apparatus usable with the present invention. It comprises a host computer 201 for supplying the image data to be recorded, a memory (RAM) 202 storing the data concerning the failed nozzles, a controller processor 203 for determining the number of ink droplets to be ejected in accordance with the image data and for selecting the nozzles to be actuated in accordance with the failed nozzle data in the RAM 202. Designated by a reference numeral 204 is an ink jet recording head.

Embodiment 10

In this embodiment, the operational frequency of each of the nozzles is made more uniform. In this embodiment, the ejection or non-ejection of the ink f (m, n) is determined in accordance with the density or tone gradation for each pixel, as shown in Figure 18.

In Figure 18, the n-th ink droplet is the droplet ejected through 16 nozzles for the same pixel. When the first pixel in Figure 3 is noted, for example (Figure 3), No. 121 nozzle ejects the first ink. No. 113 nozzle ejects the second ink droplet; No. 105 nozzle, the third droplet; No. No. 97 nozzle, the fourth droplet; No. 89 nozzle, the fifth droplet; No. 81 nozzle, the sixth droplet; No. 73 nozzle, the seventh droplet; No. 65 nozzle, the eighth droplet; No. 57 nozzle, the ninth droplet; No. 49 nozzle, the tenth droplet; No. 41 nozzle, the eleventh droplet; No. 33 nozzle, the twelfth droplet; No. 25 nozzle, the thirteenth droplet; No. 17 nozzle, the fourteenth droplet; No. 9 nozzle, the fifteenth droplet; and No. 1 nozzle, the sixteenth droplet.

In Figure 18, the ink droplet is ejected when f (m, n) = 1, while the ink droplet is not ejected when f (m, n) = 0. Therefore, when the tone m = 1, for example, the first ink droplet is ejected, but when the tone m = 2, the first ink droplet is not ejected (the nozzle is not used for the recording), the desired image density is provided by the second and third ink droplets.

Therefore, the following represent the nozzle actuation frequency:

$$\sum_{m=0}^{N} f(m,n)$$

At the bottom of Figure 18 represents the operational frequency of the nozzle.

By determining the ejection and non-ejection of the nozzles f (m, n), no particular order of ink droplets is frequently used, and therefore, the frequent drivings of particular nozzle or nozzles can be avoided, as long as the image to be recorded includes one or more particular tone levels.

In the example of Figure 18,

$$\sum_{m=0}^{N} f(m,n)$$

is 8 or 9. In this embodiment, the maximum number of droplets N is 16, and therefore:

$$\sum_{m=0}^{N} f(m,n) \leq (N/2) + 1$$

This inequation accomplishes most uniform operation of the nozzles when the tone levels appear uniformly.
If the following inequation is satisfied, it is sufficiently effective to extend the service life of the frequently used nozzle or nozzles.

Embodiment 11

In this embodiment, the used apparatus is the same as in Embodiment 2 of Figure 4 except that the recording head has 256 nozzles and that the tone gradation number per pixel is 5.
First, the recording head 11 is moved to the leftmost position in Figure 4, and the recording operation is carried out using only nozzles Nos. 193 - 256 (64 nozzles), while the drum 13 is rotated through one full turn.
Then, the recording head 11 is moved to the right through a distance corresponding to 64 pixels. Then, the recording operation is carried out using 128 nozzles, i.e., the nozzles Nos. 129 - 256, while the drum is rotated through one full turn. In this manner, the recording head is moved to the right through the distance corresponding to 64 pixels, while the drum 13 is rotated one turn. This is repeated, so that the whole surface is recorded.
As a result, the first pixel, for example, is recorded by nozzles Nos. 1, 65, 129 and 193 (4 nozzles). Therefore, 5 tone gradation recording is accomplished with 0 - 4 ink droplets.
In this embodiment, the ejection and non-ejection of the nozzle f (m, n) is determined in accordance with the tone or density level of a pixel, as shown in Figure 19. In this embodiment,

$$\sum_{m=0}^{N} f(m,n) \leq (N/2) + 1$$

is satisfied, too. Here, the image density (OD) for each of the tone levels was as shown in Figure 20.
In the practical full-color image recording, the use of 5 tone levels is not enough, and therefore, it will be preferable to use also the known tone processing method such as dither method or error diffusing method or the like.
In the combination with the known method, one droplet per pixel or zero droplet per pixel where the image density OD is not more than 0.55, and therefore, the operational frequency of the nozzle corresponding to the tone level 1 tends to increase in order to decrease the operational frequency of the nozzle corresponding to the tone level m = 1 (the nozzle corresponding to the first ink droplet in this case) in view of the above,

$$\sum_{m=0}^{N} f(m,n)$$

at n = 1 is set to be 2 which is lower than the average.
Thus, the tendency of significant increase of the operational frequency for 1 droplet per pixel, is particularly significant when the maximum number of ink droplet n is not more than 10.

Embodiment 12

In this embodiment, the use is made with the recording head which is the same as in Embodiment 4, and the operational frequencies of the nozzles are made more uniform.

The ejection or non-ejection of the ink may be determined in accordance with the tone level for each of picture elements in the same manner as in Embodiment 10. Since, however, the first and second ink droplets, the third and fourth ink droplets, and the fifteenth and sixteenth ink droplets, are ejected through the same nozzles, respectively, the uniformization between the ink droplets ejected through the same nozzle.

It is preferable that one pixel is recorded by as large number of different nozzles as possible from the standpoint of less unevenness. In view of this, the ejection and non-ejection is determined as shown in Figure 21.

In Figure 21, the values given in "SUM" are sums of

$$\sum_{m=0}^{N} f(m,n)$$

With respect to the liquid droplets ejected from the same nozzle. By determining the ejection and non-ejection in accordance with Figure 21, the nozzles can be operated at more even frequencies.

The timing of one droplet ejection for the case of one droplet per pixel, is determined so that the ink is ejected at the earlier timing for all cases. Therefore, even if the density or tone levels are different in the adjacent pixels, two droplets are not ejected continuously except for the high density cases ($m \leqq 8$), and therefore, the ejections are stabilized. This is effective to improve the uniformity. The structure of the control system is the same as in Figure 12.

As described in the foregoing, according to Embodiments 10 - 12, the nozzles are operated at more even frequencies. Thus, the reduction of the recording head service life attributable to the particular nozzle or nozzles operated at higher frequencies, can be avoided.

Embodiment 13

Figure 22 is a block diagram of a control system for an ink jet recording apparatus according to Embodiment 13. It comprises a host computer 201 for supplying the image data to be recorded, a memory (RAM) 202 for storing ejection nozzle data corresponding to the number of ink ejections, a processor controller 203. A recording head 204 has 128 nozzles arranged at the density of 16 nozzles/mm. A memory (ROM) 205 stores the ejection volume data for each nozzle.

Using this apparatus, one pixel is recorded by 4 scans, wherein the number of droplets per pixel ranges between 0 - 4, inclusive so that 5 tone gradation image can be recorded. In Figures 23 and 24, the recording method is illustrated. In this Figure, the 128 nozzles are arranged vertically. For the convenience of explanation, the nozzle is numbered 1, 2, ..., 128 from the top.

The volume of the liquid droplet ejected by each nozzle is determined through a known method. The data are stored in the ROM. In this embodiment, the volume is determined in the following manner. The ejected in the droplet is photograghed using optical microscope and TV camera, and the volume is calculated on the basis of the image thereof.

In operation, the recording operation is carried out using only nozzles Nos. 97 - 128, while the carriage is moved at a speed of 31.75 mm/sec in the main scan direction. Then, pixels 1 - 32 from the top of the recording material is recorded by 0 or 1 ink droplet, as shown in Figure 24 at portion (a). Then, the recording material is fed upwardly (sub-scan direction) through a distance corresponding to 32 pixels (in the Figure, the recording head is moved downwardly relative to the recording material, for the convenience of explanation). Then, the recording operation is carried out using the nozzles numbers 65 - 96. As shown in Figure 24, portion (b), the nozzles Nos. 65 - 96 effect further recording on the-pixels 1 - 32 having been subjected to the recording operation of the nozzles Nos. 97 - 128 in the previous scan. The nozzles Nos. 97 - 128 effect the recording for the new 33 - 64 pixels. Therefore, the pixels 1 - 32 are recorded by 0 - 2 droplets per pixel.

Subsequently, the recording material is fed upwardly through a distance corresponding to 32 pixels, and the recording operation is carried out using nozzles Nos. 33 - 128 (Figure 24, portion (c)). Further, the sheet is fed upwardly through the same distance, and the recording operation is carried out using all of the nozzles, i.e., Nos. 1 - 128 (Figure 24, portion (d)). The above operations are repeated to cover the entire surface. Then, the first pixel, for example, is recorded by the ink droplets ejected through 4 nozzles, i.e., nozzles Nos. 1, 33, 65 and 97 (the order of ejections is the opposite).

The number of ink droplets to be shot to one pixel is determined on the basis of the image data. In this embodiment, the number is 0, 1, 2, 3 and 4 (5 kinds) since 5 tone gradation recording is effected. Which nozzles are to be used for ejecting the number of droplets, is determined by the processor using the data stored in the ROM, so that as much different nozzle combination as possible is used and so that the sum of the ink volumes through the used nozzles is as close as possible to the average of the ejection volume of the entire recording head.

Assuming, for example, that the ejection volumes of nozzles Nos. 1, 33, 65 and 97 are 8 pl, 10 pl, 10 pl and 12 pl and that the average ejection volume of 128 nozzles of the recording head is 10 pl. When the number of droplets to be shot is 1, No. 33 or No. 65 nozzle is used. When it is 2, No. 1 nozzle and No. 97 nozzle, or No. 33 nozzle and No. 65 nozzle, are used. When it is 3, No. 1 nozzle, No. 33 nozzle and No. 97 nozzle, or No. 1 nozzle, No. 65 nozzle and No. 93 nozzles, are used. If it is 4, all of these nozzles, i.e., 4 nozzles are used.

The above calculations are effected for all pixels, and the recording operation is carried out while determining the nozzles to be used.

Figure 25 is a flow chart of the operations for the above. In Figure 25, when the recording operation starts, the image data for 32 lines is received by the host computer 11 at step S1. At step S2, the number of ink droplets (m) to be shot to one pixel is determined from the image data. Here, m is 0 - 4. At step S3, if m = 4, the operation proceeds to step S4 where 4 nozzles are selected. On the other hand, if m ≤ 3 at step S3, the operation proceeds to step S5 where the ejection volume data is read out of the ROM 15. At step S6, average ejection volume x m = V is calculated. At step S7, the total ejection volume is calculated as the combination of the nozzles to be used, as shown in Figure 26. On the basis of the calculation, the combination closest to V is selected. The result of selection is written in the RAM 12 at step S8.

The operations in steps S2 - S8 are repeated until all of the pixels in 32 lines are finished (step S9). All the pixels are dealt with, the ink droplets are ejected at step S10, referring to the RAM 12, thus effecting record. The operations in steps S1 - S10 are repeated until all the lines are covered (step S11).

The recording operations have been carried out through the recording method, and it has been confirmed that the variation in the ink volumes from the nozzles are compensated for all tone levels, and that the stripes and unevenness are less conspicuous.

In this embodiment, the ejection volume data of the nozzles are stored in the ROM, and the nozzles to be used are determined by the processor. However, the relations between the image signals and the nozzles to be used are determined beforehand, and the results are stored in a ROM. In this embodiment, the number of ink droplets ejected for one pixel from one nozzle per scan is either 0 or 1, but plural number may be used.

Embodiment 14

Figure 27 is a block diagram of a control system of an ink jet recording apparatus of Embodiment 14. It comprises a host computer 201 for supplying the image data to be recorded, a memory (RAM) for storing the density or tone level data for the respective nozzles and a controller and processor 203. Designated by a reference numeral 204 is an ink jet recording head having 128 nozzles arranged at the density of 16 nozzles/mm.

Using all the nozzles to be used, the gray scales corresponding to various signal levels are recorded. The gray scales are read by a known density measuring device. Thus, the density-signal data are determined for the nozzles. This is stored in the RAM 202. When the recording operation is carried out for the recording medium, the operations are the same as Embodiment 13, but the nozzles to be used are determined, referring to the density data stored in the RAM 202.

In this embodiment, the density data is stored in the RAM 202, and therefore, even if the density data for the nozzles changes for some reason or another after the recording apparatus is sold, it is possible for the user or the service man to change the data in the RAM 202. Even if one or more nozzles failed, the data in the RAM 202 may be changed so as to use another working nozzle in place of the failed nozzle, thus expanding the service life of the recording head.

Embodiment 15

Figure 28 is a block diagram of a control system for an ink jet recording apparatus according to Embodiment 15. It comprises a host computer 201 for supplying the image data to be recorded, a memory (RAM) 202 for storing density level data for each nozzles and a processor and controller 203. Designated by a reference numeral 204 is an ink jet recording head having 128 nozzles at the density of 16 nozzles/mm. The control system also comprises a CCD scanner.

In this embodiment, the gray scales corresponding to various signal levels are recorded using all nozzles to be used. Then, the gray scales are read by the CCD scanner 206 to determine density-signal data for respective nozzles. The data are stored in the RAM 202. The recording operation is carried out in the similar manner as in Embodiment 13, but the nozzles to be used are selected, referring to the density data stored in the RAM 202. In this embodiment, the apparatus has a built-in data reading device (CCD scanner). Therefore, even if the density data for the nozzles change for one reason or another after the apparatus is sold, the user can easily correct the data, and therefore, the maintenance is easier.

In this embodiment, the record density of the nozzles are determined on the basis of OD level when one nozzle is operated, or the ejection volume which is substantially one-to-one correspondence with the OD level. However, the ejection speed or the like which is closely related with the ejection volume.

According to Embodiments 13 - 15, the density variation among the picture elements can be minimized, and therefore, the clear images can be provided with simple system structure as compared with the conventional apparatus.

Embodiment 16

Figure 29 shows the OD level when the recording liquid shown in Figure 30 is shot on a coated sheet. THe used multi-nozzle recording head has 48 nozzles arranged at a nozzle pitch of 63.5 microns. The ejection liquid volume per nozzle is 0.008 nl. The pixel pitch in the main scan direction is 63.5 microns which is equal to the nozzle pitch. In Figure 29, designated by 31 is the OD levels when the recording liquid is ejected in one scan, where as reference numeral 32 designate the OD levels when the recording liquid is shot by plural scans. In the latter case, the recording liquid is shot at the same position, but in the former case, the centers of the dots are deviated with the increase of the number of dots (multi-droplet recording). This is the cause of the difference of the curves. As will be understood from this Figure, the OD level becomes different by 0.2 at the maximum although the total volume of the shot liquid is the same.

The present invention positively uses this, namely when one recording liquid is used, the reflection density (OD) of the dot provided by one scan is different from the reflection density of the dot provided by plural scans, even if the total amount per unit area is the same. The apparatus of this embodiment is the same as the apparatus in Embodiment 1 except for the number of nozzles is 12. The structure of the control system is the same as shown in Figure 12.

The description will be made as to the method of 5 tone gradation record.

Figure 31 shows the concept of the recording method of this embodiment. The recording head 1 has 12 nozzles arranged vertically. For the convenience of explanation, the nozzles are numbered 1, 2, ..., 12 from the top.

In operation, the recording operation is carried out using only nozzles Nos. 7 - 12, while the carriage is moved in the main scan direction. As a result, as show in Figure 31 at portion (a), pixels 1 - 6 from the top on the recording material are recorded by 0, 1 or 2 ink droplets. Then, the recording material is fed upwardly (sub-scan direction) through a distance corresponding to 6 pixels (in the Figure, the recording head is shown as moving downwardly, for the convenience of explanation). Then, the recording operation is carried out using nozzles Nos. 1 - 12. As a result, as shown in Figure 31 at portion (b), the nozzles Nos. 1 - 6 effect the recording with 0 or 1 droplet on pixels 1 - 6 which have been subjected to the recording operation of the nozzles Nos. 7 - 12 in the previous scan. The nozzles Nos. 7 - 12 record new pixels 7 - 12 with 0, 1 or 2 droplets. Therefore, the pixels 1 - 6 are recorded by 0 - 3 droplets per pixel.

The sheet is fed upwardly through a distance of 6 pixels, and the recording operation is carried out using the nozzles Nos. 1 - 12. As shown in Figure 31 at portion (c), the repetition of the above-described operations produces the record on the whole surface with 0 - 3 droplets.

Figure 32 illustrates the recording operation in more detail. In this embodiment, one pixel is recorded by 3 droplets at the maximum. Conventionally, the multi-droplet tone recording using 3 droplets at the maximum per one pixel can produce 4 tone levels, but in the present embodiment, 5 tone levels can be provided.

Portion (a) of Figure 32 shows the recorded image according to this embodiment. ○ or ◎ indicates the droplet or droplets. The used multi-nozzle head had 12 nozzles each capable of 0.031 nl per ejection. The recording density is 16 pixels per 1 mm. The image was provided by two scans (p) and (c).

Dots 14, 15, 16 and 17 are provided by 1 droplet, 2 droplets, 2 droplets and 3 droplets per pixel, respectively. The image density increases in the order named. Reference numerals 14′, 15′, 16′ and 17′ indicate pixels for the dots 14, 15, 16 and 17, respectively. The pixel 14′ is recorded by one droplet only through the first scan. The pixel 15′ is recorded by one droplet in the first scan and one droplet in the second scan, in which the droplets are shot at the same point in the pixel. The pixel 16′ is recorded by two droplets in the first scan, and therefore, the shot position of the droplets are deviated by a distance determined from the scanning speed and the ejection frequency. The pixel 17′ is recorded by the same droplets as in the pixel 16′ plus one droplet in the second scan (3 droplets in total), in which the third droplets provided by the second scan is deviated to the right from the second droplets in the first scan. The droplet ejection timing is controlled so that the three droplets are disposed at the regular intervals. The density in this pixel is the same as a pixel shot by one scan at the regular intervals.

The pixels 15′ and 16′ are each recorded by two droplets per pixel. However, the dot record 16 of the pixel 16′ has a higher image density than the dot record 15 of the pixel 15′. For this reason, 5 tone gradations (including no ejection) can be provided. In this embodiment, similarly to the case of Figure 29, the coated sheet and water ink is used.

The reason why the dot 16 has a higher density than the dot image 15 is the same as with Figure 29. Figure 33 shows the results of image density measurements. In this Figure, reference numerals 24, 25, 26 and 27 indicate the image densities of the dots 14, 15, 16 and 17 of Figure 32. In Figure 33, "△" is the image densities when plural droplets are shot with 20 microns deviation for one pixel; "○" indicates the image densities when the droplets are shot at the same position for one pixel. The image densities 25 and 26 (OD levels) are different by approximately 0.2 due to the difference of the shot positions despite they are provided by 2 droplets per pixel. As will be understood, this embodiment positively uses the difference.

According to this embodiment, the number of tone gradations is increased in effect by 1 without changing the recording head structure. The better quality images can be provided. When the image having the image density of approximately 1.0 OD, the two droplet ejection per one pixel can be selected from 15 and 16 levels in Figure 32 in accordance with the image signal, and therefore, the halftone level can be expressed more finely.

In this embodiment, the two scanning operations are carried out with the deviation of the distance corresponding to 6 nozzles in the sub-scan direction. However, it is possible to effect the recording without deviation in the sub-scan direction between the two scans. In this case, the image processing software is simplified.

<u>Embodiment 17</u>

Figure 17 illustrates Embodiment 17, in which the use is made with a recording head having 15 nozzles each capable of ejecting 0.023 nl recording liquid per ejection. The Figure shows schematically the recorded image, in which "○" indicates a dot provided by one droplet; "◎" indicates a dot provided by two droplets shot on the same point; and "◉" indicates a dot provided by three droplets shot at the same point. The partly overlapped "⚭" indicates a dot or one pixel provided by plural droplets through one scan. The used recording liquid and the sheet are the same as in the previous embodiment. The recording density is the same, that is, 16 pixels/mm in this embodiment, 4 droplets per pixel per scan at the maximum is capable. One pixel is scanned three times, and 8 tone gradations are possible.

In Figure 34, reference numerals 41 - 47 indicate recorded patterns for the respective tone levels. Reference numerals 41' - 47' indicate single pixels in the respective patterns. Reference numerals 41, 43, 44, 46 and 47 are dot images recorded by one scan. The number of droplets per pixel is 1, 2, 2, 3 and 4, respectively. Reference numeral 42 indicates a dot image recorded by 2 scans. Reference numeral 45 designates a dot image provided by 3 scans. Reference numerals 43 and 44 indicate dot images provided by two droplets per pixel, and the dot 43 is recorded by the first and second shots among the four shots, and the latter is recorded by the first and third shots. In the pixel 43′, the two dot are partly overlaid, but in the pixel 44′, the two dots are separate from each other.

Figure 35 shows the OD levels for the respective patterns of Figure 34. In this Figure, reference numerals 51 - 57 indicate the density of the dots 41 - 47. As described with respect to the foregoing embodiment, the image density decreases with the degree of overlapping of the dots if the number of droplets per pixel is the same. Therefore,

the density 52 of the dot 42 < the density 53 of the dot 43 < the density 54 of dot 44.

Similarly,

the density 55 of the dot 45 < the density 56 of the dot 46.

In both of the droplets 43 and 44, the number of droplets $m_1$ through the first scan is 2, the number of droplets through second or third scan is 0 ($m_2 = m_3 = 0$). However, in this embodiment, the timings of the two droplet shots for one pixel in one scan, are selected in accordance with the image signal. In this Example, the time interval between the two droplets is changed. This embodiment is the same as the previous embodiment in that whether the same number of droplets is shot in one scan or in plural scans, is determined in accordance with the image signal.

Similarly to Embodiment 16, the recording head or the sheet is moved in the sub-scan direction by the distance corresponding to 5 nozzles, for each scanning operation. Thus, one pixel is scanned three times. By doing so, the variation in the ink volumes of the nozzles is flatten, and therefore the image involves less conspicuous stripes and unevenness.

The three scans may be carried out without deviation the recording head in the sub-scan direction. In this case, the image processing software is simplified.

In accordance with Embodiments 16 and 17, a larger number of tone gradations can be provided even if the total number of droplets for one pixel is the same. This is because the number of droplets per scan is changed so that the shot positions of the droplets are changed.

<u>Embodiment 18</u>

The apparatus of this embodiment is the same as Embodiment 1 (Figure 1) except for that the recording head has groups of nozzles, which groups provide different ink ejection volumes. Figure 36 schematically shows the structure of the recording head in this embodiment. For the sake of simplicity of explanation, the recording head comprises three groups of ejection outlets 301, 302 and 303, each group having four successive ejection outlets. Each of the ejection outlets in the first group 301 are designed to eject 5 pl in the volume (ejection outlets Nos. 1 - 4). Each of the ejection outlets in the second group 302 is designed to eject a droplet of 8 pl (ejection outlet Nos. 5 - 8). Each of the ejection outlets in the third group 303 is designed to eject a droplet of 11 pl (ejection outlet Nos. 9 - 12). The ejection outlet groups 301 - 303 are arranged vertically in the Figure, in other words, the groups are arranged along one line in the sub-scan direction which is substantially perpendicular to the main scan direction along which the recording head is moved.

The recording head 1 comprises base members 62 and 63, and the ejection outlets are opened at the surface of the base plate 62 faced to the recording material 2. In order to produce the recording head 1 at low cost, the conventional manufacturing process can be used substantially as it is. However, in order to permit the use, the volume ratio between the maximum ink droplet and the minimum ink droplet is desirably not more than 3.0. The maximum ink droplet in this embodiment is 11 pl, and the minimum ink droplet is 5 pl. The volume ratio is 2.2, and therefore, the above-described desirable condition is satisfied, so that the recording head can be produced at relatively low cost.

Figure 37 shows the printing operation. The large outer square frame defines the entire record area of the recording material 2 to be covered by plural scans of the carriage 4. Five recording region (A, B, C, D and E) correspond to the ejection outlet grooves ejecting different volumes of droplet (3 volumes). The width of each of the regions measured in the vertical direction corresponds to the distance of one feed of the recording material 11. In the first scan, ink droplets of 5 pl is ejected using the ejection outlets Nos. 1 - 4 (301) to the top region A in accordance with the tone level of the image data (tone data), thus effecting dot-printing. Subsequently, the recording material 2 is fed upwardly in the Figure by 63.5 microns (ejection outlet pitch) x 4 (the number of ejection outlets) = 254 microns. Thereafter, the second scan is started.

In the second scan, the ejection outlets Nos. 1 - 4 (group 301) now at the region B eject ink droplets of each 5 pl in accordance with the tone of the image data as in the first scan, thus effecting the dot printing. Simultaneously, the ejection outlets Nos. 5 - 8 (group 302) now at the region A eject the droplets of the ink on the region A having been scanned by the first scan, in accordance with the tone of the image data. The ejection outlets here each eject 8 pl of the ink. In this recording, the droplet of 8 pl is not shot at the position where the 5 pl ink droplet is not shot in the first scan. After the second scan is completed, the recording material 2 is fed by the same distance, 245 microns, in the upward direction. Thereafter, the third scanning operation is started.

In the third scan, the ejection outlets Nos. 1 - 4 (301) now in the third region C and ejection outlets Nos. 5 - 8 (302) now in the region B eject the ink droplets to effect the similar printing as in the second scan. Simultaneously, the ejection outlets Nos. 9 - 12 (303) now in the region A eject 11 pl ink droplets in accordance with the image data. Similarly, the 11 pl ink droplets are not shot to the positions where the 5 pl and 8 pl droplets are not shot in the first and second scans.

When the third scan is completed, the region C includes two states having 0 pl ink droplet (no ink) per pixel and having 5 pl ink droplet per pixel, respectively. The region B includes three states having 0 pl droplet, 5 pl droplets and 13 pl droplets (=5 pl + 8 pl). The region A includes four states having 0 pl droplet, 5 pl droplets, 13 pl droplets (= 5 pl + 8 pl) and 24 pl (= 5 pl + 8 pl + 11 pl) per pixel, respectively.

Similarly a fourth scan and fifth scan are carried out so that dots are printed on the recording material 11 in accordance with the tone levels of the image data. When the record in the region A expands all over the record area of the recording material 2, and the ejection outlets Nos. 8 - 12 of the recording head (103) reaches the region E, and the printing operation is carried out. Then, the recording operation is completed.

In this embodiment, the same volume ejection outlets constitute a block, and a plurality of such blocks are provided. However, it is a possible alternative that the ejection outlets providing different volumes of ink droplets may be alternately arranged, with the same advantageous recording effect.

Figure 37 shows a relation between the reflection image density and the ink volume per pixel of the recorded image on the recording material 2 as described in conjunction with Figure 37. In the embodiment of Figures 36 and 37, level 0 (no ink) provides the reflection density of 0.05 (the reflection density of the recording sheet 2 itself); the first level (I) of 5 pl provides 0.47; the second level (II) of 13 pl provides 1.02; and the third level (III) of 24 pl provides 1.38.

As will be understood, as compared with the method proposed in U.S. Patent No. 4,746,935, the intervals between adjacent reflection densities are more even, and therefore, the tone property is better. The reflection density at the first level (I) is 0.47 which is equivalent to the reflection density provided by 5 ink droplets (maximum) per pixel in the conventional multi-droplet method, when the maximum levels of the reflection densities in the images are the same. Accordingly, the density levels of the image formed through this embodiment is comparable to the image provided by 5 ink droplet per pixel through the conventional multi-droplet method. As regards the printing speed, this embodiment requires only three overlaying shots per pixel, and the printing speed can be increased by approx. 20 %.

The image data (tone level data) in this embodiment are produced by logarithmic correction $\gamma$ correction and subsequent 4 level error diffusion treatment to the data read from an original image by a monochromatic scanner, for example.

Embodiment 19

Figure 39 shows the structure of the recording head 1 in Embodiment 19. In this embodiment, the ejection outlets are divided into two groups 311 and 312. The ejection outlets of the group 311 provides 5 pl ink droplets, and the ejection outlets of the group 312 provides 14 pl ink droplets. The number of ejection outlets in the group 311 providing 5 pl ink droplets is 8; and the number of ejection outlets in the group 312 providing 14 pl ink droplets, is 4. Similarly to the Embodiment 18 in Figure 36, the recording head 1 is mounted on a carriage 4 of the serial type printer. The scanning operation is carried out as shown in Figure 37, and the halftone image is recorded on the recording material 2 corresponding to the image data.

Referring to Figure 37, the operation of this embodiment will be described. In the first scan, only the ejection outlets Nos. 4 - 8 (311) are used to eject the ink droplets of 5 pl each to the pixels which are to receive 24 pl/pixel ink and 10 pl/pixel ink in the region A, and simultaneously, the 5 pl droplets are ejected to approx. 50 % of the pixels which are to receive 5 pl/pixel. Then, the recording material is fed upwardly by 254 microns in Figure 37. Then, the second scan is started.

In the second scan, the ejection outlets Nos. 1 - 4 (311) in the region B eject the ink droplets as in the first scan. Simultaneously, the ejection outlets Nos. 5 - 8 (311) now in the region A eject the ink droplets to the pixels which are to receive 5 pl/pixel droplet and which have not receive the droplet from the ejection outlets Nos. 1 - 4 in the first scan. In addition, the ejection outlets Nos. 5 - 8 eject 5 pl ink droplets to the pixels which are to receive 24 pl/pixel ink and 10 pl/pixel ink. Subsequently, the recording material 2 is fed upwardly by a distance of 254 microns in Figure 37. Then, the third scan is started.

In the third scan, the ejection outlets Nos. 1 - 4 and ejection outlets Nos. 5 - 8 now in the regions C and B, respectively eject the ink droplet of 5 pl as in the second scan. Simultaneously, the ejection outlets Nos. 9 - 12 (312) now in the region A eject the ink droplets of 14 pl to only such pixels as are to receive 24 pl/pixel ink.

When the third scan is completed, the recording operation is completed in the region A by four volumes of ink droplets, namely 0 pl (no ink), 5 pl, 10 pl and 24 pl droplets. In the region B at this time, 0 pl, 5 pl and 10 pl ink droplets are overlaid per pixel, and in the region C, 0 pl and 5 pl droplets are overlaid per pixel.

In the fourth and fifth scans, the similar printing operations are carried out. When the record state of the region A expands all over the record area, the printing operation is completed. In this embodiment, the ink volumes per pixel is 0 pl, 5 pl, 10 pl and 24 pl, and therefore, substantially the same print quality as in Embodiment 1 can be provided, as will be understood from Figure 38.

Particularly in this embodiment, the pixels which are to receive 5 pl ink per pixel receives the ink selectively (at random, for example) from first group (ejection outlets Nos. 1 - 4) and second group (ejection outlets Nos. 5 - 8). This is done in order to reduce the density variation in the direction of the array of the ejection outlets attributable to the manufacturing variation of the recording head. A pixel which is to receive 5 pl/pixel ink is recorded with the ink ejected through a single ejection outlet per pixel. Therefore, if all of 5 pl/pixel pixels are printed by first ink droplets only, the non-uniformity may be conspicuous depending on the nature of the image. In this embodiment, the 5 pl/pixel pixels are recorded by both of the first and second ink droplets to flatten the variation. Therefore, according to this embodiment, the tone record is good without density unevenness.

In both of the Embodiments 18 and 19, a group of ejection outlets providing smaller volumes, is disposed at a lower position, and therefore, when a large volume droplet and a small volume droplet are overlaid with each other, the small volume droplet is first shot. However, the order of record is not limited to this. The opposite arrangement having the large volume ejection outlets are disposed at the lower position, is possible.

In Embodiments 18 and 19, the ejection outlets are arranged in the direction of sub-scan, and one pixel is recorded by overlaying ink droplets from ejection outlets in the different groups providing different volumes of droplet, and therefore, the number of scans for recording one pixel is reduced. The image quality in the high density region and the high light region can be increased substantially without reduction of the recording speed.

In the foregoing embodiment, the volume ratio of the ejected ink droplets are so selected that the tone levels of the pixels overlayingly recorded are different at regular intervals. The large volume ink droplet is always overlaid on the small volume droplet, and therefore, the volume ratio between the maximum droplet and the minimum droplet can be made smaller, and the number of combinations of the different ink droplets is reduced substantially to one half. This makes easier the image signal processing for the selection of the ejection outlets. As a result, the halftone image can be produced relatively at low cost and without increase of the manufacturing cost of the main assembly and the recording head of the apparatus.

In this embodiment, the ejection outlets providing the minimum volume ink droplets may be grouped into plural groups (two, in this embodiment), a pixel to receive one droplet of the minimum volume is recorded selectively by one group is ejection outlet or another, for example, alternately for the adjacent pixels. By doing so, the density variation along the line of the ejection outlets due to the manufacturing variation or the like, can be flattened.

The volume of the ink droplet used in the low density region can be made smaller than the average of n ink volume ejected through n different ejection outlets. Therefore, the high density tone level or levels which are less influential to the tone reproduction can be omitted, and the number of tone levels in the low image density portion which are more important in the tone reproduction can be properly selected. Therefore, the good image can be provided at low cost even if the number of tone levels per pixel is small.

Embodiment 20

The apparatus of this embodiment is the same as with Embodiment 1 except for the recording head has 42 nozzles. The 4 tone gradation recording will be described using the apparatus of this embodiment. One pixel is recorded selectively by 0 - 3 ink droplets.

Figure 40 illustrates the concept of the recording method in this embodiment. The recording head 1 schematically shown, has 42 nozzles arranged vertically in the Figure. For the convenience of explanation, the nozzles are numbered 1, 2, 3, ..., 42, from the top. The 42 nozzles are grouped into 14 blocks each having 3 nozzles. The blocks are named A, B, ..., N. The nozzles in each block are designated by a - c. h this embodiment, the nozzles a in all of the blocks eject the droplet for a pixel where the image datum is not lower than 1; the nozzles b eject the droplets for a pixel where the image datum is not lower than 2; and the nozzles c eject the droplets where the image datum is at level 3. The recording operation is carried out using only nozzles Nos. 3 - 42 while the carriage is being moved (A in Figure 40). As a result, pixels 1 - 40 from the top of the recording sheet (sub-scan direction) are recorded by 0 or 1 ink droplet.

Then, the recording sheet is fed upwardly by a distance corresponding to one pixel (in the Figure the recording head is shown as being moved relative to the sheet, for the easy understanding, in addition, it is shown by the position deviated in the main scan direction). Then, the recording operation is effected using nozzles Nos. 2 - 42 (B in Figure 40). As a result, the nozzles Nos. 2 - 41, effect the recording for the pixels 1 - 40. The nozzle No. 42 (nozzle c) effects the recording for the pixels at the position of pixel 41. Subsequently, the recording sheet is further fed upwardly by the distance corresponding to one pixel, and the recording operation is carried out using the nozzles Nos. 1 - 42 (C in Figure 40), the nozzle No. 41 (nozzle b) effects the recording for the pixel at the position 41, and the nozzle No. 42 (nozzle c) effects the recording at the position 42. As a result, the nozzles Nos. 1 - 40 record the pixels 1 - 40 having been subjected to the previous and further previous recording operations, thus the image is produced by 0 - 3 dots. For example, the pixel at position 40 is recorded by No. 42 nozzle (nozzle c), No. 41 nozzle (nozzle b) and No. 40 nozzle (nozzle a) in the order named.

Then, the recording sheet is fed upwardly through a distance corresponding to 40 pixels, and the recording operation is carried out by the nozzles Nos. 1 - 42 (Figure 3, D, the No. 1 nozzle (nozzle a) effects the recording for the position 41, and No. 2 nozzle (nozzle b) effects the recording for a position 42). Subsequently, the recording sheet is fed upwardly through a distance corresponding to one pixel (Figure 40, E), and the recording operation is carried out using the nozzles Nos. 2 - 42. Further, the recording sheet is fed upwardly through a distance corresponding to one pixel, and the recording operation is carried out using the nozzles Nos. 1 - 42. Then, the recording sheet is fed upwardly through a distance corresponding to 40 pixels, and the similar operations are repeated. By repeating such operations, all of the pixels are recorded by nozzles c, b and a, and the image is formed over the entire surface by 4 tone levels.

At the bottom of the image, the nozzles Nos. 42, No. 41, No. 40, ... are sequentially stopped for each scanning operation.

Noting particular pixels, the first pixel (position 1) is recorded by the nozzles Nos. 1, 2 and 3; the second pixel is recorded by the nozzles Nos. 2, 3 and 4. In this manner, each pixel is recorded by successive different 3 nozzles, and therefore, the variation in the ink volumes of the nozzles is flattened in the image. As shown in Figure 40, the pixels at positions 2, 3 and 4, is recorded only by the nozzle No. 4 as regards the image data 1. Therefore, even if No. 5 nozzle ejection is oblique, it is not influential to the resultant image. As regards image datas 2 and 3, if the nozzle No. 5 ejection is deviated, the deviation is influential to the pixels at 3, 4 and 5 in the main scan direction. However, whenever the nozzle No. 5 is used, the No. 4 nozzle is also used, and the influence is reduced as a result.

Various images have been formed through the recording method, and it has been confirmed that clear images without stripes and unevenness can be provided as compared with the conventional recording method in which one pixel is recorded by plural ink droplets ejected by the same nozzle.

Embodiment 21

Figure 41 shows Embodiment 21. The recording head 1 of this embodiment is similar to that of Embodiment 20 in that it comprises 42 ink ejection outlets at the density of 16 nozzles/mm. However, No. 4 nozzle ejects the ink in a deviated direction. In such a case, the nozzle allotment a, b and c in each of the blocks is changed to b, c and a. Then, the nozzles a deal with the image data having a level not lower than 2; the nozzles b deal with the image data having the level 3; and the nozzles c deal with the image data having a level not lower than 1. The feeding in the sub-scan direction is the same as in Embodiment 1. In this embodiment, the stripes appearing in the image at the boundary between block A recording and block B recording, are removed, and a good image was produced.

Embodiment 22

In this embodiment, the recording head 1 is provided with 128 nozzles, and 17 tone gradation recording is effected. That is, the number of droplets per pixel ranges between 0 - 16, inclusive.

Figure 42 illustrates the concept of the recording method of Embodiment 22. The schematically shown recording head 1 has 128 nozzles arranged vertically in the Figure. For the convenience of explanation, the nozzles are numbers 1, 2, 3, ..., 128 from the top.

In operation, the recording operation is carried out using only the nozzles NO. 123 - 128 (6 nozzles) while the carriage is being moved. As a result, the pixels at positions 1 - 6 from the top are recorded by 0 or 1 ink droplet.

Subsequently, the sheet is fed upwardly by a distance corresponding to 10 pixels (in the Figure, the recording head is shown as being moved downwardly relative to the recording sheet, for the convenience of illustration). Then, the recording operation is carried out using the nozzles Nos. 113 - 128. In this operation, the nozzles Nos. 113 - 120 effect the recording for the pixels at positions 1 - 6 having been subjected to the recording operation of the nozzles Nos. 123 - 128 in the previous scan. The nozzles Nos. 119 - 128 effect the recording at new positions 7 - 16. Therefore, the pixels 1 - 6 are recorded by 0, 1 or 2 ink droplets per pixel.

Thereafter, the recording sheet is fed upwardly through a distance corresponding to 6 pixels. Then, the recording operation is carried out using the nozzles Nos. 107 - 128. By repeating such recording operations, the pixels at positions 1 - 8 are recorded by 0 - 16 droplets, when the 16th record is completed, so that an image having 17 tone gradations or levels can be provided. The same operations are repeated for 17th and subsequent scans, the 17 tone level image can be provided all over the surface. At the bottom of the image, the 6 nozzles and 10 nozzles from the bottom are stopped successively after scan.

Noting the pixel at position 1, for example, the pixel is recorded by ink droplets ejected through 16 different nozzles, namely nozzles Nos. 1, 11, 17, 27, 33, 43, 49, 59, 65, 75, 81, 91, 97, 107, 113 and 123 (the order of the recording actions is the opposite). Therefore, the ink volume variation among the nozzles is flattened on the image, and therefore, the resultant image has less conspicuous stripes and unevenness.

Using the above recording method, various images have been recorded, and it has been confirmed that the images are clear without stripe and unevenness, as compared with the conventional recording method in which a pixel is recorded by plural ink droplets ejected through the same nozzle.

Embodiment 23

Figure 43 shows Embodiment 23. The apparatus comprises a recording head 1 having 512 ink ejection outlets arranged at the density of 16 nozzles/mm. The feed amount in the sub-scan direction corresponds to 64 pixels, 48 pixels or 16 pixels. The feeding of these amounts are repeated to effect 13 tone gradation recording.

Embodiment 24

Figure 44 shows Embodiment 24. The apparatus of this embodiment has a recording head 1 provided with 48 ink ejection outlets arranged at the density of 16 nozzles/mm. 4 tone gradation recording is effected using this head. The recording head 1 is provided with 48 nozzles arranged in the vertical direction on the Figure. For the convenience of explanation, the nozzles are numbered 1, 2, 3, ..., 48 from the top.

The first recording operation is carried out using only the nozzles Nos. 21 - 48, while the carriage is moved in the main scan direction (A in the Figure). At this time, the pixels at positions 1 - 20 (nozzles Nos. 21 - 40) from the top of the recording sheet, namely the positions where x = 2 (x: number of overlaid droplets) are recorded by 2/pixel droplets (maximum), whereas pixels 20 - 28 from the top of the recording sheet (nozzle Nos. 41 - 48), namely the positions where the number of overlaid droplets is 3, is recorded by 1/pixel droplet (maximum).

Subsequently, the recording sheet is fed upwardly through a distance corresponding to 20 pixels (in the Figure, the recording head is shown as being downwardly relative to the recording sheet, for the convenience of illustration). Then, the recording operation is carried out using all of the nozzles (B). At this time, the nozzles Nos. 1 - 28 eject the ink droplet 1/pixel (maximum). The nozzles Nos. 29 - 40 ejects 2/pixel droplets (maximum). In the rest of the portion (nozzles Nos. 41 - 48) is recorded by 1/pixel droplet (maximum).

The recording sheet is fed upwardly again through a distance corresponding to 20 pixels. The nozzles Nos. 1 - 28 eject the droplets at 1 droplet/pixel at the maximum; and the nozzles Nos. 29 - 40 eject 2 droplets/pixel; and the nozzles Nos. 41 - 48 eject 1 droplet/pixel (C).

The operations (upward feeding of the recording sheet through the distance of 20 pixels, 1/pixel recording by nozzles Nos. 1 - 28 and 41 - 48, and 2/pixel recording by nozzles Nos. 29 - 40) are repeated. As a result, each of the pixels is recorded by 0, 1, 2 or 3 ink droplets, and therefore, 4 tone gradation image can be provided. At the bottom of the image, the nozzles Nos. 1 - 20 effect the recording at 1 droplet/pixel at the maximum.

In brief, the maximum number of droplets per pixel is 3, the pixel which is to receive two overlaid droplets receives 0 - 2 droplets during the first scan and receives 0 - 1 droplets in the second scan. The pixel which is to receive three overlaid droplets receives 0 - 1 ink droplets in each scan.

Using the recording method of this embodiment, various images have been formed, and it has been confirmed that the clear images can be provided without stripes and unevenness as compared with the conventional recording method in which plural ink droplets are ejected through 1 nozzle/pixel.

An additional advantage is that it is not required to the sub-scan feed distance is not necessarily constant, and therefore, it is not influenced by the number of nozzles or the nozzle pitch or the like.

Embodiment 25

Figure 45 shows the structure of the apparatus of Embodiment 25. It comprises an ink jet recording head 7 for selectively ejecting black (Bk), cyan (C), magenta (M) and yellow (Y) ink droplets. The recording head includes a black head unit 71Bk, cyan head unit 71C, magenta head unit 71M and yellow head unit 71Y. The recording head 71 is mounted on a carriage 74, and is reciprocable in the main scan directions along guide rails 75A and 75B by a carriage feeding motor (Figure 47) which will be described hereinafter. Through ink ejection outlets or nozzles (Figure 46), black, cyan, magenta or yellow ink droplets are selectively ejected to the recording material (a sheet of paper) 72, so that an image is formed on the recording material 72 in accordance with the input signal. The recording material 72 is wrapped on a platen roller 73, which is rotated by a sheet feeding motor (Figure 47), so that it is fed in the sub-scan direction crossing with the main scan direction at a predetermined pitch.

As show in Figure 46, the recording head 71 comprises black, cyan, magenta and yellow head units 71Bk, 71C, 71M and 71Y. In each of the head units, 1 - N nozzles 76 are arranged in the sub-scan direction from the carriage 74 side at a predetermined regular intervals $p_0$. In the Figure, "Bi" indicates i-th nozzle for the black color. Similarly, "Ci", "Mi" and "Yi" indicates the i-th nozzles for the cyan color, the magenta color and the yellow color, respectively.

Figure 47 shows the control circuit for the apparatus of this embodiment. It corresponds to Figure 12. In Figure 47, the recording head 406 includes four color head units 406Y, 406M, 406C and 406BK. Correspondingly, the driver controller 404 and the head driver 405 are provided for the four colors. In this embodiment, high quality color images can be recorded.

Figures 48 and 49, similarly to Embodiment 20 in conjunction with Figure 40, illustrate the head 71 drive timing and picture element recording process through the multi-scan system in which four droplets are overlaid substantially at the same position at the maximum. The multi-scan system is such that a plurality of droplets are shot substantially at the same position to provide one pixel having a tone gradation. However, depending on the level of the tone gradation, one pixel is provided by one droplet.

When a nozzle Bi scans (scan 1) a selected position 503 on the recording material 72, an ejection signal P41 is selectively applied to the ejection means in the nozzle Bi (heat generating element, for example) so that the liquid droplet Di is ejected through the nozzle Bi (Figure 49 at portion (a)). After the scan 1 operation, the recording material is fed by one pitch $p_0$ which is the same as the nozzle interval in the sub-scan direction. Subsequently, the nozzle Bi+1 scans the scanning line along which the liquid droplet Di has been ejected (scan 2), during which the nozzle Bi+1 ejects the liquid droplet Di+1 by application of a selective ejection signal P42 so as to overlay the droplet Di+1 on the pixel 504 already having the droplet Di on the recording material 72 (Figure 49 at portion (b)). After the second scan, the recording material 72 is fed in the sub-scan direction at the pitch $p_0$ equal to the nozzle interval. Then, the nozzle Bi+2 scans the scanning line along which the liquid droplets Di have been ejected (scan 3), during which an ejection signals P43 is selectively applied to eject the liquid droplet Di+2 through the nozzle Bi+2 (Figure 49 at portion (c)). Similarly, the recording material 72 is fed through the pitch $p_0$. Then, during the scanning by the nozzle Bi+3 (scan 4), an ejection signal P44 is applied so that the liquid droplet Di+3 is ejected through the nozzle Bi+3 (Figure 49 at portion (d)). Thus, the recording of the pixel 505 is completed (Figure 49 at portion (e)).

After the completion of scan 4, the recording material 72 is fed through the distance (N-3) x $p_0$ (N: the umber of nozzles). Then, the pixel formation is started by the liquid droplet through the nozzle Bi. In the above process, the size of the dot in the pixel on the recording material (size of the recorded dot of the ink) can be changed by application or non-application of the ejection signal P41, P42, P43 and P44, so that plural tone gradations can be expressed.

Figures 50 and 51 show a comparison example in which the drive timing and the image forming process are illustrated when the black and cyan pixels are formed adjacent to each other by 3 droplets respectively on the recording material 72 using the same timing as in Figure 48. In scan 1, the black liquid droplet is ejected through nozzle Bi in response to ejection signal P61, so that a pixel 711 is recorded. After elapse of predetermined time period tc, a cyan liquid droplet is ejected through a nozzle Ci in response to an ejection signal P64 so that a pixel 721 is recorded adjacent to the pixel 711. Similarly, in scan 2, the ejection signals P62 and P65 are applied, and the liquid droplets ejected through nozzles Bi+1 and Ci+2 are overlaid on the pixels 711 and 721. At this time, each of the black and cyan droplets on the recording material 72 have such sizes out of contact from each other, and therefore, the black pixel and cyan pixel are formed without color mixture. When, however, the ejected droplets are deposited by ejection signals P63 and P66 in the scan 3, the black color and the cyan color inks which have not yet completed the seeping become in contact with each other as a result of expansions of the dots, so that partly mixed pixel 721 results. This occurs in the wide part of the image.

Figures 52 and 53 show the drive timing and the image formation process when the black and cyan pixels are formed by respectively three droplets on the recording material 72 through the multi-scan recording method of this embodiment. In this embodiment, both of the black and cyan droplets are not ejected in the scan 3, but only the black droplet is ejected in response to ejection signal P83 (Figure 52) and is overlaid on the pixel 912 recorded by the first and second scan to provide a pixel 913 (Figure 53). At this time, the cyan color does not expand on the recording material 72, and therefore, the ink is not mixed. Subsequently, in the scan 4, the cyan droplet is ejected by the application of the ejection signal P86 in the scan 4 (Figure 52). At this time, the cyan dot at the pixel 923 expands to such an extent that it becomes in contact with the black dot at the pixel 913 (Figure 53). However, the black ink on the pixel 913 ejected in the scan 3, has already been sufficiently seeped into the recording material, and therefore, the mixture as shown in Figure 51 does not occur. Through the above process, the recording of the adjacent pixels 913 and 912 is completed. Thus, the color mixture can be reduced, and therefore, the image quality is improved.

In this embodiment, it is a possible alternative that the cyan droplet is ejected in the scan 3, and the black droplet is ejected in the scan 4. It is also a possible alternative that the scan in which the different color ink ejections are prevented from being carried out simultaneously, is not limited to the scans 3 and 4, but may be applied to the other scan or scans. Generally, the color mixture tends to occur with increase of the number of liquid droplet shots for the same pixel, and therefore, it is preferable that the scan in which the different color ink droplets are not simultaneously ejected, is applied to the latter part of the scans for the same pixel recording.

When adjacent black and cyan color pixels are recorded by four droplets, respectively on the recording material 72 through the multi-scan recording method, it is possible that a fifth scan may be added without feeding the recording material 72 in addition to the scans of Figure 52. By doing so, the expansion timing of the different color ink dots which are adjacent on the recording material 72 may be deviated, thus reducing the color mixture.

Embodiment 26

Figure 54 shows the drive timing according to Embodiment 26. In this embodiment, a black dot by three droplets and a yellow dot by four droplets are formed at adjacent pixels on the recording material 72. In this embodiment, in the scans 1, 2 and 3, the ejecting means in the black nozzles Bi, Bi+1 and Bi+2 are supplied with ejection signals P101, P102 and P103, respectively, by which the nozzles eject the black liquid droplet to record the black pixel. The yellow pixel is recorded in the different manner. In scans 1 and 2, the ejection means in the yellow nozzles Yi and Yi+1 are supplied with ejection signals P104 and P105, by which the liquid droplets are ejected through the nozzles to record the yellow pixel. At this stage, because of the balance of the size of the dots of these colors, the black dot and the yellow dot are not merged or mixed, as shown in Figure 53. In the scan 3, the droplets to be overlaid on the yellow pixel by the ejection signals P104 and P105 are not ejected, and therefore, the yellow dot does not expand.

Subsequently, the ejection means in the yellow nozzle Yi+3 is supplied with ejection signals P106 and P107 in the scan 4, continuously but with a time interval Tb not resulting the conspicuous image disturbance. By doing so, two yellow liquid droplets are continuously ejected through the nozzle Yi+3, and they are overlaid on the pixel recorded in response to the ejection signals P104 and P105. By the shots of the two droplets, the yellow pixel is recorded by 4 droplets. At this time, the yellow pixel expands to such an extent as to be in contact with the adjacent black dot. However, the black ink seeps into the recording material or it is fixed before the scan 4, and therefore, they are not mixed on the recording material 72. Therefore, the mixture shown in Figure 51 can be avoided.

From the standpoint of stabilized ejection, it is preferable that the record interval tb between the ejection signals P106 and P107 is preferably not less than refilling time of the nozzle Yi+3 and sufficiently shorter than the recording head movement period between adjacent yellow pixels to be recorded by the nozzle Yi+3 in the scanning direction. The configuration of the ejection signals continuously applied to the ejection means in the same nozzle in a single scan for recording one pixel, the number of the groups, the profile of the ejection signal, the applicating timing or the like are properly determined by one skilled in the art in consideration of the ink seeping properly, ink fixing property, the nature of the image, the ejection property of the recording head or the like.

For example, where a black dot with four droplets and a yellow dot with four droplets are formed at adjacent pixels, the ejection signals are applied in the scans 1 and 2 to eject four black droplets in total, and thereafter, in the scans 3 and 4, four yellow droplets in total are ejected onto the recording material.

Embodiment 27

Figures 55 and 58 show the drive timing and the image forming process in Embodiment 27. In this embodiment, three yellow droplets dot is formed adjacent, in the sub-scan direction, to a black pixel at which three black droplets are already received but do not seep into the recording material at high speed. The recording method is multi-scan type.

In this embodiment, the yellow droplet ejection timing only is modified when the yellow pixel is recorded after the scanning operation for the black recording for the pixel 1211 is completed and after the sheet is fed by (N-3) x $p_0$ is carried out. More particularly, the liquid droplet is not ejected through the nozzle Yi in the scan 1. Next, in the scans 2, 3 and 4, the ejection means in the nozzles Yi+1, Yi+2 and Yi+3 are supplied with ejection signals P1101, P1102 and P1103, so that a pixel 1223 is recorded by yellow liquid. In this manner, the yellow dot recording and expansion thereof at a pixel adjacent to the black pixel 1211 is deviated in the timing to permit or promote the fixing of the black dot in the pixel 1211, and therefore, the color mixture can be effectively prevented.

In the Embodiments 25 - 27, the combination of the colors, and the scanning numbers of the like are not limiting. Also, the direction of the recording material feed is not limiting. The recording method of these embodiments may be used selectively only when the color mixture occurs due to the liquid overlaying nature of color inks at one pixel. According to these embodiments, the desired effects can be obtained without particular limitation to the pattern of the pixels on the recording material. In the foregoing descriptions of the embodiments, the adjacent pixels are to be formed one ink color, respectively, but the present invention is effective when at least one of the pixels is to be recorded by plural color inks (mixture of color).

In Embodiments 25 - 27, one pixel is recorded by plural scans and plural droplets using a recording head having plural nozzles. In this case, the method comprises a first scanning step in which the liquid droplets are ejected selectively through the ejection outlets and a second scanning step in which the liquid is not ejected through the ejection outlets, in which when different color pixels are adjacent to each other on the recording material, the first scanning step is executed after the second scanning step at the time of at least one of the two color dots. Therefore, after the liquid is sufficiently seeped in the recording material or fixed on the recording material, the liquid droplet is deposited on the adjacent pixel, so that the color mixture can be prevented, and the good color images can be provided.

The present invention is particularly suitably usable in an ink jet recording head and recording apparatus wherein thermal energy by an electrothermal transducer, laser beam or the like is used to cause a change of state of the ink to eject or discharge the ink. This is because the high density of the picture elements and the high resolution of the recording are possible.

The typical structure and the operational principle are preferably the ones disclosed in U.S. Patent Nos. 4,723,129 and 4,740,796. The principle and structure are applicable to a so-called on-demand type recording system and a continuous type recording system. Particularly, however, it is suitable for the on-demand type because the principle is such that at least one driving signal is applied to an electrothermal transducer disposed on a liquid (ink) retaining sheet or liquid passage, the driving signal being enough to provide such a quick temperature rise beyond a departure from nucleation boiling point, by which the thermal energy is provided by the electrothermal transducer to produce film boiling on the heating portion of the recording head, whereby a bubble can be formed in the liquid (ink) corresponding to each of the driving signals. By the production, development and contraction of the the bubble, the liquid (ink) is ejected through an ejection outlet to produce at least one droplet. The driving signal is preferably in the form of a pulse, because the development and contraction of the bubble can be effected instantaneously, and therefore, the liquid (ink) is ejected with quick response. The driving signal in the form of the pulse is preferably such as disclosed in U.S. Patents Nos. 4,463,359 and 4,345,262. In addition, the temperature increasing rate of the heating surface is preferably such as disclosed in U.S. Patent No. 4,313,124.

The structure of the recording head may be as shown in U.S. Patent Nos. 4,558,333 and 4,459,600 wherein the heating portion is disposed at a bent portion, as well as the structure of the combination of the ejection outlet, liquid passage and the electrothermal transducer as disclosed in the above-mentioned patents. In addition, the present invention is applicable to the structure disclosed in Japanese Laid-Open Patent Application No. 123670/1984 wherein a common slit is used as the ejection outlet for plural electrothermal transducers, and to the structure disclosed in Japanese Laid-Open Patent Application No. 138461/1984 wherein an opening for absorbing pressure wave of the thermal energy is formed corresponding to the ejecting portion. This is because the present invention is effective to perform the recording operation with certainty and at high efficiency irrespective of the type of the recording head.

The present invention is effectively applicable to a so-called full-line type recording head having a length corresponding to the maximum recording width. Such a recording head may comprise a single recording head and plural recording head combined to cover the maximum width.

In addition, the present invention is applicable to a serial type recording head wherein the recording head is fixed on the main assembly, to a replaceable chip type recording head which is connected electrically with the main apparatus and can be supplied with the ink when it is mounted in the main assembly, or to a cartridge type recording head having an integral ink container.

The provisions of the recovery means and/or the auxiliary means for the preliminary operation are preferable, because they can further stabilize the effects of the present invention. As for such means, there are capping means for the recording head, cleaning means therefor, pressing or sucking means, preliminary heating means which may be the electrothermal transducer, an additional heating element or a combination thereof. Also, means for effecting preliminary ejection (not for the recording operation) can stabilize the recording operation.

As regards the variation of the recording head mountable, it may be a single corresponding to a single color ink, or may be plural corresponding to the plurality of ink materials having different recording color or density. The present invention is effectively applicable to an apparatus having at least one of a monochromatic mode mainly with black, a multi-color mode with different color ink materials and/or a full-color mode using the mixture of the colors, which may be an integrally formed recording unit or a combination of plural recording heads.

Furthermore, in the foregoing embodiment, the ink has been liquid. It may be, however, an ink material which is solidified below the room temperature but liquefied at the room temperature. Since the ink is controlled within the temperature not lower than 30°C and not higher than 70°C to stabilize the viscosity of the ink to provide the stabilized ejection in usual recording apparatus of this type, the ink may be such that it is liquid within the temperature range when the recording signal is the present invention is applicable to other types of ink. In one of them, the temperature rise due to the thermal energy is positively prevented by consuming it for the state change of the ink from the solid state to the liquid state. Another ink material is solidified when it is left, to prevent the evaporation of the ink. In either of the cases, the application of the recording signal producing thermal energy, the ink is liquefied, and the liquefied ink may be ejected. Another ink material may start to be solidified at the time when it reaches the recording material. The present invention is also applicable to such an ink material as is liquefied by the application of the thermal energy. Such an ink material may be retained as a liquid or solid material in through holes or recesses formed in a porous sheet as disclosed in Japanese Laid-Open Patent Application No. 56847/1979 and Japanese Laid-Open Patent Application No. 71260/1985. The sheet is faced to the electrothermal transducers. The most effective one for the ink materials described above is the film boiling system.

The ink jet recording apparatus may be used as an output terminal of an information processing apparatus such as computer or the like, as a copying apparatus combined with an image reader or the like, or as a facsimile machine having information sending and receiving functions.

The present invention is not limited to the thermal type ink jet system but is applicable to the other type system such as piezoelectric ink jet system.

The recording material is not limited to the paper but is applicable to cloth such as the one for necktie.

While the invention has been described with reference to the structures disclosed herein, it is not confined to the details set forth and this application is intended to cover such modifications or changes as may come within the scope of the following claims.

## Claims

1. A process for producing a recorded product by forming image pixels on a recording medium using an ink jet recording head (1) having an array of ink jet nozzles for ejecting ink droplets each comprising substantially the same amount of ink onto the recording medium (12), which method comprises:

   performing recording by driving the recording head (1) to cause ink to be ejected from at least some of the ink jet nozzles onto the recording medium (2) in a plurality of recording steps;
   effecting relative movement between the recording medium (2) and the recording head (1) in the direction of the extent of the nozzle array over a distance less than the extent of the nozzle array between recording steps; and
   controlling the recording steps in accordance with image data signals to cause an image pixel of one color and of one tone or density level to be formed on the recording medium by ink ejected from one nozzle and to cause an image pixel of said one color but of a tone or density level different from the one tone or density level to be formed on the recording medium by a combination of ink ejected from different nozzles during the recording steps.

2. A process according to claim 1, which comprises controlling the recording head (1) to cause each ink jet nozzle to eject from 0 to k ink droplets for an image pixel during a recording step and effecting relative movement between the recording medium (2) and the recording head (1) by a distance equal to the separation s/p of nozzles of the array so that $n/(s/p) \geqq 2$ where n is the number of nozzles in the array and $n/(s/p) \times k = g-1$ where g is the number of tone or density levels of the image being recorded with $k \geq 1$ and $g \geq 3$.

**3.** A process according to claim 1, which comprises:

enabling g-1 droplets to be discharged by m different nozzles by changing the relative position between the nozzles and the recording medium by a distance s(μm) in the direction of the nozzle arrangement for each recording step, where m is given by n/(s/p) rounded down to the nearest integer and p is a pitch of the nozzles; and

when a pixel is recorded with $t(t \leqq g-1)$ droplets in accordance with tone level information for the pixel, recording the pixel using m different nozzles, if t≧m and recording the pixel using t different nozzles, if t<m.

**4.** A process according to claim 1, which comprises controlling the recording head (1) to cause each ink jet nozzle to eject from 0 to k ink droplets for an image pixel during a recording step and effecting relative movement between the recording medium (2) and the recording head (1) by a distance equal to the separation s/p of nozzles of the array so that $n/(s/p) \geqq 2$ where n is the number of nozzles in the array and $n/(s/p) \times k > g-1$ where g is the number of tone or density levels of the image being recorded with k ≥ 1 and g ≥ 3.

**5.** A process according to claim 4, which comprises controlling the recording head so that among n/(s/p) nozzles scanning one pixel, at least one of them does not discharge liquid.

**6.** A process according to any one of the preceding claims, which comprises controlling operation of the recording head (1) so that the frequency of use of the ejection nozzles during recording of an image is approximately uniform across the array.

**7.** A process according to claim 1, which comprises controlling operation of the recording head (1) so that when N, at maximum, nozzles are operated to discharge the droplets, it is predetermined whether M-th(M=1-N) droplet is to be discharged to maintain the frequency of operation of the nozzles below a predetermined level.

**8.** A process according to claim 1, which comprises controlling the recording head (1) so that

$$\sum_{G=1}^{N+1} f(G,M) \leq N-1$$

are satisfied, where G is the tone level of a pixel, $1 \leqq G \leqq N+1$ , f(G,M)=1 when the M-th droplet is discharged, and f(G,M)=0 when the M-th droplet is not discharged.

**9.** A process according to claim 8, which comprises controlling the recording head (1) so that the following is satisfied:

$$\sum_{G=1}^{N+1} f(G,M) \leq (N/2)+1$$

**10.** A process according to claim 1, which comprises recording a pixel by plural droplets discharged through different nozzles in plural scans, and selecting the nozzles used to discharge the droplets in the scans in accordance with record densities of the nozzles.

**11.** A process according to claim 10, which comprises determining the number of droplets to be discharged by the selected nozzles in accordance with the record densities of the nozzles.

**12.** A process according to claim 1, which comprises controlling the recording head so that a pixel is recorded by k

droplets ($k \geqq 2$) per pixel and per scan, and the pixel is recorded by m scans ($m \geqq 2$), and determining the total number M of droplets to be discharged for a pixel in accordance with an image signal where Mi is the number of droplets discharged to the pixel in the i-th scan ($1 \leq i \leq m$) and

where $1 \leq Mi \leqq k$, and

$$\sum_{i=1}^{m} Mi=M$$

**13.** A process according to claim 12, wherein the timing of Mi droplet discharges is selected from k operable timings in accordance with the image signal, when the pixel is recorded in the i-th scan.

**14.** A process according to claim 12, wherein a plurality n of nozzles are used to discharge the droplets, where $n \geqq 2$ and the relative feeding movement between the recording head and the recording medium is n/m per scan.

**15.** A process according to claim 1, which comprises controlling the recording head so that different volumes of droplets are deposited by different nozzles at substantially the same position through a plurality of scans and a ratio or ratios among the volumes are so determined that density levels of the records are different by substantially the same interval.

**16.** A process according to claim 15, wherein the nozzles are arranged along a line substantially perpendicular to a scan of the nozzles, and a large volume droplet is overlaid with a small volume droplet on a recording material.

**17.** A process according to claim 1, wherein plural main scan movements are effected between the nozzles and a recording medium in a main scan direction with plural different amounts of scan movements therebetween in a sub-scan direction which is different from the main scan direction, and a pixel is recorded by different nozzles in at least two scan movements in the main scan direction.

**18.** A process according to claim 17, wherein k-1 sub-scan movements of an amount which is the same as the pitch at which the nozzles are disposed and one sub-scan movement of the amount which is (n-k+1)x(the pitch), are alternately effected to provide a tone image with k+1 tone levels, where n is a number of the nozzles, and k is a maximum number of the droplets for a pixel and $k \geq 2$.

**19.** A process according to claim 17, wherein the amounts of the sub-scan movements are $N_1$xP, $N_2$xP, ... $N_k$xP,

where n is a number of the nozzles, P is the pitch of the nozzles, k($k \geqq 2$) is a maximum number of the droplet for a pixel, and $n=N_1+N_2+..N_k$.

**20.** A process according to claim 1, wherein a tone image is formed by droplets discharged through different nozzles for a pixel by plural main scans, and an amount of sub-scan movement is constant to provide a different number x of overlaid droplets.

**21.** A process according to claim 1, wherein a toner color image is recorded using different numbers, colors and/or materials for the ink, a first pixel on the recording medium (2) is recorded by a plurality of main scans, a second pixel adjacent to the first pixel is recorded by a plurality of main scans, and, when the first and second pixels are recorded in different colors, the main scans for at least one of the first and second pixels are carried out before or after a main scan in which no droplets are discharged.

**22.** A process according to claim 21, wherein the main scan in which no droplets are discharged is the last or subsequent main scan of the main scans for the other pixel.

**23.** A process according to claim 1, wherein ink is not discharged during at least one of said recording steps.

**24.** A process according to claim 1 or 23, which comprises controlling the recording head so that the nozzles are operated at substantially even frequencies.

**25.** A process according to claim 1, 23 or 24, wherein the nozzles to be operated are selected at each recording step in accordance with second densities of the nozzles.

**26.** A process according to claim 1, 23, 24 or 25, wherein plural droplets are deposited for a pixel by one or more recording steps.

**27.** A process according to claim 1, 23, 24, 25 or 26, wherein in at least one of the recording steps, a different volume droplet is discharged.

**28.** A process according to claim 1, 23, 24, 25, 26 or 27, wherein a number of further recording steps are carried out and the amount of at least one of the relative movement steps between recording steps is different.

**29.** A process according to any one of the preceding claims, wherein in each of the nozzles, thermal energy is used to cause a state change in the ink to cause ink to be discharged through the nozzle.

**30.** A process according to any one of the preceding claims which comprises using cloth as the recording medium onto which the image is recorded.

**31.** A recording apparatus for recording image pixel on a recording medium using an ink jet recording head (1) having an array of ink jet nozzles for ejecting ink droplets each comprising substantially the same amount of ink onto the recording medium, the apparatus comprising:

means (109) for driving the recording head (1) to perform a recording step by causing ink to be ejected from at least some of the ink jet nozzles onto the recording medium (2);
means (110) for effecting relative movement between the recording medium (2) and the recording head (1) in the direction of the extent of the nozzle array over a distance less than the extent of the nozzle array; and
control means (102) for controlling the recording head (1), driving means (109) and relative movement effecting means (110) to cause relative movement over a distance less than the extent of the nozzle array between the recording medium and the recording head between recording steps, the control means (102) being arranged to control the recording steps in accordance with image data signals so as to cause an image pixel of one color and one tone or density level to be formed on the recording medium by ink ejected from one nozzle and to cause an image pixel of said one color but of a tone or density level different from the one tone or density level to be formed on the recording medium by a combination of ink ejected from different nozzles during the recording steps.

**32.** An apparatus according to claim 31, wherein the number of tone levels for an image is g where $g \geq 3$ and the control means (102) is arranged to control the drive means (109) and relative movement effecting means (110) so that relative movement of the recording medium and recording head and further recording steps are repeated for $(g-1)/k-1$ times where $k \geq 1$ and is the maximum number of droplets used to record a pixel in a single recording step.

**33.** An apparatus according to claim 31 or 32, wherein the control means (102) is arranged to control the recording head (1) to cause each ink jet nozzle to eject from 0 to k ink droplets for an image pixel during a recording step and to effect relative movement between the recording medium (2) and the recording head (1) by a distance equal to the separation s/p of nozzles of the array so that $n/(s/p) \geqq 2$ where n is the number of nozzles in the array and $n/(s/p) \times k = g-1$ where g is the number of tone or density levels of the image being recorded with $k \geq 1$ and $g \geq 3$.

**34.** An apparatus according to claim 31, wherein the control means (102) is arranged to enable g-1 droplets to be discharged by m different nozzles by changing the relative position between the nozzles and the recording medium (2) by a distance s(µm) in the direction of the nozzle arrangement for each recording step, where m is given by n/(s/p) rounded down to the nearest integer and p is a pitch of the nozzles; and

when a pixel is recorded with $t (t \leqq g-1)$ droplets in accordance with tone level information for the pixel, to record the pixel using m different nozzles, if $t \geqq m$ and to record the pixel using t different nozzles, if $t < m$.

**35.** An apparatus according to claim 31, wherein the control means (102) is arranged to control the recording head (1) to cause each nozzle to eject from 0 to k ink droplets for an image pixel during a recording step and to effect relative movement between the recording medium (2) and the recording head (1) by a distance equal to the separation s/p of nozzles of the array so that $n/(s/p) \geqq 2$ where n is the number of nozzles in the array and $n/(s/p) \times k > g-1$

where g is the number of tone or density levels of the image being recorded with $k \geq 1$ and $g \geq 3$.

**36.** An apparatus according to any one of claims 30 to 35, wherein the control means (102) is arranged to control operation of the recording head (1) so that the frequency of use of the ejection nozzles during recording of an image is approximately uniform across the array.

**37.** An apparatus according to claim 31, wherein the control means (102) is arranged to control operation of the recording head (1) so that when N, at maximum, nozzles are operated to discharge droplets, it is predetermined whether the M-th(M=1-N) droplet is to be discharged to maintain the frequency of operation of the nozzles below a predetermined level.

**38.** An apparatus according to claim 31, wherein the control means (102) is arranged to control the recording head (1) so that

$$\sum_{G=1}^{N+1} f(G,M) \leq N-1$$

are satisfied, where G is the tone level of a pixel, $1 \leqq G \leqq N+1$ , f(G,M)=1 when the M-th droplet is discharged, and f(G,M)=0 when the M-th droplet is not discharged.

**39.** An apparatus according to claim 31, wherein the control means (102) is arranged to control the recording head (1) so that a pixel is recorded with plural droplets discharged through different nozzles in plural scans, and to select the nozzles used to discharge the droplets in the scans in accordance with record densities of the nozzles.

**40.** An apparatus according to claim 31, wherein the control means (102) is arranged to control the recording head (1) so that a pixel is recorded by k droplets ($k \geqq 2$) per pixel and per scan, and the pixel is recorded by m scans ($m \geqq 2$), and to determine the total number M of droplets to be discharged for a pixel in accordance with an image signal, where Mi is the number of droplets discharged to the pixel in the i-th scan ($1 \leq i \leq m$) and
where $1 \leq Mi \leq k$, and

$$\sum_{i=1}^{m} Mi=M$$

**41.** An apparatus according to claim 31, wherein the control means (102) is arranged to cause plural main scan movements to be effected between the nozzles and the recording medium in a main scan direction with plural different amounts of scan movements therebetween in a sub-scan direction which is different from the main scan direction so that a pixel is recorded by different nozzles in at least two scan movements in the main scan direction.

**42.** An apparatus according to claim 31, wherein the control means (102) is arranged to cause a tone image to be formed by droplets discharged through different nozzles for a pixel by plural main scans, and an amount of subscan movement is constant to provide a different number x of overlaid droplets.

**43.** An apparatus according to claim 31, wherein the apparatus is arranged to record a toner color image using different numbers, colors and/or materials for the ink, and the control means (102) is arranged to cause a first pixel on the recording material to be recorded by a plurality of main scans, a second pixel adjacent to the first pixel to be recorded by a plurality of main scans, and, when the first and second pixels are recorded in different colors, the main scans for at least one of the first and second pixels to be carried out before or after a main scan in which no droplets are discharged.

**44.** An apparatus according to any one of claims 31 to 41, wherein, thermal energy generating means are provided for causing a state change in the ink to cause an ink droplet to be discharged through a nozzle.

**Patentansprüche**

1. Prozeß zum Erzeugen eines aufgezeichneten Produkts durch Bilden von Bildpixeln auf einem Aufzeichnungsmedium unter Verwendung eines Tintenstrahlaufzeichnungskopfs (1) mit einem Feld von Tintenstrahldüsen zum Ausstoßen Tintentröpfchen, von denen jedes im wesentlichem dieselbe Menge von Tinte umfaßt, auf ein Aufzeichnungsmedium (12), welches Verfahren umfasst:

   Durchführen einer Aufzeichnung durch Ansteuern des Aufzeichnungskopfs (1) zum Veranlassen, daß Tinte aus zumindest einigen der Tintenstrahldüsen auf das Aufzeichnungsmedium (2) in einer Vielzahl von Aufzeichnungsschritten ausgestoßen wird;
   Bewirken einer relativen Bewegung zwischen dem Aufzeichnungsmedium (2) und dem Aufzeichnungskopf (1) in der Richtung der Erstreckung der Düsenanordnung über eine Distanz kleiner als die Erstreckung der Düsenanordnung zwischen Aufzeichnungsschritten; und
   Steuern der Aufzeichnungsschritte in Übereinstimmung mit Bilddatensignalen zum Veranlassen, daß ein Bildpixel einer Farbe und eines Farbtons oder Dichtepegels auf dem Aufzeichnungsmedium durch aus einer Düse ausgestoßene Tinte gebildet wird, und Veranlassen, daß ein Bildpixel der einen Farbe, jedoch eines Farbtons oder Dichtepegels anders als der Farbton oder Dichtepegel, auf dem Aufzeichnungsmedium durch eine Kombination von aus unterschiedlichen Düsen während des Aufzeichnungsschritts ausgestoßener Tinte erzeugt wird.

2. Prozeß nach Anspruch 1, umfassend das Steuern des Aufzeichnungskopfs (1) zum Veranlassen jeder Tintenstrahldüse, von 0 bis k Tintentröpfchen für einen Bildpixel während eines Aufzeichnungsschritts auszustoßen, und Bewirken einer relativen Bewegung zwischen dem Aufzeichnungsmedium (2) und dem Aufzeichnungskopf (1) um eine Distanz gleich der Separation s/p von Düsen des Felds derart, daß $n/(s/p) \geq 2$ , worin n die Anzahl von Düsen in dem Feld ist, und $n/(s/p) \times k = g-1$ , worin g die Anzahl von Farbtönen oder Dichtepegeln des mit $k \geq 1$ und $g \geq 3$ aufgezeichneten Bilds ist.

3. Prozeß nach Anspruch 1, umfassend:

   Ermöglichen, daß g-1 Tröpfchen durch m unterschiedliche Düsen ausgestoßen werden, durch Ändern der relativen Position zwischen den Düsen und dem Aufzeichnungsmedium um eine Distanz s(µm) in der Richtung der Düsenanordnung für jeden Aufzeichnungsschritt, worin m durch n/(s/p), abgerundet auf die nächste Ganzzahl, gegeben ist und p ein Abstand der Düsen ist; und
   wenn ein Pixel mit t ($t \leq g-1$) Tröpfchen in Übereinstimmung mit Farbtonpegelinformation für den Pixel aufgezeichnet wird, Aufzeichnen des Pixels unter Verwendung von m unterschiedlichen Düsen, falls $t \geq m$, und Aufzeichnen des Pixels unter Verwendung von t unterschiedlichen Düsen, falls $t < m$.

4. Prozeß nach Anspruch 1, umfassend das Steuern des Aufzeichnungskopfs (1) zum Veranlassen jeder Tintenstrahldüse, von 0 bis k Tintentröpfchen für einen Bildpixel während eines Aufzeichnungsschritts auszustoßen, und Bewirken einer relativen Bewegung zwischen dem Aufzeichnungsmedium (2) und dem Aufzeichnungskopf (1) um eine Distanz gleich der Separation s/p von Düsen des Felds derart, daß $n/(s/p) \geq 2$ , worin n die Anzahl von Düsen in dem Feld ist, und $n/(s/p) \times k \geq g-1$ , worin g die Anzahl von Farbton- oder Dichtepegeln des mit $k \geq 1$ und $g \geq 3$ aufgezeichneten Bilds ist.

5. Prozeß nach Anspruch 4, umfassend das Steuern des Aufzeichnungskopfs derart, daß unter ein Pixel abtastenden n/(s/p) Düsen zumindest eine derselben keine Flüssigkeit ausstößt.

6. Prozeß nach einem der vorangehenden Ansprüche, umfassend das Steuern des Betriebs des Aufzeichnungskopfs (1) derart, daß die Nutzungsfrequenz der Ausstoßdüsen während der Aufzeichnung eines Bilds über das Feld näherungsweise uniform ist.

7. Prozeß nach Anspruch 1, umfassend das Steuern des Betriebs des Aufzeichnungskopfs (1) derart, daß wenn maximal N Düsen betrieben werden, um die Tröpfchen auszustoßen, es vorbestimmt ist, ob ein M-tes (M=1-N ) auszustoßen ist, um die Nutzungsfrequenz der Düsen unter einem vorbestimmten Pegel zu halten

8. Prozeß nach Anspruch 1, umfassend das Steuern des Aufzeichnungskopfs (1) derart, daß

$$\sum_{G=1}^{N+1} f(G, M) \leq N-1$$

erfüllt sind, worin G der Farbtonpegel eines Pixels ist, $1 \leq G \leq N+1$ , f(G,M)=1, wenn das M-te Tröpfchen ausgestoßen wird, und f(G,M)=0, wenn das M-te Tröpfchen nicht ausgestoßen wird.

**9.** Prozeß nach Anspruch 8, umfassend das Steuern des Aufzeichnungskopfs derart, daß folgendes erfüllt ist:

$$\sum_{G=1}^{N+1} f(G,M) \leq (N/2) + 1$$

**10.** Prozeß nach Anspruch 1, umfassend das Aufzeichnen eines Pixels durch mehrere über verschiedene Düsen in mehreren Antastungen ausgestoßene Tröpfchen, und Auswählen der zum Ausstoßen der Tröpfchen in den Abtastungen verwendeten Düsen in Übereinstimmung mit Aufzeichnungsdichten der Düsen.

**11.** Prozeß nach Anspruch 10, umfassend das Ermitteln der durch die ausgewählten Düsen auszustoßenden Anzahl von Tröpfchen in Übereinstimmung mit den Aufzeichnungsdichten der Düsen.

**12.** Prozeß nach Anspruch 1, umfassend das Steuern des Aufzeichnungskopfs derart, daß ein Pixel durch k Tröpfchen ($k \geq 2$) pro Pixel und pro Antastung aufgezeichnet wird, und der Pixel durch m Antastungen ($m \geq 2$) aufgezeichnet wird, und Festlegen der Gesamtanzahl M von für ein Pixel auszustoßenden Tröpfchen in Übereinstimmung mit einem Bildsignal, worin Mi die Anzahl von in den Pixel in der i-ten Abtastung ($1 \leq i \leq m$) ausgestoßenen Tröpfchen ist, und worin

$1 \leq Mi \leq k$, und

$$\sum_{i=1}^{m} Mi = M$$

**13.** Prozeß nach Anspruch 12, bei dem der zeitpunkt für Mi Tröpfchenausstoße aus k Betriebszeitpunkten in Übereinstimmung dem Bildsignal ausgewählt wird, wenn der Pixel in der i-ten Abtastung aufgezeichnet wird.

**14.** Prozeß nach Anspruch 12, bei dem eine Vielzahl n von Düsen verwendet werden, um die Tröpfchen auszustoßen, wobei $n \geq 2$ und die relative Vorschubbewegung zwischen dem Aufzeichnungskopf und dem Aufzeichnungsmedium n/m pro Abtastung ist.

**15.** Prozeß nach Anspruch 1, welcher das Steuern des Aufzeichnungskopfs umfaßt derart, daß unterschiedliche Volumina von Tröpfchen durch unterschiedliche Düsen an im wesentlichen derselben Position über eine Vielzahl von Abtastungen abgeschieden werden, und ein Verhältnis oder Verhältnisse zwischen den Volumina so festgelegt sind, daß Dichtepegel der Aufzeichnungen um im wesentlichen dasselbe Intervall unterschiedlich sind.

**16.** Prozeß nach Anspruch 15, bei dem die Düsen entlang einer Linie im wesentlichen senkrecht zu einer Abtastung der Düsen angeordnet sind und auf einem Aufzeichnungsmaterial ein großvolumiges Tröpfchen mit einem kleinvolumigen Tröpfchen überlagert wird.

**17.** Prozeß nach Anspruch 1, bei dem mehrere Hauptabtastbewegungen zwischen den Düsen und einem Aufzeichnungsmedium in einer Hauptabtastrichtung bewirkt werden, mit mehreren unterschiedlichen Beträgen von Abtastbewegungen dazwischen in einer Unterabtastrichtung, die sich von der Hauptabtastrichtung unterscheidet, und ein Pixel durch unterschiedliche Düsen in zumindest zwei Abtastbewegungen in der Hauptabtastrichtung aufgezeichnet wird.

**18.** Prozeß nach Anspruch 17, bei dem k-1 Unterabtastbewegungen eines Betrags, der derselbe ist wie der Abstand, in dem die Düsen angeordnet sind, und eine Unterabtastbewegung des Betrags, welcher (n-k+1 ) x (der Abstand) ist, abwechselnd bewirkt werden, um ein Farbtonbild mit k+1 Farbtönen bereitzustellen, worin n die Anzahl der Düsen ist, und k eine maximale Anzahl der Tröpfchen für einen Pixel und $k \geq 2$ ist.

**19.** Prozeß nach Anspruch 17, bei dem die Beträge der Unterabtastbewegungen $N_1xP$, $N_2xP$, ..., $N_kxP$ sind, worin n eine Anzahl der Düsen ist, P der Abstand der Düsen ist, k ($k \geq 2$) eine maximale Anzahl der Tröpfchen für einen Pixel ist, und $n=N_1+N_2+..N_k$ ist.

**20.** Prozeß nach Anspruch 1, bei dem ein Farbtonbild durch Tröpfchen gebildet wird, die über unterschiedliche Düsen für einen Pixel durch mehrere Hauptabtastrichtungen ausgestoßen werden, und ein Betrag einer Unterabtastbewegung konstant ist, um eine unterschiedliche Anzahl x von überlagerten Tröpfchen bereitzustellen.

**21.** Prozeß nach Anspruch 1, bei dem ein Tonerfarbbild unter Verwendung verschiedener Anzahlen, Farben und/oder Materialien für die Tinte aufgezeichnet wird, ein erster Pixel auf dem Aufzeichnungsmedium (2) durch eine Vielzahl von Hauptabtastungen aufgezeichnet wird, ein zweiter Pixel neben dem ersten Pixel durch eine Vielzahl von Hauptabtastungen aufgezeichnet wird, und, wenn der erste und der zweite Pixel in unterschiedlichen Farben aufgezeichnet werden, die Hauptabtastungen für zumindest einen des ersten und des zweiten Pixels vor oder nach einer Hauptabtastung, in der keine Tröpfchen ausgestoßen werden, ausgeführt wird.

**22.** Prozeß nach Anspruch 21, bei dem die Hauptabtastung, in der keine Tröpfchen ausgestoßen werden, die letzte oder nachfolgende Hauptabtastung der Hauptabtastungen für den anderen Pixel ist.

**23.** Prozeß nach Anspruch 1, bei dem Tinte während zumindest eines der Aufzeichnungsschritte nicht ausgestoßen wird.

**24.** Prozeß nach Anspruch 1 oder 23, welcher das Steuern des Aufzeichnungskopfs umfaßt derart, daß die Düsen bei im wesentlichen gleichmäßigen Frequenzen betrieben werden.

**25.** Prozeß nach Anspruch 1, 23 oder 24, bei dem die zu betreibenden Düsen in jedem Aufzeichnungsschritt in Übereinstimmung mit zweiten Dichten der Düsen ausgewählt werden.

**26.** Prozeß nach Anspruch 1, 23, 24 oder 25, bei dem mehrere Tröpfchen für einen Pixel durch einen oder mehrere Aufzeichnungsschritte abgeschieden werden.

**27.** Prozeß nach Anspruch 1, 23, 24, 25 oder 26, bei dem in zumindest einem der Aufzeichnungsschritte ein Tröpfchen unterschiedlichen Volumens ausgestoßen wird.

**28.** Prozeß nach Anspruch 1, 23, 24, 25, 26 oder 27, bei dem eine Anzahl weiterer Aufzeichnungsschritte ausgeführt wird und der Betrag zumindest eines der Schritte relativer Bewegung zwischen Aufzeichnungsschritten unterschiedlich ist.

**29.** Prozeß nach einem der vorangehenden Ansprüche, bei dem in jeder der Düsen thermische Energie verwendet wird, um eine Zustandsänderung in der Tinte zu veranlassen, um zu veranlassen, daß Tinte über die Düse ausgestoßen wird.

**30.** Prozeß nach einem der vorangehenden Ansprüche, welcher das Verwenden von Tuch als Aufzeichnungsmedium umfaßt, auf das das Bild aufgezeichnet wird.

**31.** Aufzeichnungsvorrichtung zum Aufzeichnen von Bildpixeln auf einem Aufzeichnungsmedium unter Verwendung eines Tintenstrahlaufzeichnungskopfs (1) mit einem Feld von Tintendüsen zum Ausstoßen von Tintentröpfchen, von denen jedes im wesentlichen dieselbe Tintenmenge umfaßt, auf ein Aufzeichnungsmedium, wobei die Vorrichtung umfasst:

eine Einrichtung (109) zum Ansteuern des Aufzeichnungskopfs (1) derart, daß ein Aufzeichnungsschritt ausgeführt wird durch Veranlassen, daß Tinte aus zumindest einigen der Tintenstrahldüsen auf das Aufzeichnungsmedium (2) ausgestoßen wird;
eine Einrichtung (110) zum Bewirken einer relativen Bewegung zwischen dem Aufzeichnungsmedium (2) und dem Aufzeichnungskopf (1) in der Richtung der Erstreckung des Düsenfelds über eine Distanz kleiner als die Erstreckung der Düsenanordnung; und
eine Steuereinrichtung (102) zum Steuern des Aufzeichnungskopfs, der Ansteuereinrichtung (109) und der Einrichtung zum Bewirken einer relativen Bewegung (110) derart, daß eine relative Bewegung über eine Distanz kleiner als die Erstreckung der Düsenanordnung zwischen dem Aufzeichnungsmedium und dem Aufzeichnungskopf zwischen Aufzeichnungsschritten zu veranlassen, wobei die Steuereinrichtung (102) angeordnet ist zum Steuern der Aufzeichnungsschritte in Übereinstimmung mit Bilddatensignalen, um zu veranlassen, daß ein Bildpixel einer Farbe und eines Farbtons oder Dichtepegels auf dem Aufzeichnungsmedium durch aus einer Düse ausgestoßene Tinte erzeugt wird, und um zu veranlassen, daß ein Bildpixel der einen Farbe, jedoch eines Farbtons oder Dichtepegels anders als der eine Farbton oder Dichtepegel auf dem Aufzeichnungsmedium durch eine Kombination von aus unterschiedlichen Düsen während der Aufzeichnungsschritte ausgestoßener Tinte zu erzeugt wird.

**32.** Vorrichtung nach Anspruch 31, bei der die Anzahl von Farbtonpegeln für ein Bild g ist, mit $g \geq 3$, und die Steuereinrichtung (102) angeordnet ist zum Steuern der Ansteuereinrichtung (109) und der Einrichtung zum Bewirken einer relativen Bewegung (110) derart, daß eine relative Bewegung des Aufzeichnungsmediums und des Aufzeichnungskopfs sowie weitere Aufzeichnungsschritte $(g-1)/k-1$ Male wiederholt werden, worin $k \geq 1$ und die maximale Anzahl von zum Aufzeichnen eines Pixels in einem einzelnen Aufzeichnungsschritt verwendeten Tröpfchen ist.

**33.** Vorrichtung nach Anspruch 31 oder 32, bei der die Steuereinrichtung (102) angeordnet ist zum Steuern des Aufzeichnungskopfs (1) zum Veranlassen jeder Tintenstrahldüse, von 0 bis k Tintentröpfchen für einen Bildpixel während eines Aufzeichnungsschritts auszustoßen, und Bewirken einer relativen Bewegung zwischen dem Aufzeichnungsmedium (2) und dem Aufzeichnungskopf (1) um eine Distanz gleich der Separation s/p von Düsen des Felds derart, daß $n/(s/p) \geq 2$, worin n die Anzahl von Düsen in dem Feld ist, und $n/(s/p) \times k = g-1$ ist, worin g die Anzahl von Farbtönen oder Dichtepegeln des mit $k \geq 1$ und $g \geq 3$ aufgezeichneten Bilds ist.

**34.** Vorrichtung nach Anspruch 31, bei der die Steuereinrichtung (102) angeordnet ist zum Ermöglichen, daß g-1 Tröpfchen durch m unterschiedliche Düsen ausgestoßen werden, durch Ändern der relativen Position zwischen den Düsen und dem Aufzeichnungsmedium (2) um eine Distanz s(μm) in der Richtung der Düsenanordnung für jeden Aufzeichnungsschritt, worin m gegeben ist durch n/(s/p), abgerundet auf die nächstliegende Ganzzahl, und p ein Abstand der Düsen ist; und

wenn ein Pixel mit $t$ $(t \leq g-1)$ Tröpfchen in Übereinstimmung mit Farbtonpegelinformation für den Pixel aufgezeichnet wird, zum Aufzeichnen des Pixels unter Verwendung von m unterschiedlichen Düsen, falls $t \geq m$, und Aufzeichnen des Pixels unter Verwendung von t unterschiedlichen Düsen, falls $t < m$.

**35.** Vorrichtung nach Anspruch 31, bei der die Steuereinrichtung (102) angeordnet ist zum Steuern des Aufzeichnungskopfs (1) zum Veranlassen jeder Düse, von 0 bis k Tintentröpfchen für einen Bildpixel während eines Aufzeichnungsschritts auszustoßen, und Bewirken einer relativen Bewegung zwischen dem Aufzeichnungsmedium (1) und dem Aufzeichnungskopf (1) um eine Distanz gleich der Separation s/p von Düsen des Felds derart, daß $n/(s/p) \geq 2$ ist, worin n die Anzahl von Düsen in dem Feld ist, und $n/(s/p) \times k > g-1$, worin g die Anzahl von Farbton- oder Dichtepegeln des aufgezeichneten Bilds ist, mit $k \geq 1$ und $g \geq 3$.

**36.** Vorrichtung nach einem der Ansprüche 30 bis 35, bei der die Steuereinrichtung (102) angeordnet ist zum Steuern des Betriebs des Aufzeichnungskopfs (1) derart, daß die Nutzungsfrequenz der Ausstoßdüsen während der Aufzeichnung eines Bilds über das Feld näherungsweise uniform ist.

**37.** Vorrichtung nach Anspruch 31, bei der die Steuereinrichtung (102) angeordnet ist zum Steuern des Betriebs des Aufzeichnungskopfs (1) derart, daß wenn maximal N Düsen betrieben werden, um Tröpfchen auszustoßen, es vorbestimmt ist, ob das M-te $(M = 1\text{-}N)$ Tröpfchen auszustoßen ist, um die Betriebsfrequenz der Düsen unter einem vorbestimmten Niveau zu halten.

**38.** Vorrichtung nach Anspruch 31, bei der die Steuereinrichtung (102) angeordnet ist zum Steuern des Aufzeich-

nungskopfs (1) derart, daß

$$\sum_{G=1}^{N+1} f(G,M) \leq N-1$$

erfüllt sind, worin G der Farbtonpegel eines Pixels ist, $1 \leq G \leq N+1$ , f(G,M)=1, wenn das M-te Tröpfchen ausgestoßen wird, und f(G,M)=0, wenn das M-te Tröpfchen nicht ausgestoßen wird.

**39.** Vorrichtung nach Anspruch 31, bei der die Steuereinrichtung (102) angeordnet ist zum Steuern des Aufzeichnungskopfs (1) derart, daß ein Pixel mit mehreren aus mehreren Düsen in mehreren Abtastungen ausgestoßenen Tröpfchen aufgezeichnet wird, und zum Auswählen der zum Ausstoßen der Tröpfchen verwendeten Düsen in den Abtastungen in Übereinstimmung mit Aufzeichnungsdichten der Düsen.

**40.** Vorrichtung nach Anspruch 31, bei der die Steuereinrichtung (102) angeordnet ist zum Steuern des Aufzeichnungskopfs derart, daß ein Pixel durch k Tröpfchen ($k \geq 2$) pro Pixel und pro Abtastung aufgezeichnet wird, und der Pixel durch m Abtastungen ($m \geq 2$) aufgezeichnet wird, und zum Festlegen der Gesamtanzahl M von für ein Pixel auszustoßenden Tröpfchen in Übereinstimmung mit einem Bildsignal, worin Mi die Anzahl von in der i-ten Abtastung ($1 \leq i \leq m$) in den Pixel ausgestoßenen Tröpfchen ist und
worin $1 \leq Mi \leq k$, und

$$\sum_{i=1}^{m} Mi = M \text{ .}$$

**41.** Vorrichtung nach Anspruch 31, bei der die Steuereinrichtung (102) angeordnet ist zum Veranlassen mehrerer zwischen den Düsen und dem Aufzeichnungsmedium in einer Hauptabtastrichtung zu bewirkender Hauptabtastbewegungen, mit mehreren unterschiedlichen Beträgen von Abtastbewegungen dazwischen in einer Unterabtastrichtung, welche sich von der Hauptabtastrichtung unterscheidet, derart, daß ein Pixel durch unterschiedliche Düsen in zumindest zwei Abtastbewegungen in der Hauptabtastrichtung aufgezeichnet wird.

**42.** Vorrichtung nach Anspruch 31, bei der die Steuereinrichtung (102) angeordnet ist zum Veranlassen, daß ein Farbtonbild durch Tröpfchen, die durch unterschiedliche Düsen für einen Pixel durch mehrere Hauptabtastungen ausgestoßen werden, erzeugt wird, und ein Betrag der Unterabtastbewegung konstant ist, um eine unterschiedliche Anzahl x von überlagerten Tröpfchen bereitzustellen.

**43.** Vorrichtung nach Anspruch 31, bei der die Vorrichtung angeordnet ist zum Aufzeichnen eines Tonerfarbbilds unter Verwendung unterschiedlicher Anzahlen, Farben und/oder Materialien für die Tinte, und die Steuereinrichtung (102) angeordnet ist zum Veranlassen, daß ein erster Pixel auf dem Aufzeichnungsmaterial durch eine Vielzahl von Hauptabtastungen aufgezeichnet wird, ein zweiter Pixel neben dem ersten Pixel durch eine Vielzahl von Hauptabtastungen aufgezeichnet wird, und, wenn der erste und der zweite Pixel in unterschiedlichen Farben aufgezeichnet werden, die Hauptabtastungen für zumindest einen des ersten und des zweiten Pixels vor oder nach einer Hauptabtastung, in welcher keine Tröpfchen ausgestoßen werden, ausgeführt wird.

**44.** Vorrichtung nach einem der Ansprüche 31 bis 41, bei der eine Einrichtung zum Erzeugen von thermischer Energie bereitgestellt ist zum Veranlassen einer Zustandsänderung in der Tinte zum Veranlassen, daß ein Tintentröpfchen durch eine Düse ausgestoßen wird.

**Revendications**

**1.** Procédé pour la production d'un produit enregistré en formant des pixels d'image sur un support d'enregistrement en utilisant une tête (1) d'enregistrement a jet d'encre ayant une rangée de gicleurs pour jet d'encre destinés à éjecter des gouttelettes d'encre comprenant chacune sensiblement la même quantité d'encre sur le support d'enregistrement (12), lequel procédé comprend :

l'exécution d'un enregistrement en attaquant la tête d'enregistrement (1) afin de provoquer une éjection d'encre à partir d'au moins certains des gicleurs à jet d'encre sur le support d'enregistrement (2) en plusieurs étapes d'enregistrement ;
l'exécution d'un mouvement relatif entre le support d'enregistrement (2) et la tête d'enregistrement (1) dans la direction de l'étendue de la rangée de gicleurs sur une distance inférieure à l'étendue de la rangée de gicleurs entre des étapes d'enregistrement ; et
la commande des étapes d'enregistrement en fonction de signaux de données d'image pour provoquer la formation d'un pixel d'image d'une couleur et d'un niveau de ton ou de densité sur le support d'enregistrement par de l'encre éjectée depuis un gicleur et pour provoquer la formation d'un pixel d'image de ladite couleur mais d'un niveau de ton ou de densité différent du premier niveau de ton ou de densité sur le support d'enregistrement par une combinaison d'une encre éjectée à partir de différents gicleurs pendant les étapes d'enregistrement.

**2.** Procédé selon la revendication 1, qui comprend la commande de la tête d'enregistrement (1) pour amener chaque gicleur à jet d'encre à éjecter 0 à k gouttelettes d'encre pour un pixel d'image pendant une étape d'enregistrement et l'exécution d'un mouvement relatif entre le support d'enregistrement (2) et la tête d'enregistrement (1) sur une distance égale à l'écartement s/p des gicleurs de la rangée de manière que $n/(s/p) \geq 2$ où n est le nombre de gicleurs dans la rangée et $n/(s/p) \times k = g-1$ où g est le nombre de niveaux de ton ou de densité de l'image enregistrée avec $k \geq 1$ et $g \geq 3$.

**3.** Procédé selon la revendication 1, qui comprend :

le fait de permettre à g-1 gouttelettes d'être déchargées par m gicleurs différents en modifiant la position relative entre les gicleurs et le support d'enregistrement d'une distance s(μm) dans la direction de l'agencement des gicleurs pour chaque étape d'enregistrement, où m est donné par n/(s/p) arrondi vers le bas à l'entier le plus proche et p est un pas des gicleurs ; et
lorsqu'un pixel est enregistré avec $t(t \leq g-1)$ gouttelettes conformément à une information de niveau de ton pour le pixel, l'enregistrement du pixel en utilisant m gicleurs différents, si $t \geq m$ et l'enregistrement du pixel en utilisant t gicleurs différents, si $t < m$.

**4.** Procédé selon la revendication 1, qui comprend la commande de la tête d'enregistrement (1) afin d'amener chaque gicleur à jet d'encre à éjecter 0 à k gouttelettes d'encre pour un pixel d'image pendant une étape d'enregistrement et l'exécution d'un mouvement relatif entre le support d'enregistrement (2) et la tête d'enregistrement (1) sur une distance égale à l'écartement s/p des gicleurs dans la rangée afin que $n/(s/p) \geq 2$ où n est le nombre de gicleurs dans la rangée et $n/(s/p) \times k > g-1$ où g est le nombre de niveaux de ton ou de densité de l'image enregistrée avec $k \geq 1$ et $g \geq 3$.

**5.** Procédé selon la revendication 4, qui comprend la commande de la tête d'enregistrement afin que parmi n/(s/p) gicleurs balayant un pixel, au moins l'un d'eux ne décharge pas de liquide.

**6.** Procédé selon l'une quelconque des revendications précédentes, qui comprend la commande du fonctionnement de la tête d'enregistrement (1) afin que la fréquence d'utilisation des gicleurs d'éjection pendant un enregistrement d'une image soit approximativement uniforme sur la rangée.

**7.** Procédé selon la revendication 1, qui comprend la commande du fonctionnement de la tête d'enregistrement (1) de façon que lorsque N, au maximum, gicleurs sont activés pour décharger les gouttelettes, il soit prédéterminé si la Mième( $M=1-N$ ) gouttelette doit être déchargée pour maintenir la fréquence d'activation des gicleurs en dessous d'un niveau prédéterminé.

**8.** Procédé selon la revendication 1, qui comprend la commande de la tête d'enregistrement (1) afin que

$$\sum_{G=1}^{N+1} f(G,M) \leq N-1$$

soient satisfaites, où G est le niveau de ton d'un pixel, $1 \leq G \leq N+1$ , $f(G,M)=1$ lorsque la Mième gouttelette est déchargée, et $f(G,M)=0$ lorsque la Mième gouttelette n'est pas déchargée.

**9.** Procédé selon la revendication 8, qui comprend la commande de la tête d'enregistrement (1) afin de satisfaire aux relations suivantes :

$$\sum_{G=1}^{N+1} f(G,M) \leq (N/2)+1$$

**10.** Procédé selon la revendication 1, qui comprend l'enregistrement d'un pixel par plusieurs gouttelettes déchargées à travers différents gicleurs en plusieurs balayages, et la sélection des gicleurs utilisés pour décharger les gouttelettes dans les balayages en fonction des densités d'enregistrement des gicleurs.

**11.** Procédé selon la revendication 10, qui comprend la détermination du nombre de gouttelettes devant être déchargées par les gicleurs sélectionnés en fonction des densités d'enregistrement des gicleurs.

**12.** Procédé selon la revendication 1, qui comprend la commande de la tête d'enregistrement afin qu'un pixel soit enregistré par k gouttelettes ($k \geq 2$) par pixel et par balayage, et que le pixel soit enregistré par m balayages ($m \geq 2$), et la détermination du nombre total M de gouttelettes devant être déchargées pour un pixel en fonction d'un signal d'image où Mi est le nombre de gouttelettes déchargées vers le pixel dans le i-ième balayage ($1 \leq i \leq m$) et

où $1 \leq Mi \leqq k$, and

$$\sum_{i=1}^{m} Mi=M$$

**13.** Procédé selon la revendication 12, dans lequel le positionnement temporel de Mi décharge de gouttelettes est sélectionné à partir de k temps activables en fonction du signal d'image, lorsque le pixel est enregistré dans le i-ième balayage.

**14.** Procédé selon la revendication 12, dans lequel une pluralité n de gicleurs est utilisée pour décharger les gouttelettes, où $n \geq 2$ et le mouvement d'avance relatif entre la tête d'enregistrement et le support d'enregistrement est n/m par balayage.

**15.** Procédé selon la revendication 1, qui comprend la commande de la tête d'enregistrement afin que différents volumes de gouttelettes soient déposés par différents gicleurs sensiblement dans la même position lors de plusieurs balayages et qu'un rapport ou des rapports entre les volumes soient déterminés afin que des niveaux de densité des enregistrements soient différents sensiblement dans le même intervalle.

**16.** Procédé selon la revendication 15, dans lequel les gicleurs sont agencés suivant une ligne sensiblement perpendiculaire à un balayage des gicleurs, et une gouttelette de grand volume est recouverte par une gouttelette de petit volume sur un support d'enregistrement.

**17.** Procédé selon la revendication 1, dans lequel plusieurs mouvements de balayage principal sont effectués entre les gicleurs et un support d'enregistrement dans une direction de balayage principal avec plusieurs quantités différentes de mouvements de balayage entre eux dans une direction de balayage secondaire qui est différente de la direction de balayage principal, et un pixel est enregistré par différents gicleurs dans au moins deux mouvements de balayage dans la direction de balayage principal.

**18.** Procédé selon la revendication 17, dans lequel k-1 mouvement de balayage secondaire d'une quantité égale au pas auquel les gicleurs sont disposés et un mouvement de balayage secondaire d'une quantité qui est (n-k+1 )x(le pas) sont effectués alternativement pour produire une image nuancée ayant k+1 niveaux de ton, où n est un nombre des gicleurs, et k est un nombre maximal des gouttelettes pour un pixel et $k \geq 2$.

**19.** Procédé selon la revendication 17, dans lequel les quantités des mouvements de balayage secondaire sont $N_1xP$, $N_2xP$, ... $N_kxP$,

où n est un nombre des gicleurs, P est le pas des gicleurs, $k(k \leq 2)$ est un nombre maximal des gouttelettes pour un pixel, et $n=N_1+N_2+..N_k$.

**20.** Procédé selon la revendication 1, dans lequel une image nuancée est formée par des gouttelettes déchargées à travers différents gicleurs pour un pixel par plusieurs balayages principaux, et une quantité de mouvement de balayage secondaire est constante pour produire un nombre différent x de gouttelettes superposées.

**21.** Procédé selon la revendication 1, dans lequel une image en couleurs en toners est enregistrée en utilisant différents nombres, couleurs et/ou matières pour l'encre, un premier pixel sur le support d'enregistrement (2) est enregistré par plusieurs balayages principaux, un second pixel adjacent au premier pixel est enregistré par plusieurs balayages principaux et, lorsque les premier et second pixels sont enregistrés dans des couleurs différentes, les balayages principaux pour au moins l'un des premier et second pixels sont exécutés avant ou après un balayage principal dans lequel aucune gouttelette n'est déchargée.

**22.** Procédé selon la revendication 21, dans lequel le balayage principal dans lequel aucune gouttelette n'est déchargée est le dernier ou le balayage principal suivant des balayages principaux pour l'autre pixel.

**23.** Procédé selon la revendication 1, dans lequel de l'encre n'est pas déchargée pendant au moins l'une desdites étapes d'enregistrement.

**24.** Procédé selon la revendication 1 ou 23, qui comprend la commande de la tête d'enregistrement afin que les gicleurs soient activés à des fréquences sensiblement égales.

**25.** Procédé selon la revendication 1, 23 ou 24, dans lequel les gicleurs devant être activés sont sélectionnés à chaque étape d'enregistrement en fonction de secondes densités des gicleurs.

**26.** Procédé selon la revendication 1, 23, 24 ou 25, dans lequel plusieurs gouttelettes sont déposées pour un pixel par une ou plusieurs étapes d'enregistrement.

**27.** Procédé selon la revendication 1, 23, 24, 25 ou 26, dans lequel, dans au moins l'une des étapes d'enregistrement, une gouttelette d'un volume différent est déchargée.

**28.** Procédé selon la revendication 1, 23, 24, 25, 26 ou 27, dans lequel un certain nombre d'autres étapes d'enregistrement sont exécutées et la quantité d'au moins l'une des étapes de mouvement relatif entre des étapes d'enregistrement est différente.

**29.** Procédé selon l'une quelconque des revendications précédentes, dans lequel, dans chacun des gicleurs, de l'énergie thermique est utilisée pour provoquer un changement d'état dans l'encre afin d'amener de l'encre à être déchargée à travers le gicleur.

**30.** Procédé selon l'une quelconque des revendications précédentes, qui comprend l'utilisation d'une étoffe en tant que support d'enregistrement sur lequel l'image est enregistrée.

**31.** Appareil d'enregistrement pour enregistrer un pixel d'image sur un support d'enregistrement en utilisant une tête (1) d'enregistrement à jet d'encre ayant une rangée de gicleurs à jet d'encre destinés à éjecter des gouttelettes d'encre comprenant chacune sensiblement la même quantité d'encre sur le support d'enregistrement, l'appareil comportant :

des moyens (109) destinés à attaquer la tête d'enregistrement (1) pour effectuer une étape d'enregistrement en provoquant une éjection d'encre à partir d'au moins certains des gicleurs à jet d'encre sur le support d'enregistrement (2) ;
des moyens (110) destinés à effectuer un mouvement relatif entre le support d'enregistrement (2) et la tête d'enregistrement (1) dans la direction de l'étendue de la rangée de gicleurs sur une distance inférieure à l'étendue de la rangée de gicleurs ; et
des moyens de commande (102) destinés à commander la tête d'enregistrement (1), les moyens d'attaque (109) et les moyens (110) effectuant un mouvement relatif pour provoquer un mouvement relatif sur une distance inférieure à l'étendue de la rangée de gicleurs entre le support d'enregistrement et la tête d'enregistrement entre des étapes d'enregistrement, les moyens de commande (102) étant agencés de façon à commander les étapes d'enregistrement en fonction de signaux de données d'image afin de provoquer la formation d'un pixel d'image d'une couleur et d'un niveau de ton ou de densité sur le support d'enregistrement par de l'encre éjectée à partir d'un gicleur et de provoquer la formation d'un pixel d'image de ladite couleur, mais d'un niveau de ton ou de densité différent du premier niveau cité de ton ou de densité sur le support d'enregistrement par une combinaison d'encre éjectée depuis différents gicleurs pendant les étapes d'enregistrement.

**32.** Appareil selon la revendication 31, dans lequel le nombre de niveaux de ton pour une image est g où $g \geq 3$ et les moyens de commande (102) sont agencés de façon à commander les moyens d'attaque (109) et les moyens (110) effectuant un mouvement relatif afin qu'un mouvement relatif du support d'enregistrement et de la tête d'enregistrement et que d'autres étapes d'enregistrement soient répétées pour $(g-1)/k-1$ fois où $k \geq 1$ et est le nombre maximal de gouttelettes utilisées pour enregistrer un pixel dans une étape d'enregistrement unique.

**33.** Appareil selon la revendication 31 ou 32, dans lequel les moyens de commande (102) sont agencés de façon à commander la tête d'enregistrement (1) afin d'amener chaque gicleur à jet d'encre à éjecter 0 à k gouttelettes d'encre pour un pixel d'image pendant une étape d'enregistrement et à effectuer un mouvement relatif entre le support d'enregistrement (2) et la tête d'enregistrement (1) sur une distance égale à l'écartement s/p des gicleurs de la rangée afin que $n/(s/p) \geq 2$ où n est le nombre de gicleurs dans la rangée et $n/(s/p) \times k=g-1$ où g est le nombre de niveaux de ton ou de densité de l'image en cours d'enregistrement avec $k \geq 1$ et $g \geq 3$.

**34.** Appareil selon la revendication 31, dans lequel les moyens de commande (102) sont agencés pour permettre à g-1 gouttelettes d'être déchargées par m gicleurs différents en modifiant la position relative entre les gicleurs et le support d'enregistrement (2) d'une distance s(μm) dans la direction de l'agencement des gicleurs pour chaque étape d'enregistrement, ou m est donné par n/(s/p) arrondi vers le bas à l'entier le plus proche et p est un pas des gicleurs ; et

lorsqu'un pixel est enregistré avec $t(t \leq g-1)$ gouttelettes conformément à une information de niveau de ton pour le pixel, pour enregistrer le pixel en utilisant m gicleurs différents, si $t \geq m$ et pour enregistrer le pixel en utilisant t gicleurs différents, si $t<m$.

**35.** Appareil selon la revendication 31, dans lequel les moyens de commande (102) sont agencés pour commander la tête d'enregistrement (1) afin d'amener chaque gicleur à éjecter 0 à k gouttelettes d'encre pour un pixel d'image pendant une étape d'enregistrement et pour effectuer un mouvement relatif entre le support d'enregistrement (2) et la tête d'enregistrement (1) sur une distance égale à l'écartement s/p des gicleurs de la rangée afin que $n/(s/p) \geq 2$ où n est le nombre de gicleurs dans la rangée et $n/(s/p) \times k > g-1$ où g est le nombre de niveaux de ton ou de densité de l'image enregistrée avec $k \geq 1$ et $g \geq 3$.

**36.** Appareil selon l'une quelconque des revendications 30 à 35, dans lequel les moyens de commande (102) sont agencés de façon à commander le fonctionnement de la tête d'enregistrement (1) afin que la fréquence d'utilisation des gicleurs d'éjection pendant l'enregistrement d'une image soit approximativement uniforme sur la rangée.

**37.** Appareil selon la revendication 31, dans lequel les moyens de commande (102) sont agencés de façon à commander le fonctionnement de la tête d'enregistrement (1) afin que lorsque N, au maximum, gicleurs sont activés pour décharger des gouttelettes, il soit prédéterminé si la Mième( $M=1-N$ ) gouttelettes doit être déchargée pour maintenir la fréquence d'activation des gicleurs en dessous d'un niveau prédéterminé.

**38.** Appareil selon la revendication 31, dans lequel les moyens de commande (102) sont agencés de façon à commander la tête d'enregistrement (1) afin que

$$\sum_{G=1}^{N+1} f(G,M) \leq N-1$$

soient satisfaites, où G est le niveau de ton d'un pixel, $1 \leq G \leq N+1$ , f(G,M)=1 lorsque la M-ième gouttelette est déchargée, et f(G,M)=0 lorsque la M-ième gouttelette n'est pas déchargée.

**39.** Appareil selon la revendication 31, dans lequel les moyens de commande (102) sont agencés de façon à commander la tête d'enregistrement (1) afin qu'un pixel soit enregistré avec plusieurs gouttelettes déchargées à travers différents gicleurs en plusieurs balayages, et pour sélectionner les gicleurs utilisés pour décharger les gouttelettes dans les balayages en fonction de densités d'enregistrement des gicleurs.

**40.** Appareil selon la revendication 31, dans lequel les moyens de commande (102) sont agencés pour commander la tête d'enregistrement (1) afin qu'un pixel soit enregistré par k gouttelettes ($k \geq 2$) par pixel et par balayage, et que le pixel soit enregistré par m balayages ($m \geq 2$), et pour déterminer le nombre total M de gouttelettes devant être déchargées pour un pixel en fonction d'un signal d'image, où Mi est le nombre de gouttelettes déchargées vers le pixel dans le i-ième balayage ($1 \leq i \leq m$) et

où $1 \leq Mi \leqq k$, and

$$\sum_{i=1}^{m} Mi = M$$

**41.** Appareil selon la revendication 31, dans lequel les moyens de commande (102) sont agencés pour provoquer l'exécution de plusieurs mouvements de balayage principaux entre les gicleurs et le support d'enregistrement dans une direction de balayage principal avec plusieurs quantités différentes de mouvements de balayage entre eux dans une direction de balayage secondaire qui est différente de la direction de balayage principal afin qu'un pixel soit enregistré par différents gicleurs dans au moins deux mouvements de balayage dans la direction de balayage principal.

**42.** Appareil selon la revendication 31, dans lequel les moyens de commande (102) sont agencés pour provoquer la formation d'une image nuancée formée par des gouttelettes déchargées à travers différents gicleurs pour un pixel par plusieurs balayages principaux, et une quantité d'un mouvement de balayage secondaire est constante pour produire un nombre différent x de gouttelettes superposées.

**43.** Appareil selon la revendication 31, dans lequel l'appareil est agencé pour enregistrer une image en couleurs en toners en utilisant différents nombres, couleurs et/ou matières pour l'encre, et les moyens de commande (102) sont agencés pour provoquer l'enregistrement d'un premier pixel sur le support d'enregistrement par plusieurs balayages principaux, l'enregistrement d'un second pixel adjacent au premier pixel par plusieurs balayages principaux et, lorsque les premier et second pixels sont enregistrés dans des couleurs différentes, l'exécution des balayages principaux pour au moins l'un des premier et second pixels avant ou après un balayage principal dans lequel aucune gouttelette n'est déchargée.

**44.** Appareil selon l'une quelconque des revendications 31 à 41, dans lequel des moyens de génération d'énergie thermique sont prévus pour provoquer un changement d'état de l'encre afin d'amener une gouttelette d'encre à être déchargée à travers un gicleur.

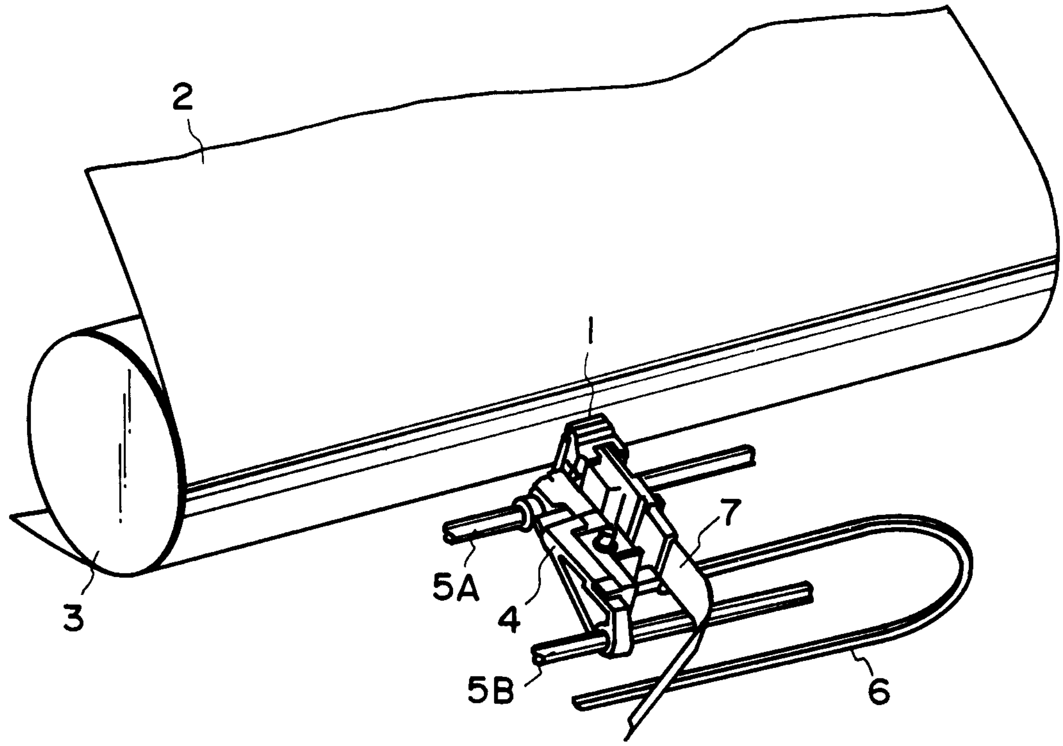


FIG. 1

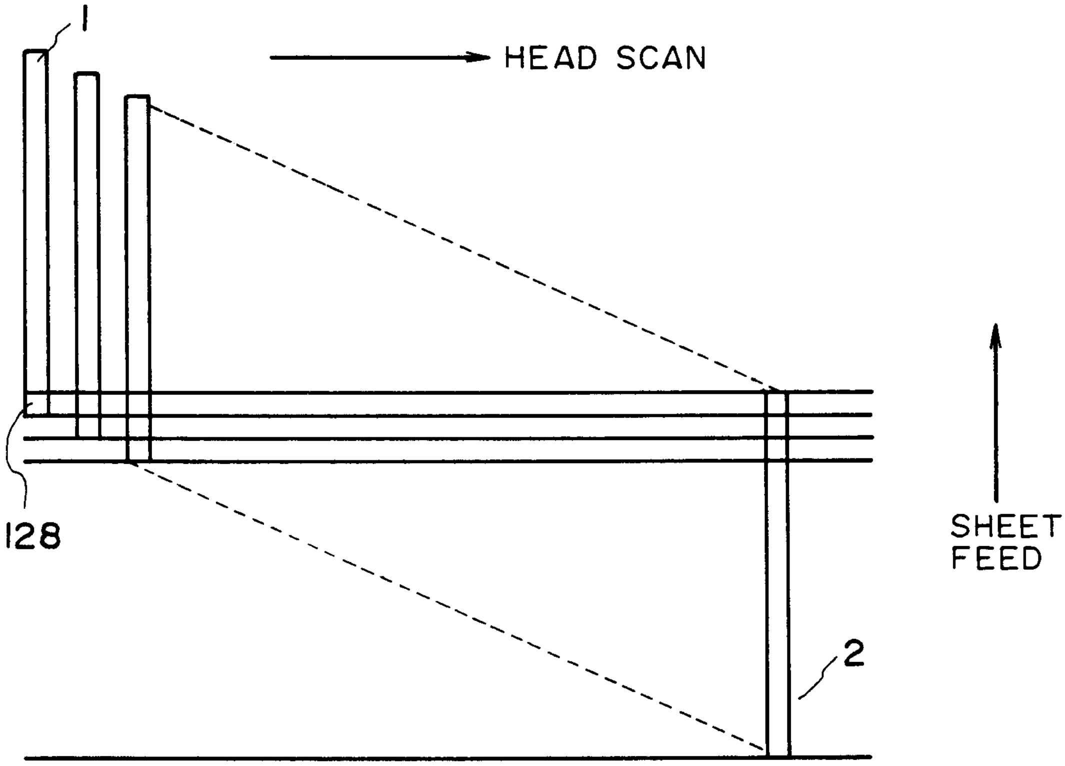


FIG. 2

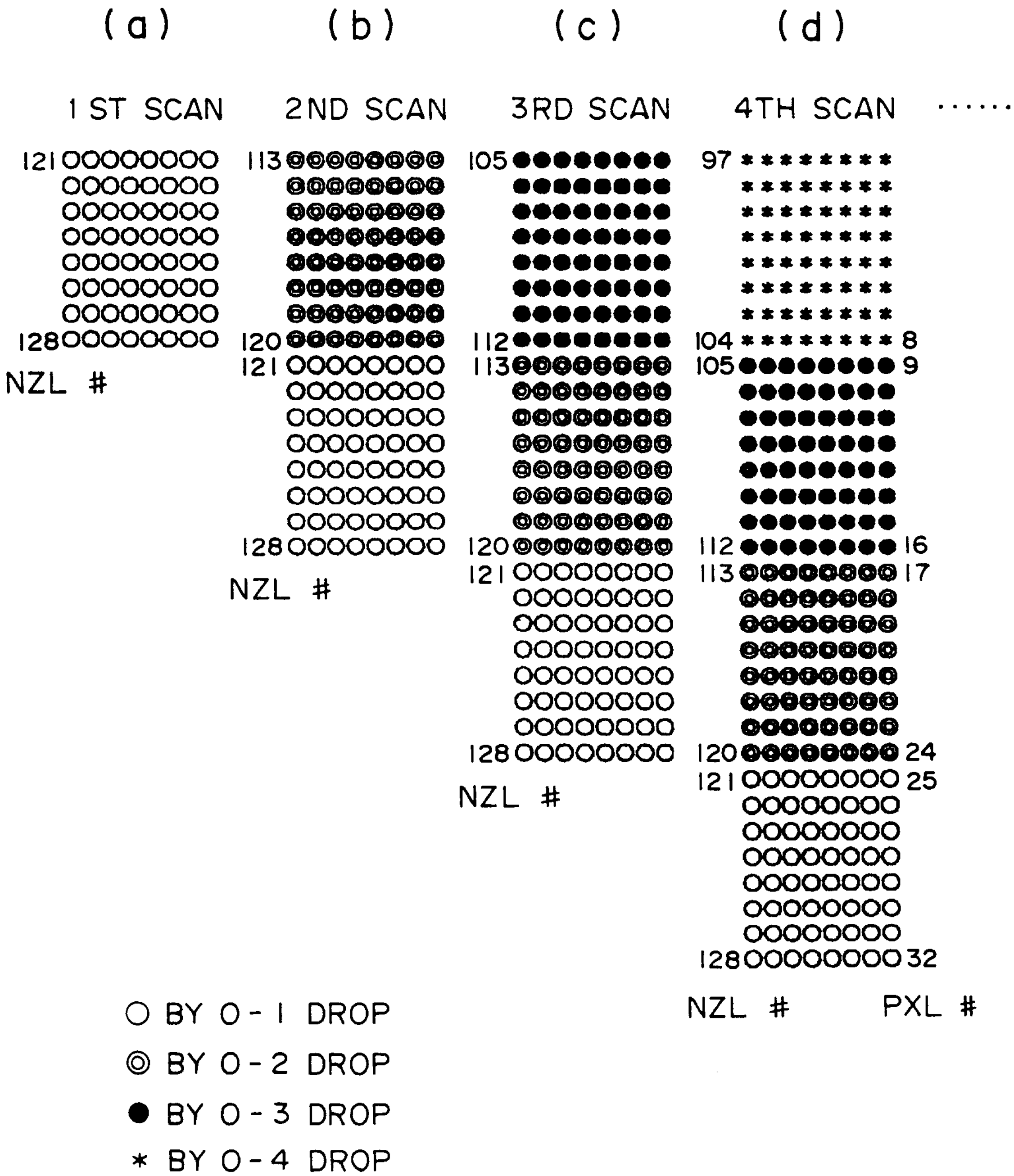
(a)
(b)
(c)
(d)
1 ST SCAN
2ND SCAN
3RD SCAN
4TH SCAN
121
128
NZL #
113
120
121
128
NZL #
105
112
113
120
121
128
NZL #
97
104
105
112
113
120
121
128
8
9
16
17
24
25
32
NZL #
PXL #
○ BY 0 - 1 DROP
◎ BY 0 - 2 DROP
● BY 0 - 3 DROP
* BY 0 - 4 DROP

FIG. 3

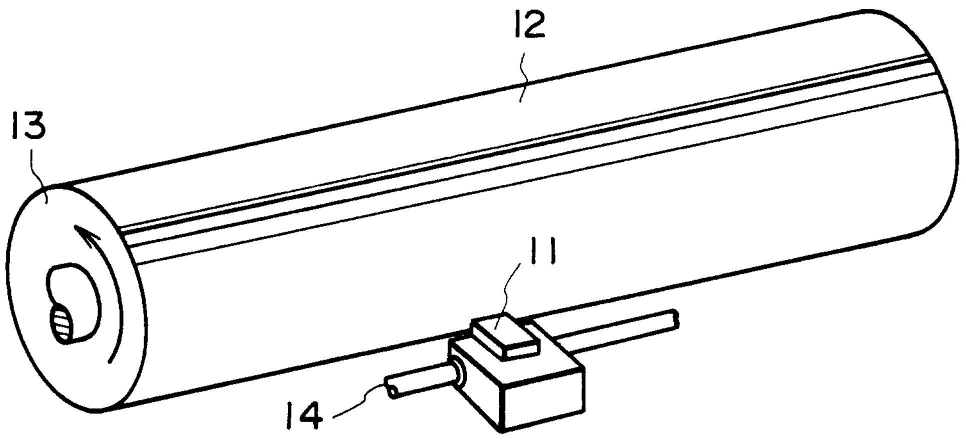


FIG. 4

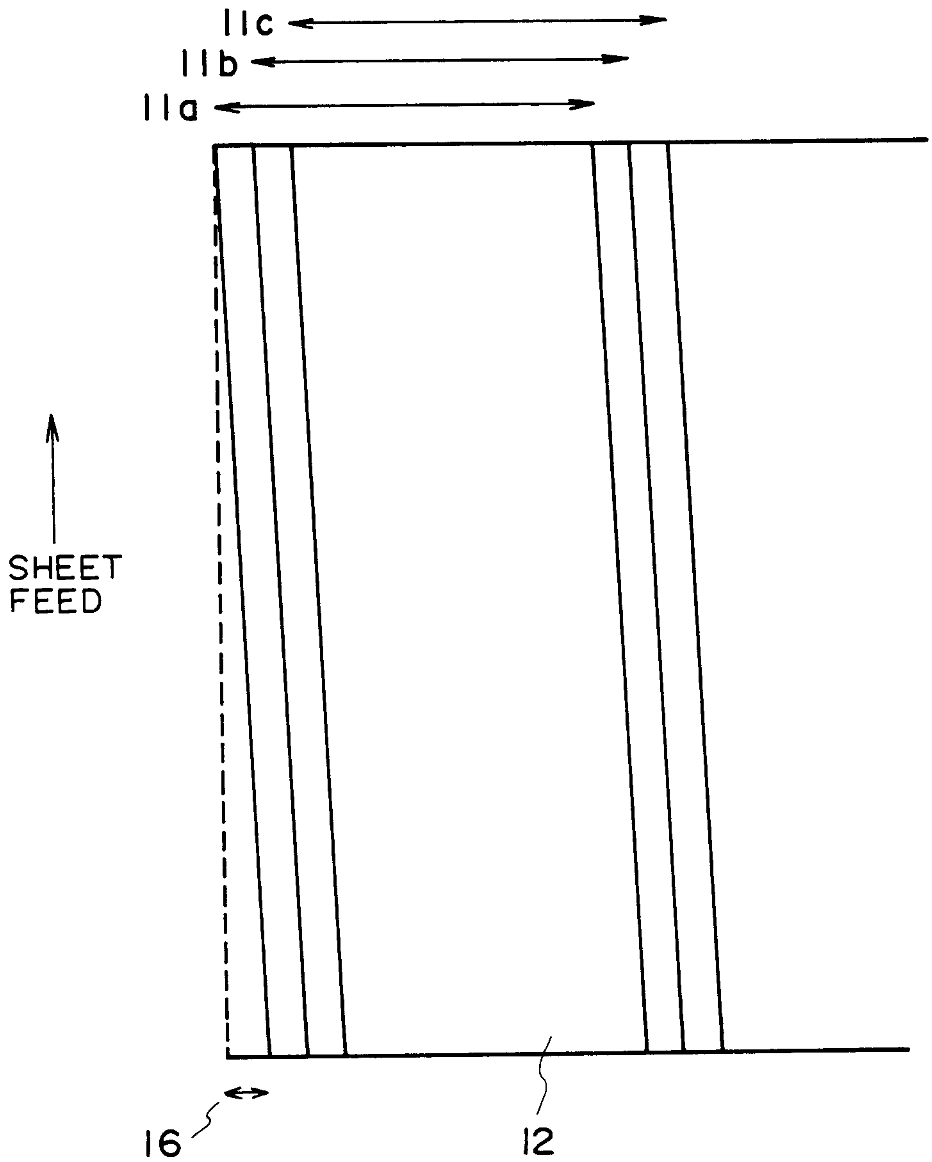


FIG. 6

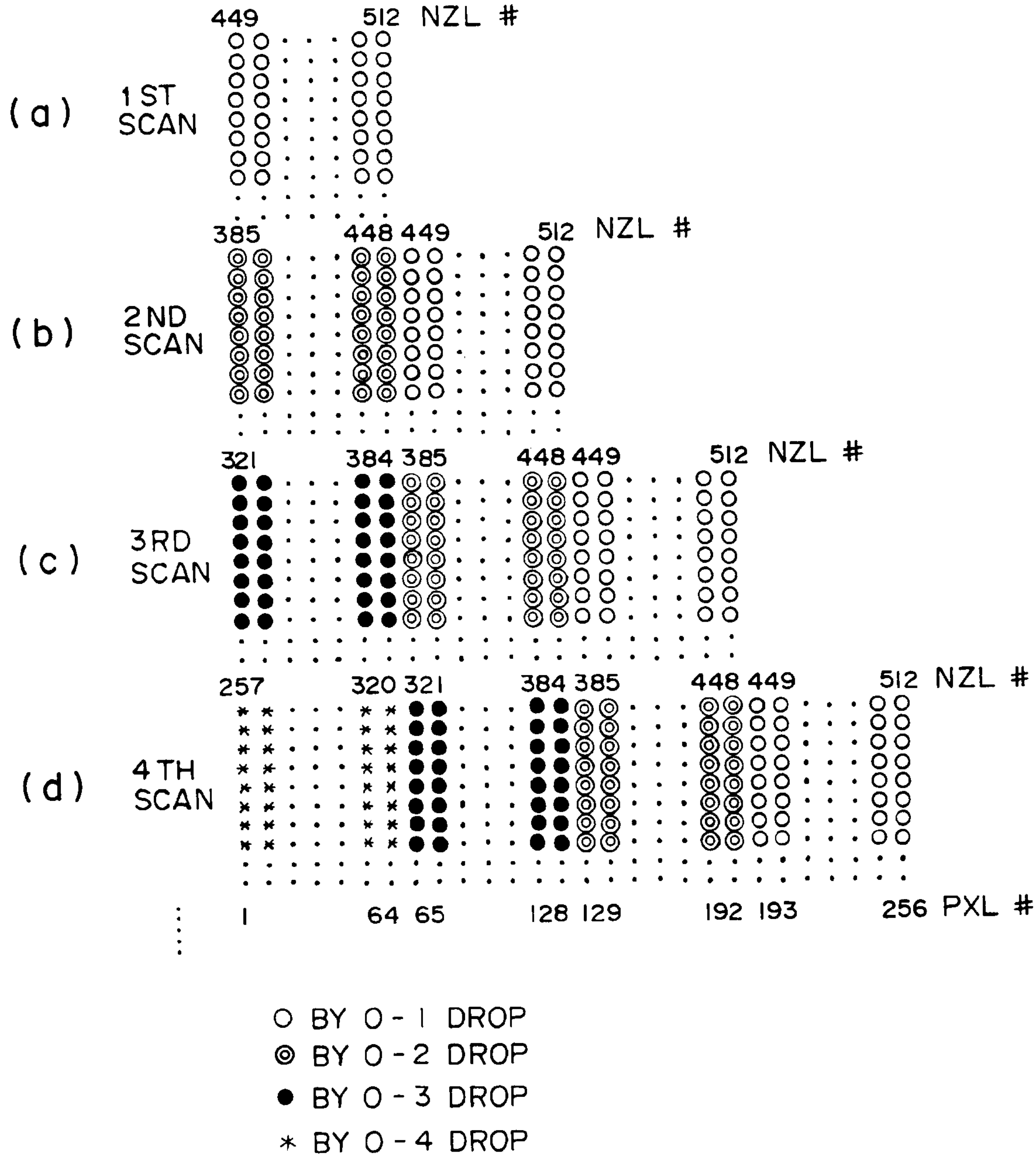
449
512 NZL #
(a)
1 ST
SCAN
385
448 449
512 NZL #
(b)
2ND
SCAN
321
384 385
448 449
512 NZL #
(c)
3RD
SCAN
257
320 321
384 385
448 449
512 NZL #
(d)
4TH
SCAN
1
64 65
128 129
192 193
256 PXL #
○ BY 0 - 1 DROP
◎ BY 0 - 2 DROP
● BY 0 - 3 DROP
* BY 0 - 4 DROP

FIG. 5

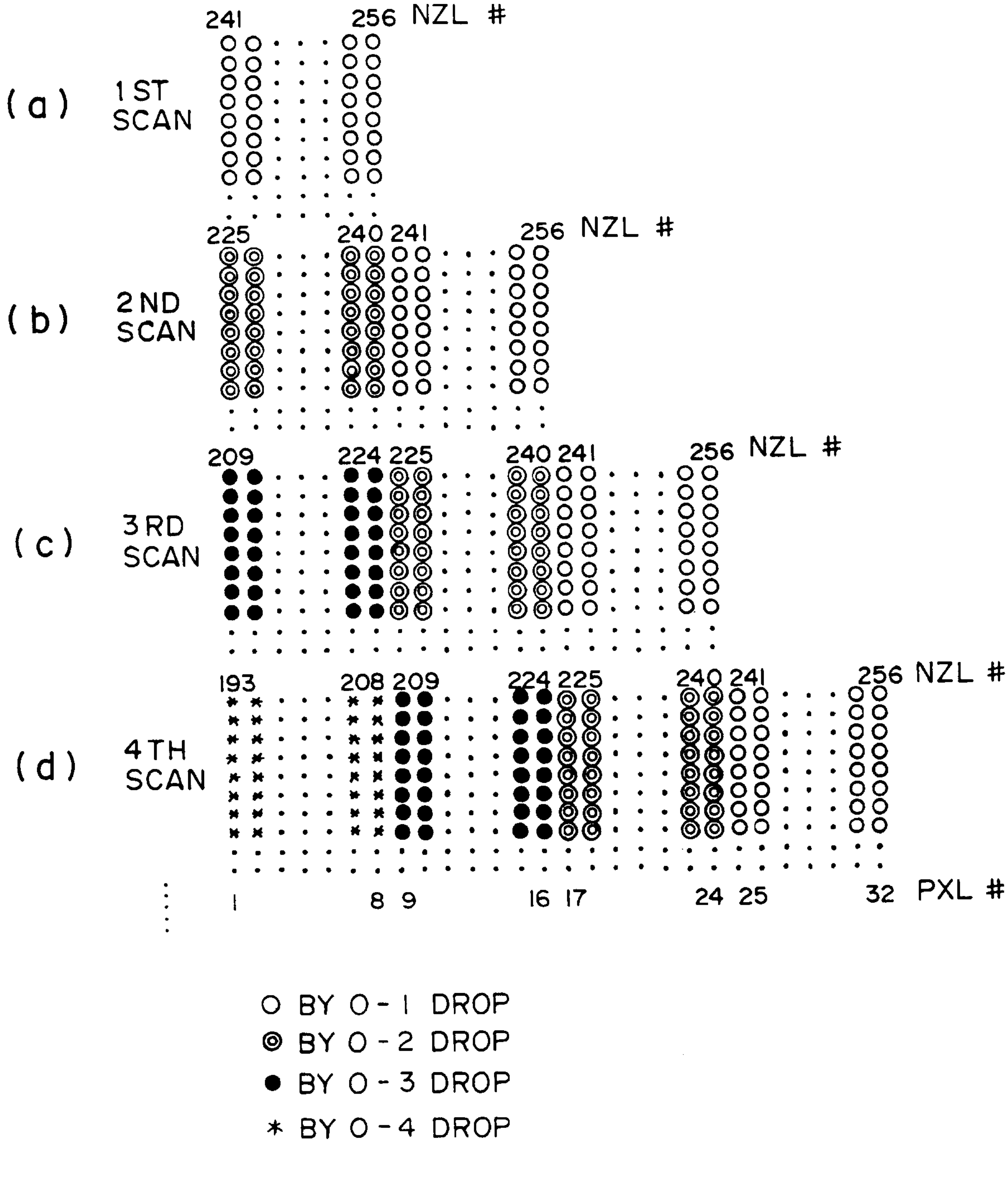
241
256 NZL #
(a)
1ST SCAN
225
240 241
256 NZL #
(b)
2ND SCAN
209
224 225
240 241
256 NZL #
(c)
3RD SCAN
193
208 209
224 225
240 241
256 NZL #
(d)
4TH SCAN
1
8 9
16 17
24 25
32 PXL #
○ BY 0-1 DROP
◎ BY 0-2 DROP
● BY 0-3 DROP
* BY 0-4 DROP

FIG. 7

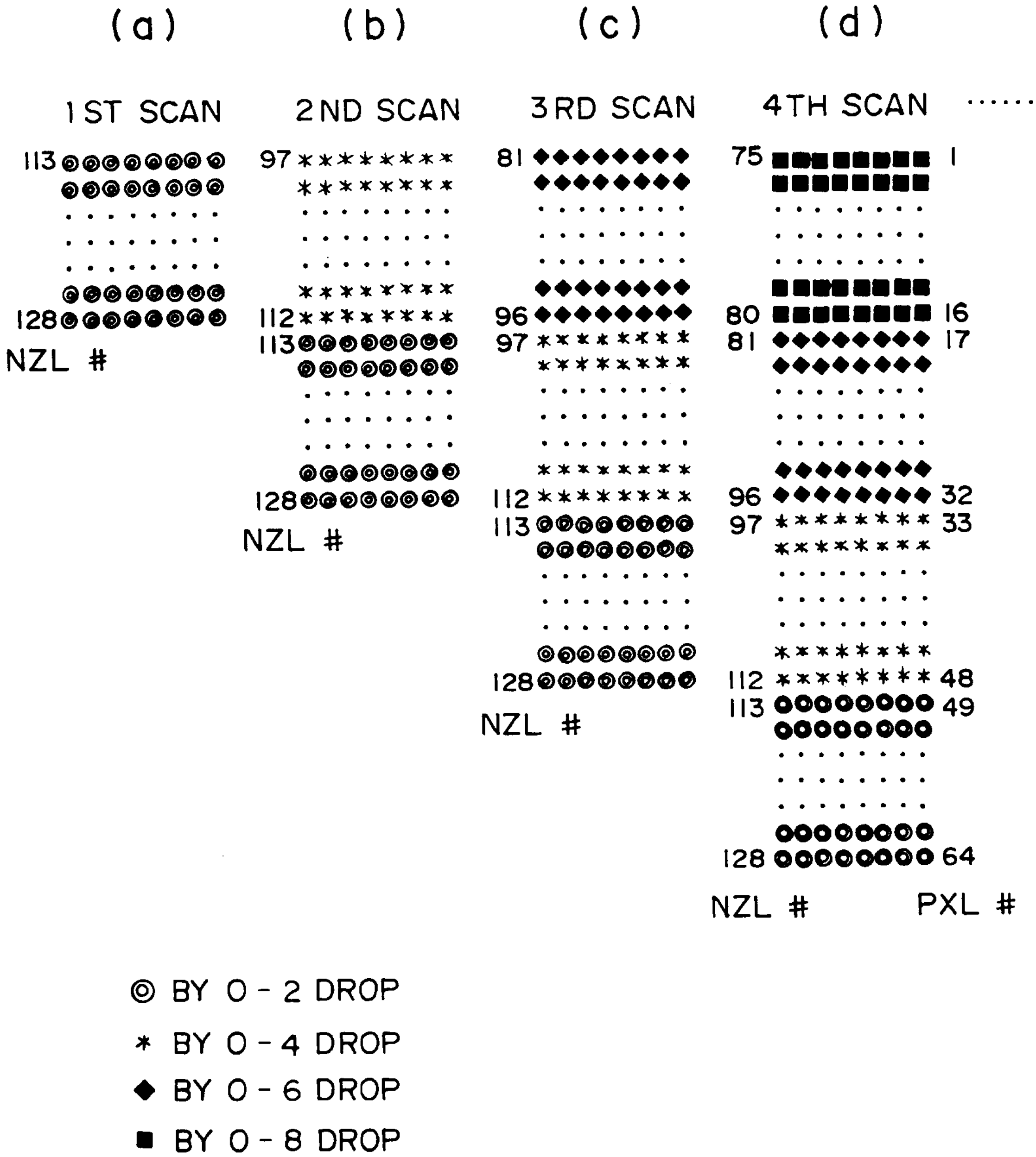
(a)
(b)
(c)
(d)
1ST SCAN
2ND SCAN
3RD SCAN
4TH SCAN
113
128
97
112
113
128
81
96
97
112
113
128
75
80
81
96
97
112
113
128
1
16
17
32
33
48
49
64
NZL #
NZL #
NZL #
NZL #
PXL #
◎ BY 0 - 2 DROP
* BY 0 - 4 DROP
◆ BY 0 - 6 DROP
■ BY 0 - 8 DROP

FIG. 8

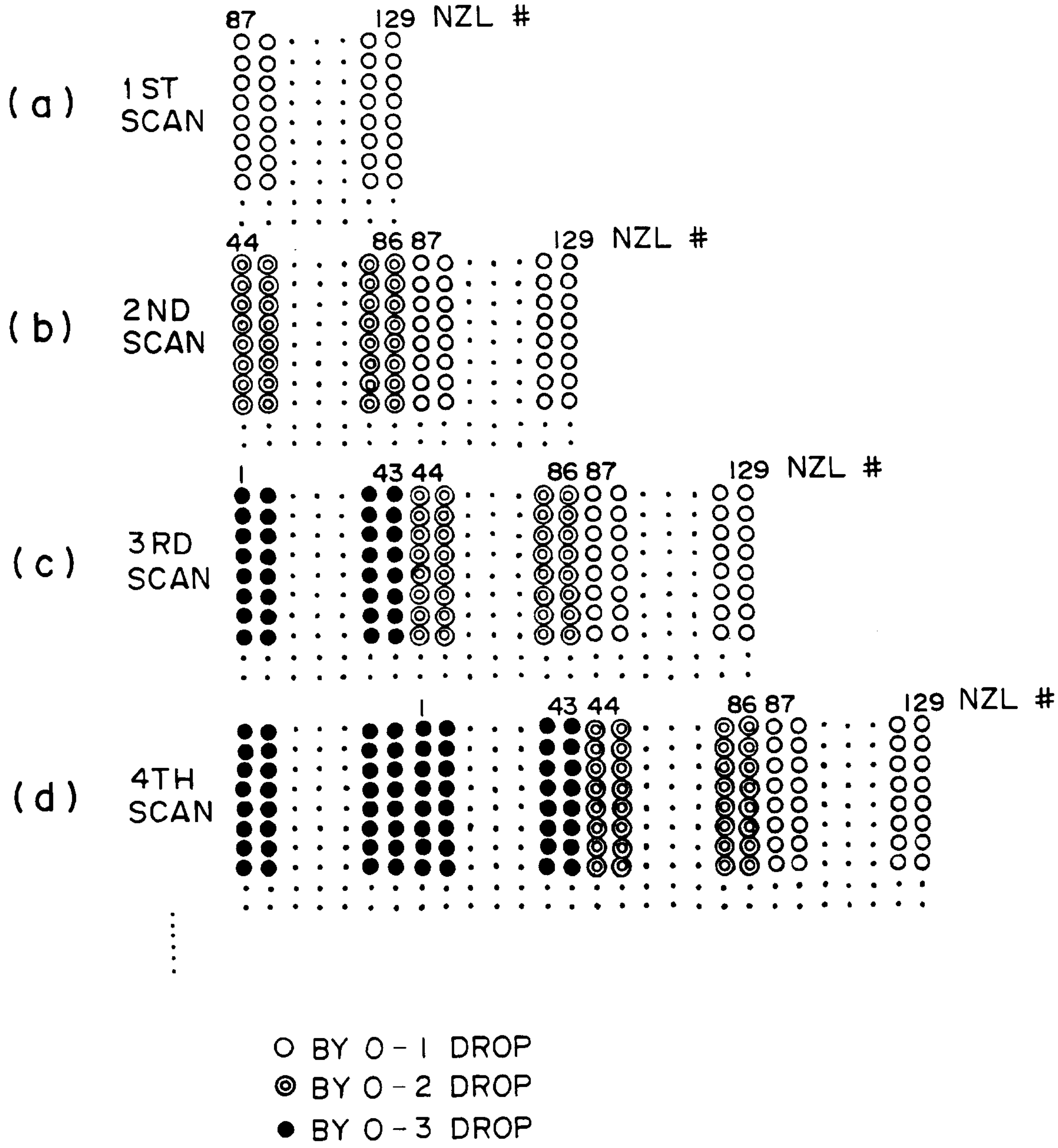
87
129 NZL #
(a)
1ST SCAN
44
86 87
129 NZL #
(b)
2ND SCAN
1
43 44
86 87
129 NZL #
(c)
3RD SCAN
1
43 44
86 87
129 NZL #
(d)
4TH SCAN
○ BY 0-1 DROP
◎ BY 0-2 DROP
● BY 0-3 DROP

FIG. 9

| | EMB 1 | EMB 2 | EMB 3 | EMB 4 | EMB 5 | EMB 6 |
|---|---|---|---|---|---|---|
| NOZZLE No. (n) | 128 | 512 | 256 | 128 | 129 | 128 |
| MAX DROP No. (k) PER 1 PXL & 1 SCAN | 1 | 1 | 1 | 2 | 1 | 4 |
| SCAN No. (n) FOR 1 PXL | 16 | 8 | 16 | 8 | 3 | 4 |
| TONE LEVEL No.-1 (g-1) | 16 | 8 | 16 | 16 | 3 | 16 |
| SUB-SCAN (NOZZLE No.) (s) | 8 | 64 | 16 | 16 | 43 | 32 |
| REC SYSTEM | SER. | DRUM | DRUM (SPIRAL) | SER. | DRUM (SPIRAL) | SER. |

FIG. 10

| kx, y | 16 | 15 | 14 | 13 | 12 | 11 | 10 | | 2 | 1 | 0 |
|---|---|---|---|---|---|---|---|---|---|---|---|
| $A_1$ | 4 | 4 | 4 | 4 | 3 | 3 | 3 | | 1 | 1 | 0 |
| $A_2$ | 4 | 4 | 4 | 4 | 3 | 3 | 3 | | 1 | 0 | 0 |
| $A_3$ | 4 | 4 | 4 | 4 | 3 | 3 | 3 | ------ | 0 | 0 | 0 |
| $A_4$ | 4 | 3 | 2 | 1 | 3 | 2 | 1 | | 0 | 0 | 0 |

FIG. 11

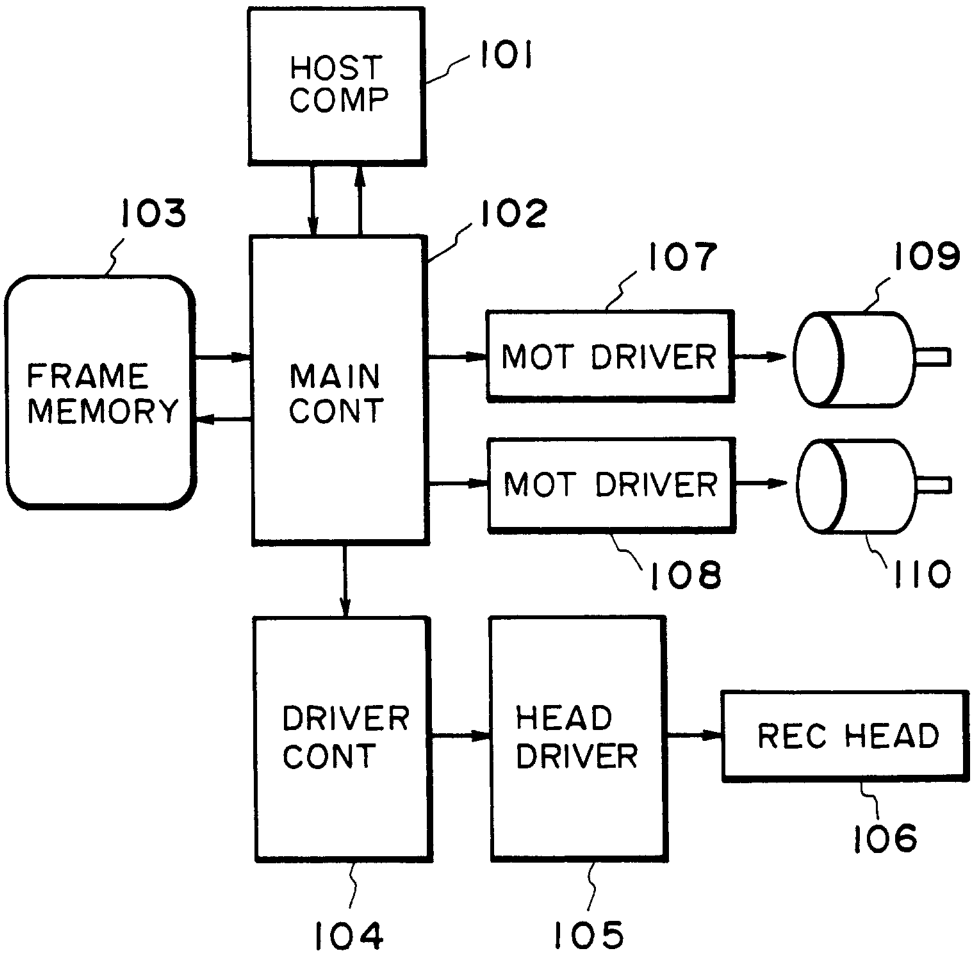
HOST COMP
101
103
102
FRAME MEMORY
MAIN CONT
107
109
MOT DRIVER
MOT DRIVER
108
110
DRIVER CONT
HEAD DRIVER
REC HEAD
106
104
105

FIG. 12

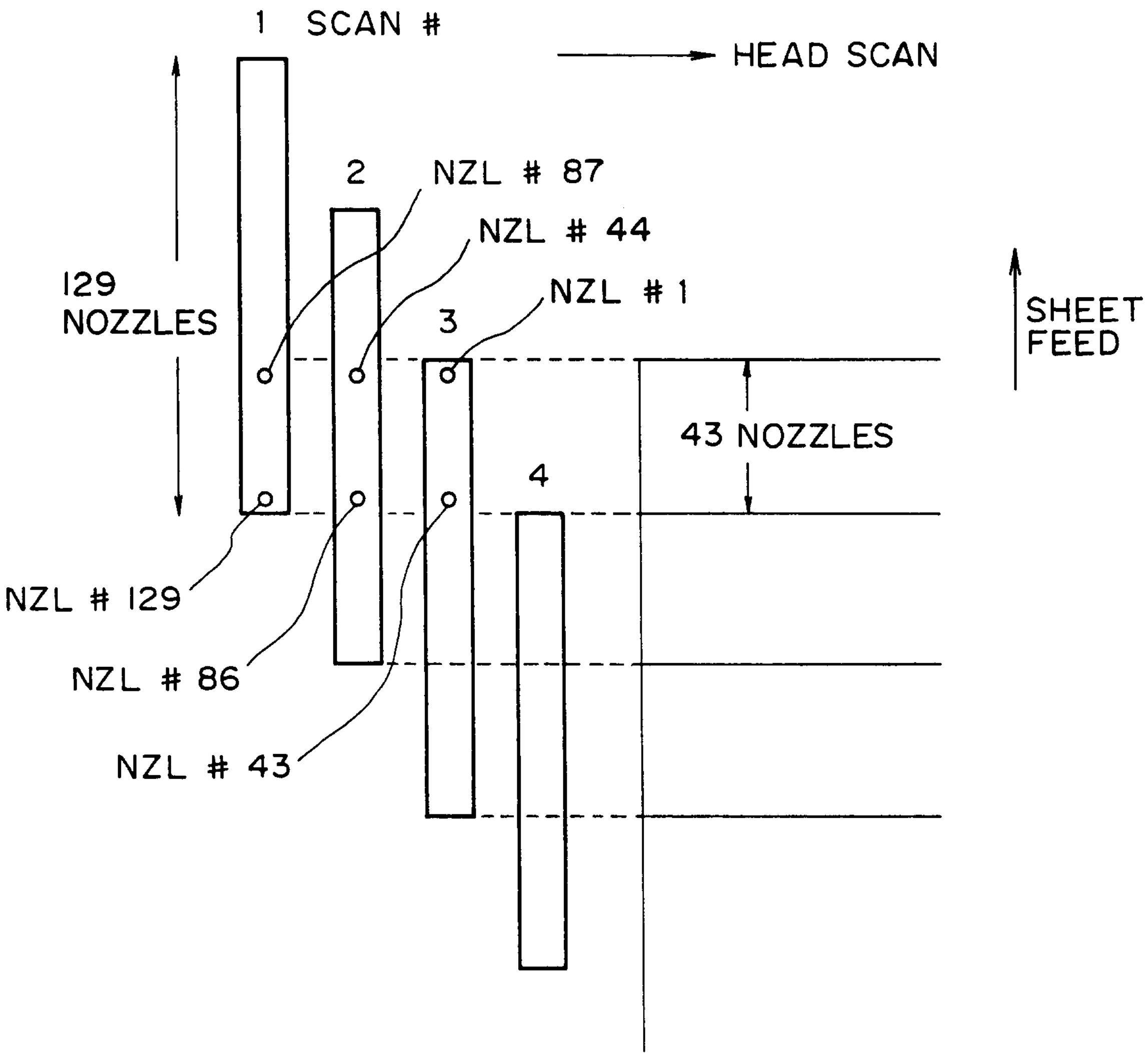
1 SCAN #
HEAD SCAN
2
NZL # 87
NZL # 44
129
NOZZLES
NZL # 1
3
SHEET
FEED
43 NOZZLES
4
NZL # 129
NZL # 86
NZL # 43

FIG. 13

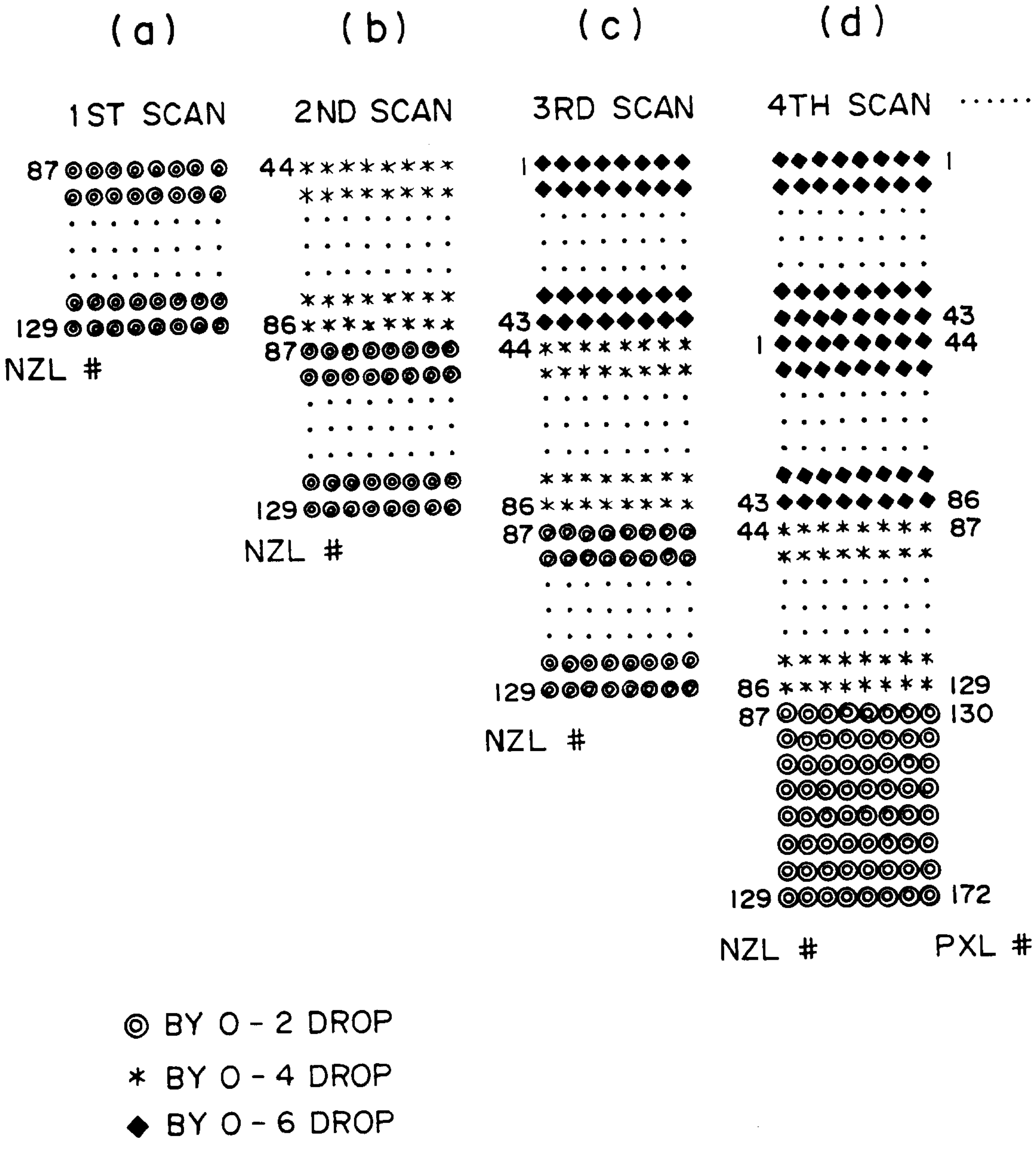
(a)
(b)
(c)
(d)
1ST SCAN
2ND SCAN
3RD SCAN
4TH SCAN ......
87
129
NZL #
44
86
87
129
NZL #
1
43
44
86
87
129
NZL #
1
43
44
86
87
129
NZL #
1
43
44
86
87
129
130
172
PXL #
◎ BY 0 - 2 DROP
* BY 0 - 4 DROP
◆ BY 0 - 6 DROP

FIG. 14

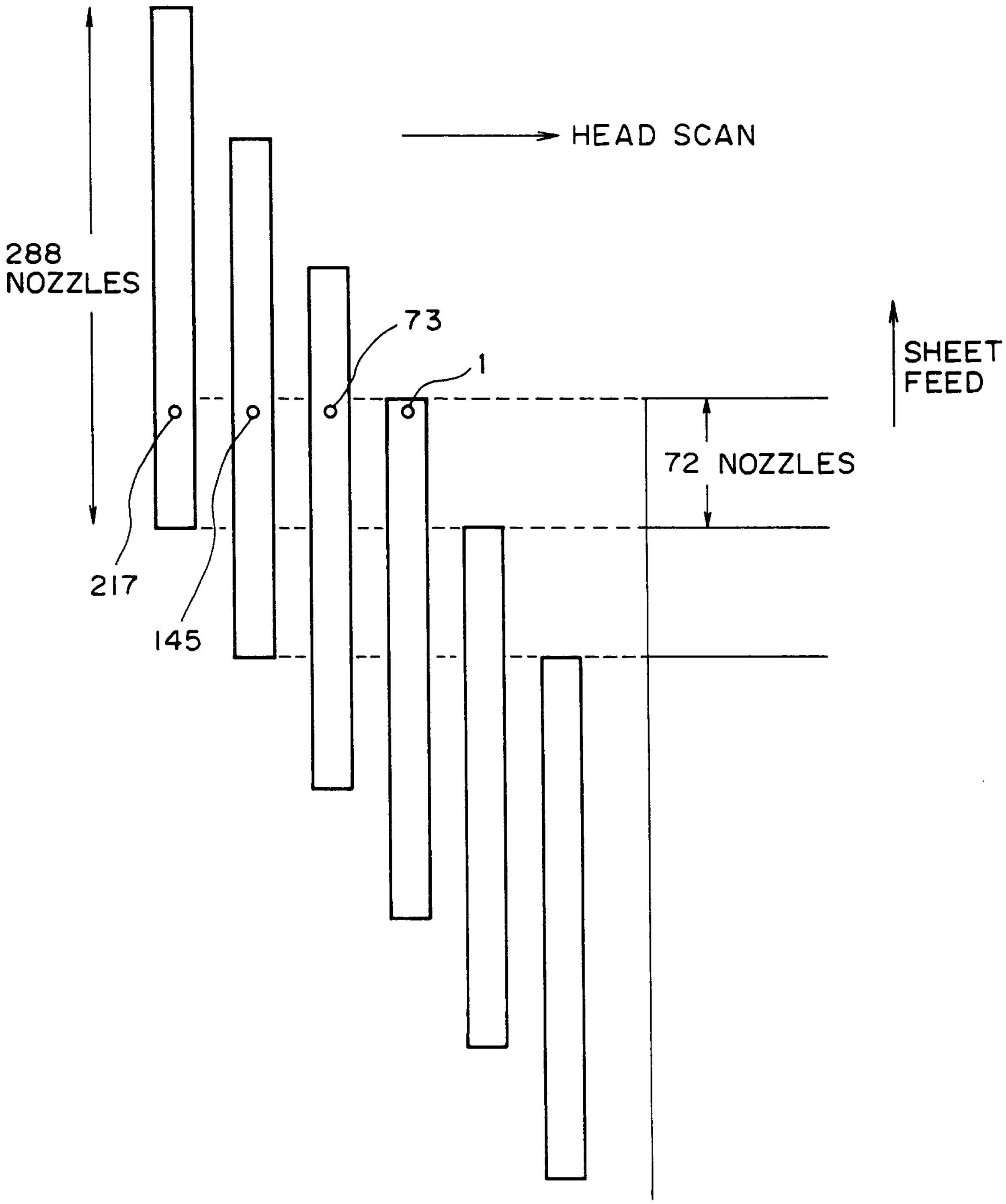


FIG. 15

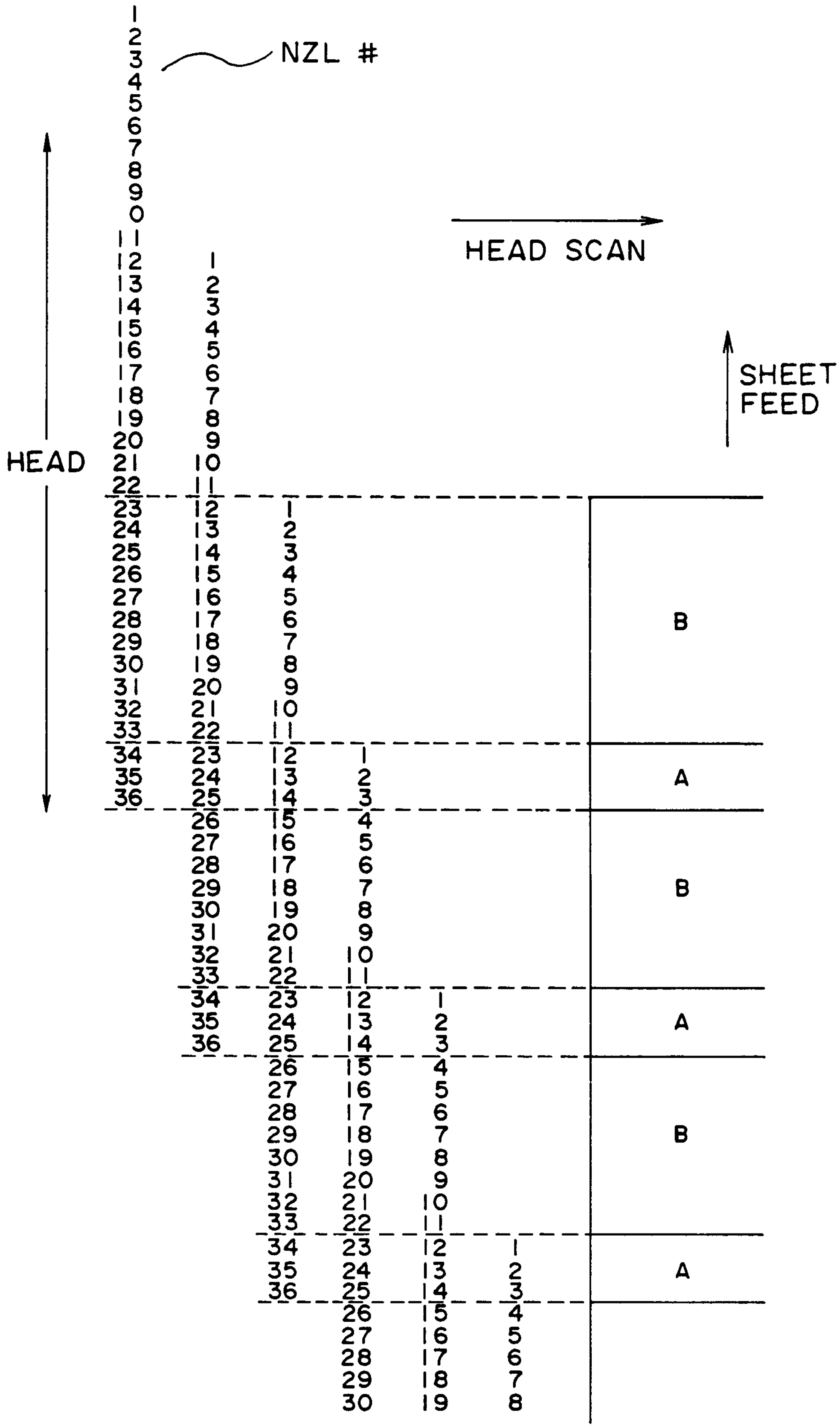


FIG. 16

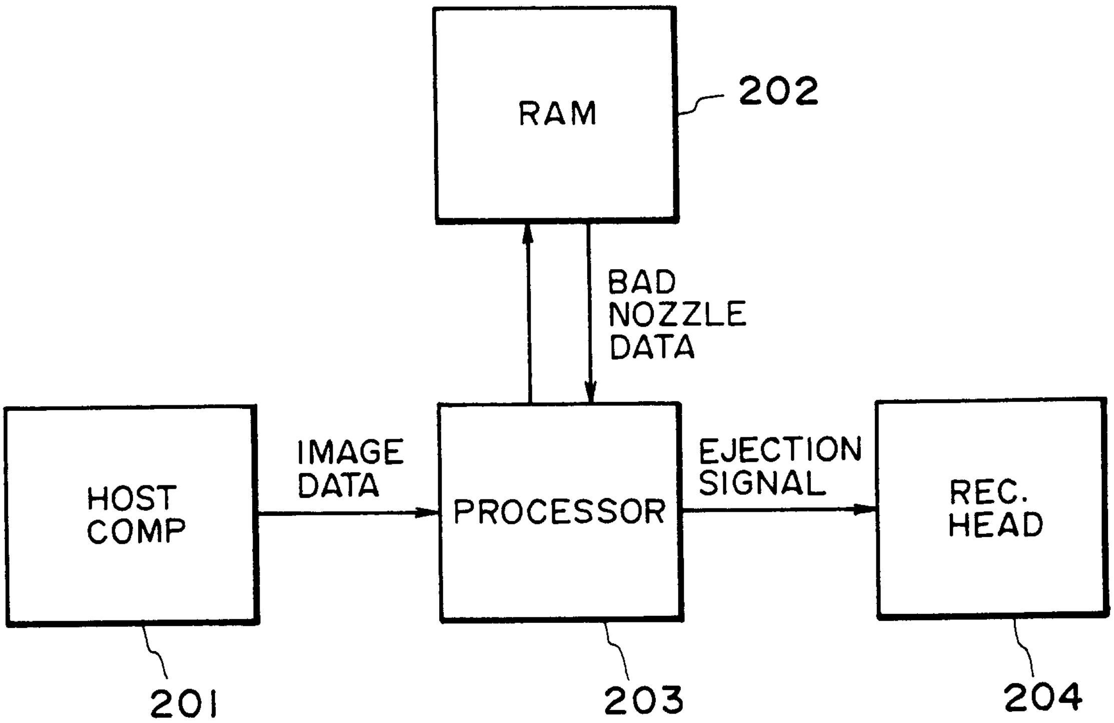
RAM
202
BAD
NOZZLE
DATA
HOST
COMP
IMAGE
DATA
PROCESSOR
EJECTION
SIGNAL
REC.
HEAD
201
203
204

F I G. 17

f (m, n) = 1 ··· EJECTED    f (m, n) = 0 ··· NOT EJECTED

| m \ n (m TH TONE / n TH DROPS) | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 |
| 1 | 1 | 0 | 0 | 0 | 0 | 0 | 0 | 0 | 0 | 0 | 0 | 0 | 0 | 0 | 0 | 0 |
| 2 | 0 | 1 | 1 | 0 | 0 | 0 | 0 | 0 | 0 | 0 | 0 | 0 | 0 | 0 | 0 | 0 |
| 3 | 0 | 0 | 0 | 1 | 1 | 1 | 0 | 0 | 0 | 0 | 0 | 0 | 0 | 0 | 0 | 0 |
| 4 | 0 | 0 | 0 | 0 | 0 | 0 | 1 | 1 | 1 | 1 | 0 | 0 | 0 | 0 | 0 | 0 |
| 5 | 0 | 0 | 0 | 0 | 0 | 0 | 0 | 0 | 0 | 0 | 1 | 1 | 1 | 1 | 1 | 0 |
| 6 | 1 | 1 | 1 | 1 | 1 | 0 | 0 | 0 | 0 | 0 | 0 | 0 | 0 | 0 | 0 | 1 |
| 7 | 0 | 0 | 0 | 0 | 0 | 1 | 1 | 1 | 1 | 1 | 1 | 1 | 0 | 0 | 0 | 0 |
| 8 | 1 | 1 | 1 | 1 | 0 | 0 | 0 | 0 | 0 | 0 | 0 | 0 | 1 | 1 | 1 | 1 |
| 9 | 0 | 0 | 0 | 0 | 1 | 1 | 1 | 1 | 1 | 1 | 1 | 1 | 1 | 0 | 0 | 0 |
| 10 | 1 | 1 | 1 | 1 | 1 | 1 | 1 | 0 | 0 | 0 | 0 | 0 | 0 | 1 | 1 | 1 |
| 11 | 1 | 1 | 0 | 0 | 0 | 0 | 0 | 1 | 1 | 1 | 1 | 1 | 1 | 1 | 1 | 1 |
| 12 | 0 | 0 | 1 | 1 | 1 | 1 | 1 | 1 | 1 | 1 | 1 | 1 | 1 | 1 | 0 | 0 |
| 13 | 1 | 1 | 1 | 1 | 1 | 1 | 1 | 1 | 1 | 1 | 1 | 0 | 0 | 0 | 1 | 1 |
| 14 | 1 | 1 | 1 | 1 | 1 | 1 | 1 | 1 | 1 | 0 | 0 | 1 | 1 | 1 | 1 | 1 |
| 15 | 1 | 1 | 1 | 1 | 1 | 1 | 1 | 1 | 0 | 1 | 1 | 1 | 1 | 1 | 1 | 1 |
| 16 | 1 | 1 | 1 | 1 | 1 | 1 | 1 | 1 | 1 | 1 | 1 | 1 | 1 | 1 | 1 | 1 |
| $\sum_{m=0}^{N} f(m,n)$ | 9 | 9 | 9 | 9 | 9 | 9 | 9 | 9 | 8 | 8 | 8 | 8 | 8 | 8 | 8 | 8 |

FIG. 18

| f ( m , n ) = 1 ··· EJECTED<br>f ( m , n ) = 0 ··· NOT EJECTED | | | | |
|---|---|---|---|---|
| m \ n | n TH DROP 1 | 2 | 3 | 4 |
| TONE 0 | 0 | 0 | 0 | 0 |
| 1 | 1 | 0 | 0 | 0 |
| 2 | 0 | 1 | 1 | 0 |
| 3 | 0 | 1 | 1 | 1 |
| 4 | 1 | 1 | 1 | 1 |
| $\sum_{m=0}^{N} f(m,n)$ | 2 | 3 | 3 | 2 |

FIG. 19

| TONE m | O D |
|---|---|
| 0 | 0. 02 |
| 1 | 0. 55 |
| 2 | 0. 95 |
| 3 | 1. 24 |
| 4 | 1. 38 |

FIG. 20

f (m, n) = 1 ··· EJECTED    f (m, n) = 0 ··· NOT EJECTED

| n / m | | n TH DROPS | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 |
| m TH TONE | 0 | 0 | 0 | 0 | 0 | 0 | 0 | 0 | 0 | 0 | 0 | 0 | 0 | 0 | 0 | 0 | 0 |
| | 1 | 1 | 0 | 0 | 0 | 0 | 0 | 0 | 0 | 0 | 0 | 0 | 0 | 0 | 0 | 0 | 0 |
| | 2 | 0 | 0 | 1 | 0 | 1 | 0 | 0 | 0 | 0 | 0 | 0 | 0 | 0 | 0 | 0 | 0 |
| | 3 | 0 | 0 | 0 | 0 | 0 | 0 | 1 | 0 | 1 | 0 | 1 | 0 | 0 | 0 | 0 | 0 |
| | 4 | 1 | 0 | 0 | 0 | 0 | 0 | 0 | 0 | 0 | 0 | 0 | 0 | 1 | 0 | 1 | 0 |
| | 5 | 0 | 0 | 0 | 0 | 1 | 0 | 1 | 0 | 1 | 0 | 1 | 0 | 1 | 0 | 0 | 0 |
| | 6 | 1 | 0 | 1 | 0 | 1 | 0 | 1 | 0 | 1 | 0 | 0 | 0 | 0 | 0 | 1 | 0 |
| | 7 | 1 | 0 | 1 | 0 | 1 | 0 | 1 | 0 | 1 | 0 | 1 | 0 | 0 | 0 | 1 | 0 |
| | 8 | 1 | 0 | 1 | 0 | 1 | 0 | 1 | 0 | 1 | 0 | 1 | 0 | 1 | 0 | 1 | 0 |
| | 9 | 1 | 0 | 1 | 0 | 1 | 0 | 1 | 0 | 1 | 0 | 1 | 0 | 1 | 1 | 1 | 0 |
| | 10 | 1 | 0 | 1 | 0 | 1 | 0 | 1 | 0 | 1 | 0 | 1 | 1 | 1 | 1 | 1 | 0 |
| | 11 | 1 | 1 | 1 | 1 | 1 | 0 | 1 | 0 | 1 | 0 | 1 | 0 | 1 | 0 | 1 | 1 |
| | 12 | 1 | 0 | 1 | 0 | 1 | 1 | 1 | 1 | 1 | 1 | 1 | 1 | 1 | 0 | 1 | 0 |
| | 13 | 1 | 1 | 1 | 1 | 1 | 1 | 1 | 0 | 1 | 0 | 1 | 0 | 1 | 1 | 1 | 1 |
| | 14 | 1 | 1 | 1 | 0 | 1 | 0 | 1 | 1 | 1 | 1 | 1 | 1 | 1 | 1 | 1 | 1 |
| | 15 | 1 | 0 | 1 | 1 | 1 | 1 | 1 | 1 | 1 | 1 | 1 | 1 | 1 | 1 | 1 | 1 |
| | 16 | 1 | 1 | 1 | 1 | 1 | 1 | 1 | 1 | 1 | 1 | 1 | 1 | 1 | 1 | 1 | 1 |
| $\sum_{m=0}^{N} f(m,n)$ | | 13 | 4 | 13 | 4 | 13 | 4 | 13 | 4 | 13 | 4 | 12 | 5 | 11 | 6 | 12 | 5 |
| SUM | | 17 | 17 | 17 | 17 | 17 | 17 | 17 | 17 | 17 | 17 | 17 | 17 | 17 | 17 | 17 | 17 |

FIG. 21

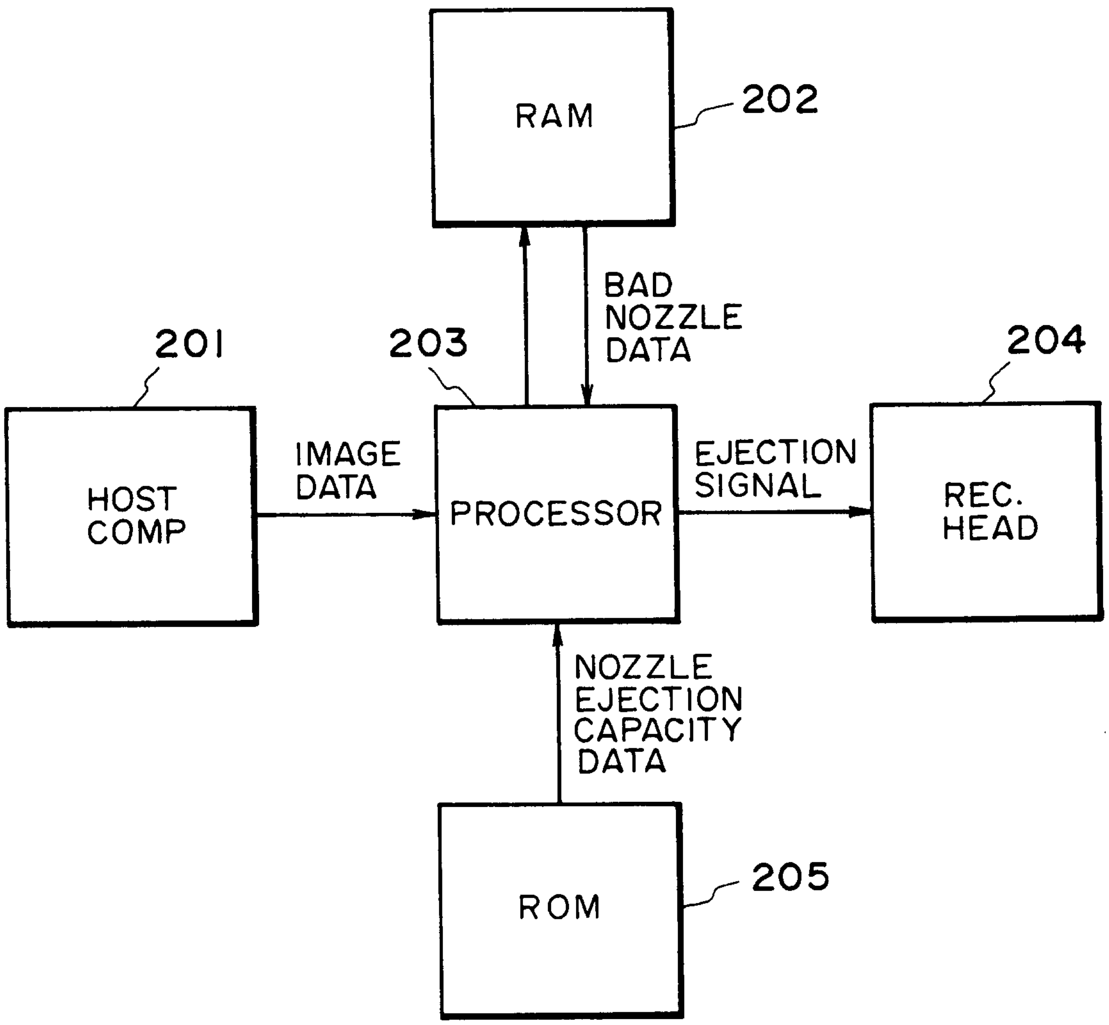
RAM
202
BAD NOZZLE DATA
201
203
204
HOST COMP
IMAGE DATA
PROCESSOR
EJECTION SIGNAL
REC. HEAD
NOZZLE EJECTION CAPACITY DATA
ROM
205

FIG. 22

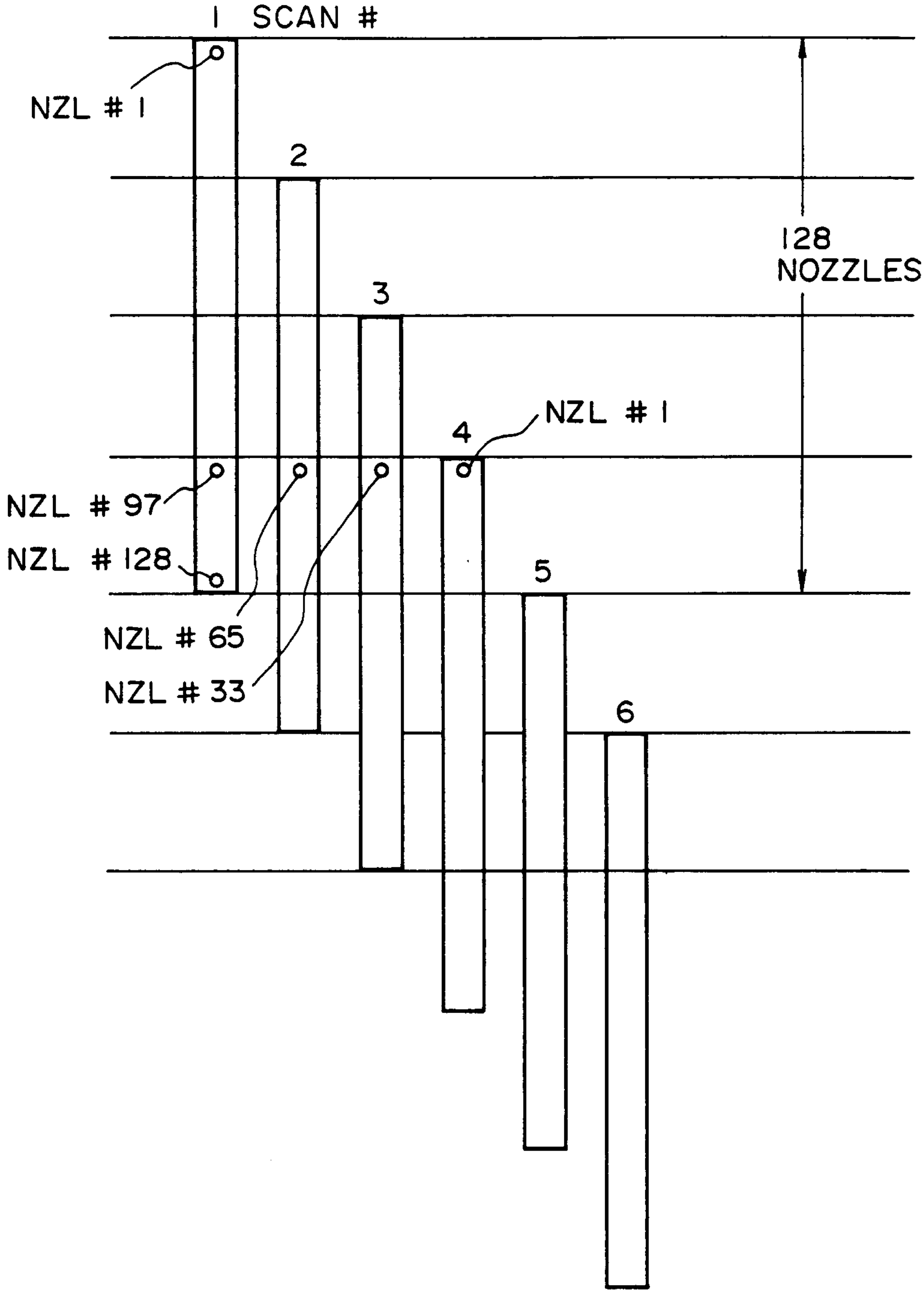


FIG. 23

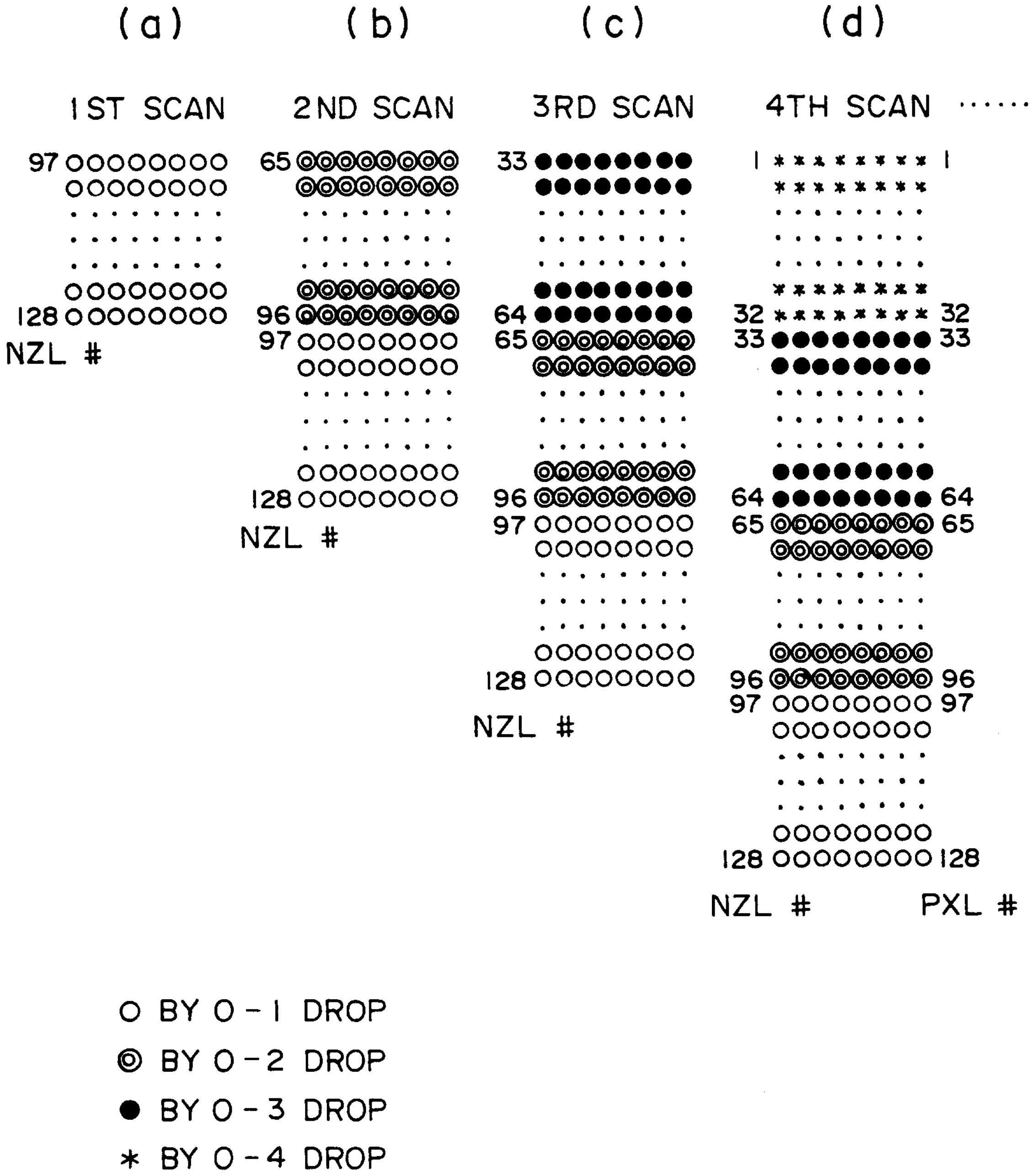
(a)
(b)
(c)
(d)
1ST SCAN
2ND SCAN
3RD SCAN
4TH SCAN ······
97
128
NZL #
65
96
97
128
NZL #
33
64
65
96
97
128
NZL #
1
32
33
64
65
96
97
128
1
32
33
64
65
96
97
128
NZL #
PXL #
○ BY 0-1 DROP
◎ BY 0-2 DROP
● BY 0-3 DROP
* BY 0-4 DROP

FIG. 24

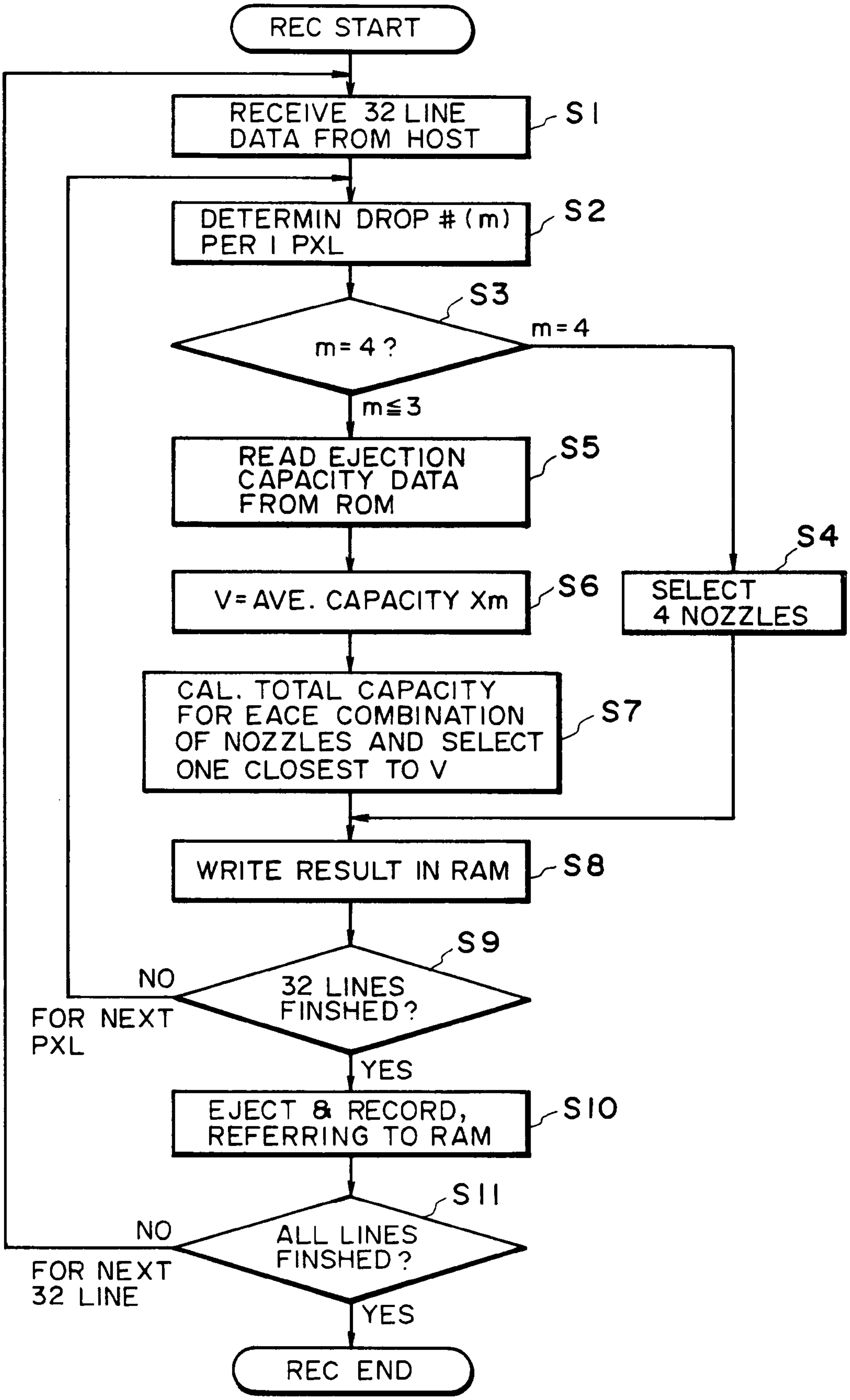
REC START
RECEIVE 32 LINE DATA FROM HOST
S1
DETERMIN DROP # (m) PER 1 PXL
S2
m=4 ?
S3
m=4
m≦3
READ EJECTION CAPACITY DATA FROM ROM
S5
S4
SELECT 4 NOZZLES
V=AVE. CAPACITY Xm
S6
CAL. TOTAL CAPACITY FOR EACE COMBINATION OF NOZZLES AND SELECT ONE CLOSEST TO V
S7
WRITE RESULT IN RAM
S8
32 LINES FINSHED?
S9
NO
FOR NEXT PXL
YES
EJECT & RECORD, REFERRING TO RAM
S10
ALL LINES FINSHED?
S11
NO
FOR NEXT 32 LINE
YES
REC END

FIG. 25

| EJECTED DROP # | COMBINATION OF USED NOZZLES | TOTAL EJECTION (pl) |
|---|---|---|
| 1 | 1<br>33<br>65<br>97 | 8<br>10<br>10<br>12 |
| 2 | 1, 33<br>1, 65<br>1, 97<br>33, 65<br>33, 97<br>65, 97 | 18<br>18<br>20<br>20<br>22<br>22 |
| 3 | 1, 33, 65<br>1, 33, 67<br>1, 65, 97<br>33, 65, 97 | 28<br>30<br>30<br>32 |
| 4 | 1, 33, 65, 97 | 40 |

FIG. 26

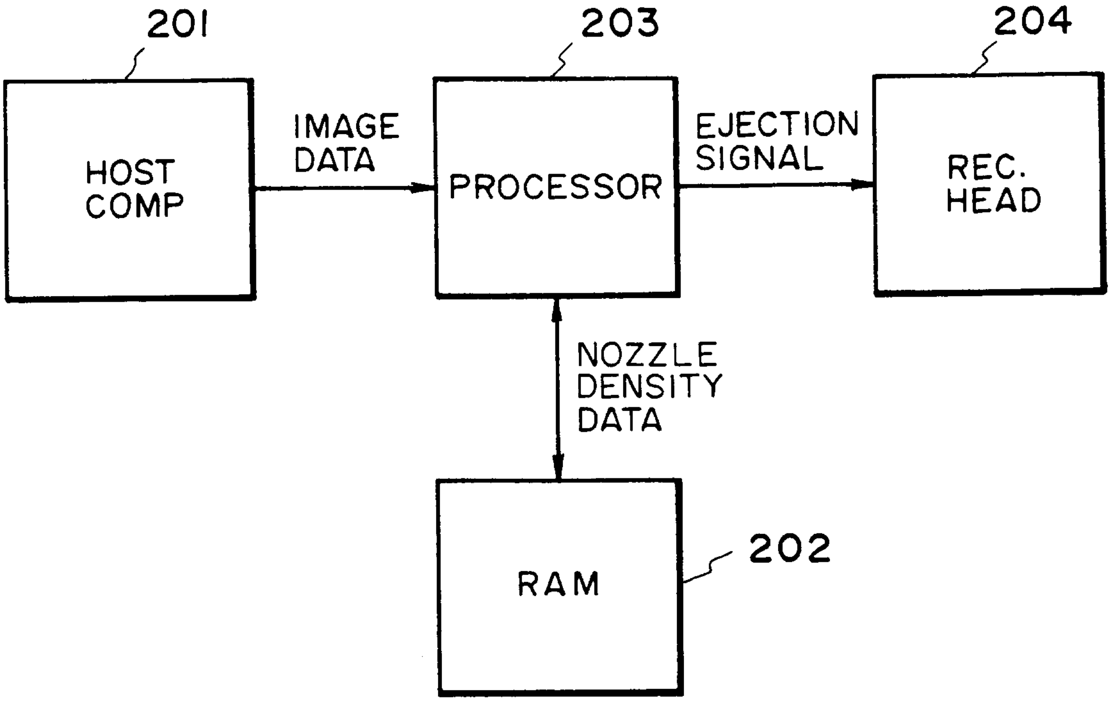
201
203
204
HOST COMP
IMAGE DATA
PROCESSOR
EJECTION SIGNAL
REC. HEAD
NOZZLE DENSITY DATA
RAM
202

FIG. 27

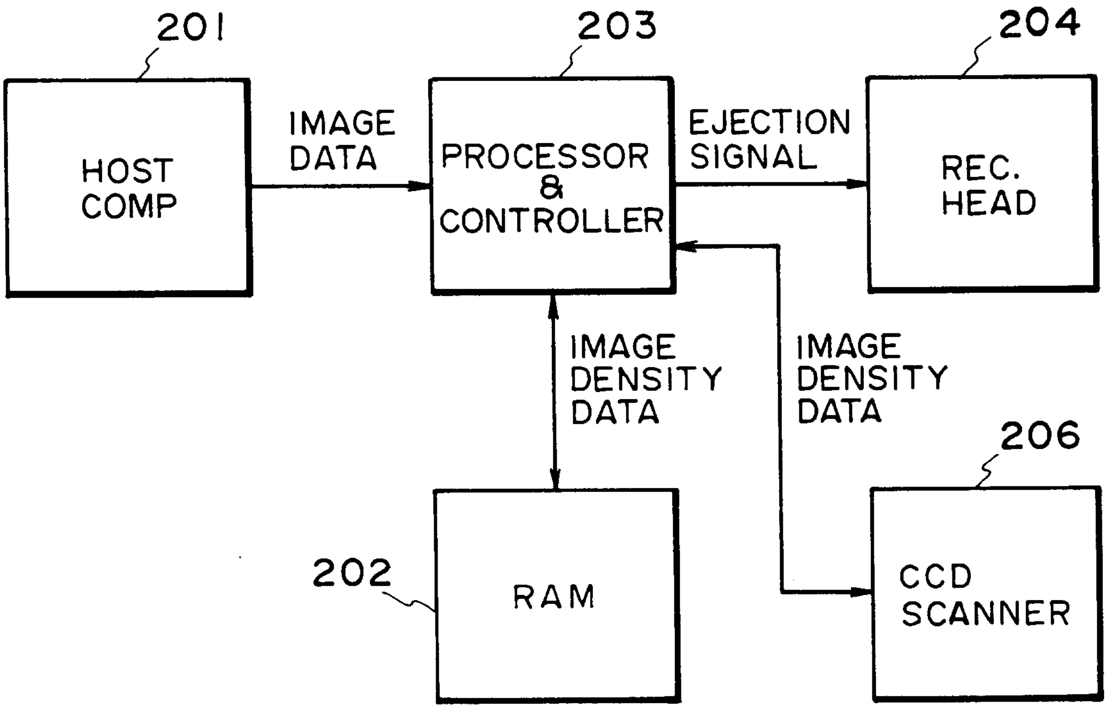
201
203
204
HOST COMP
IMAGE DATA
PROCESSOR & CONTROLLER
EJECTION SIGNAL
REC. HEAD
IMAGE DENSITY DATA
IMAGE DENSITY DATA
206
202
RAM
CCD SCANNER

FIG. 28

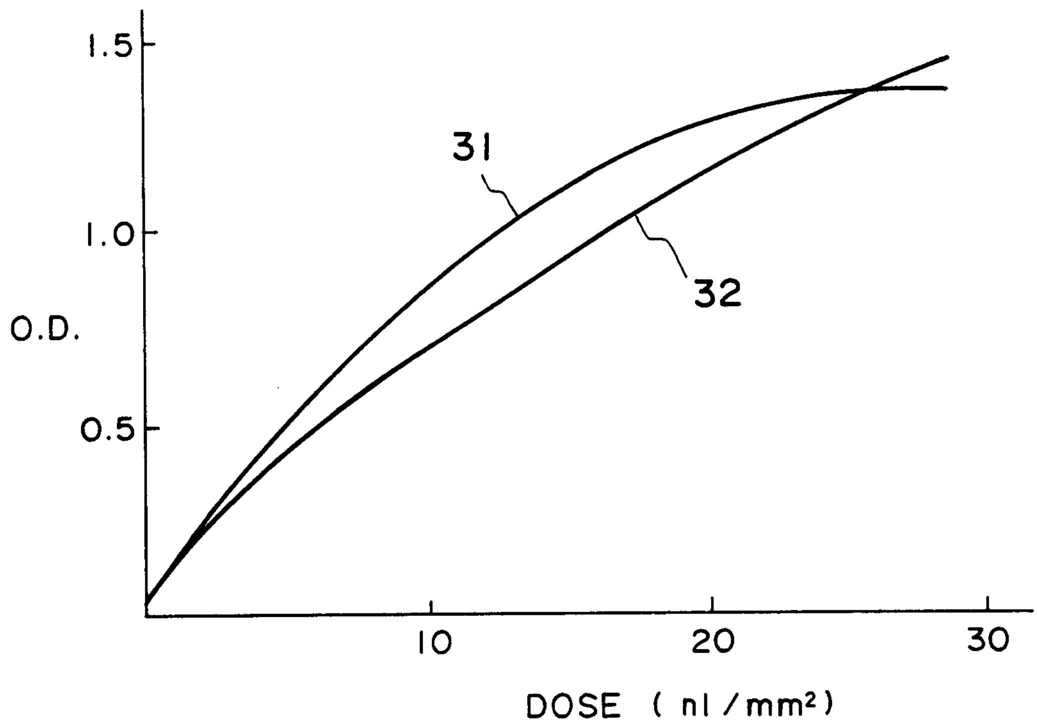


FIG. 29

| CONTENTS | % BY WEIGHT |
|---|---|
| DI ETHYLENE GLYCOL | 30 |
| WATER | 67 |
| C. I. HOOD BLACK 2 | 3 |

FIG. 30

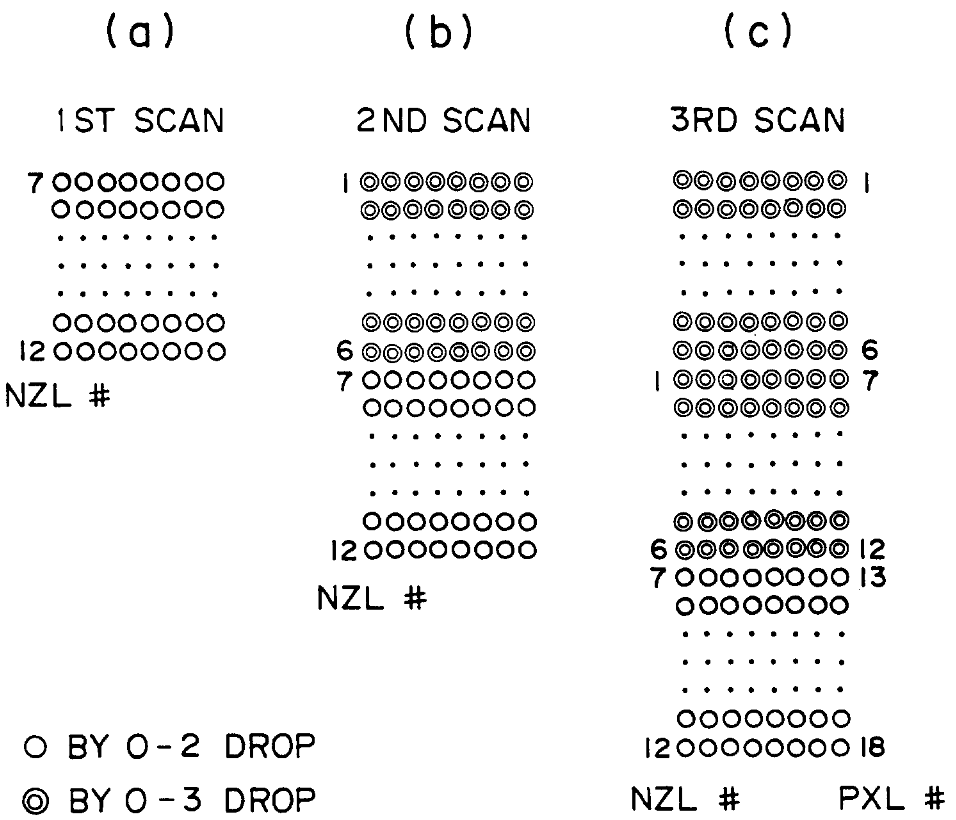
(a)
(b)
(c)
1ST SCAN
2ND SCAN
3RD SCAN
NZL #
PXL #
○ BY 0-2 DROP
◎ BY 0-3 DROP

FIG. 31

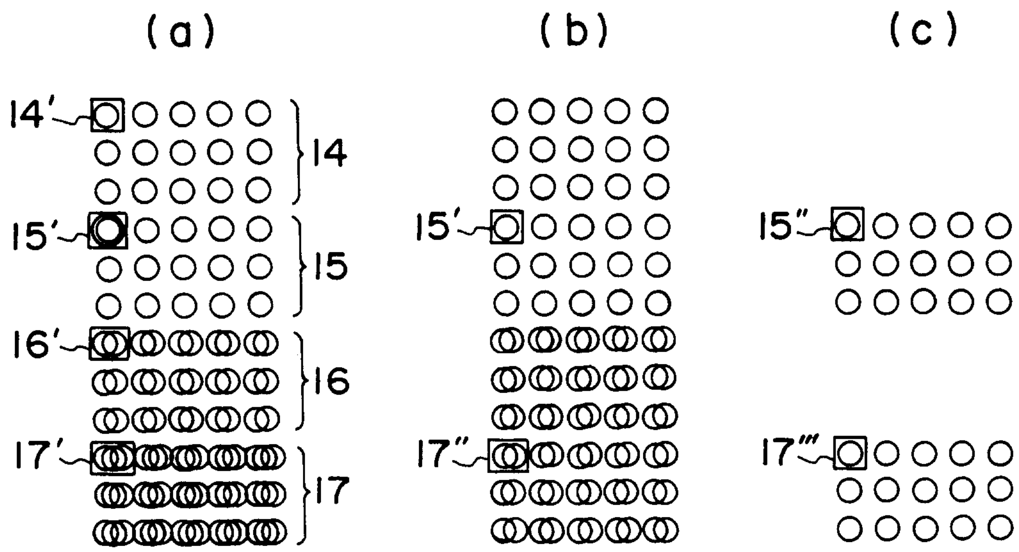
(a)
(b)
(c)
14'
14
15'
15
16'
16
17'
17
15''
17''
17'''

FIG. 32

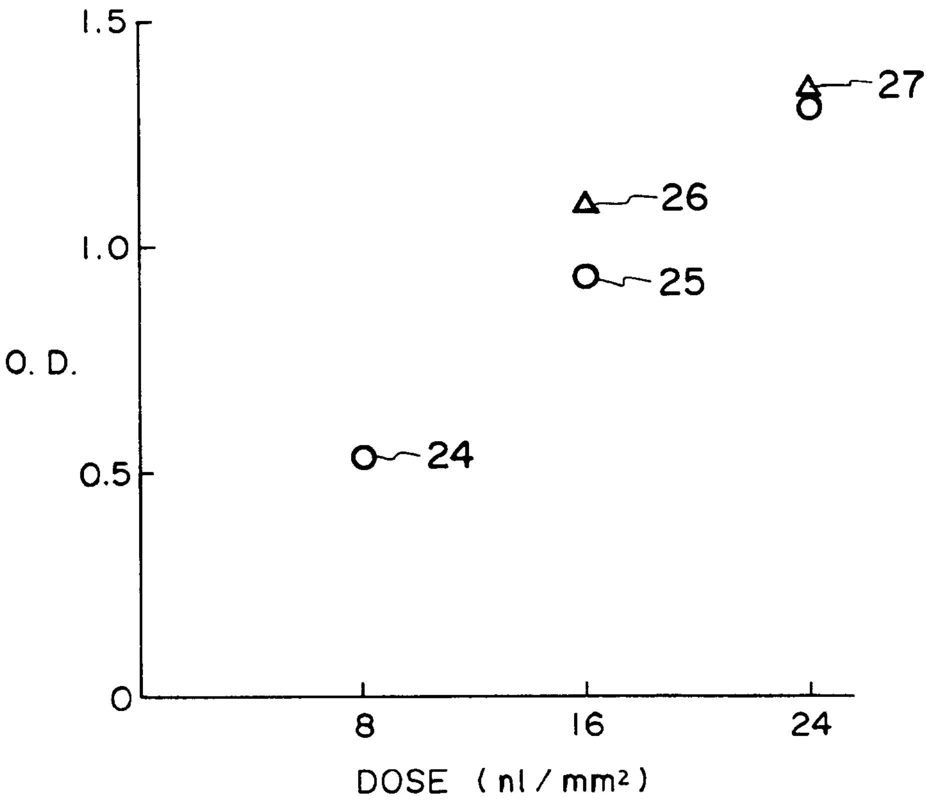
1.5
1.0
0.5
0
O. D.
27
26
25
24
8
16
24
DOSE (nl / mm2)

FIG. 33

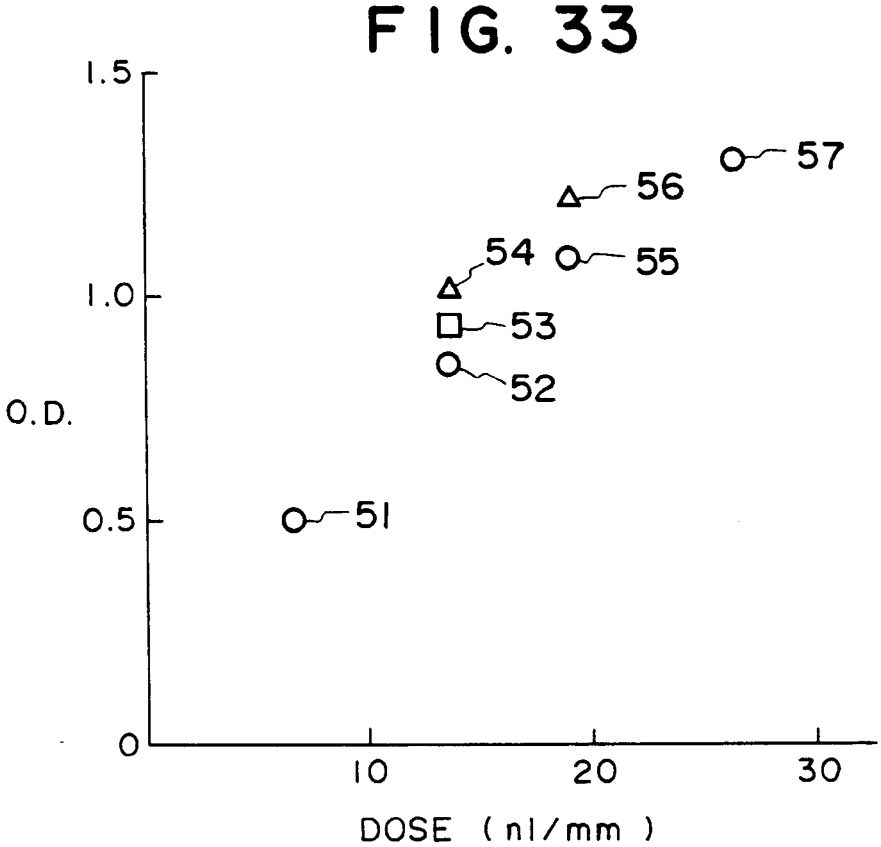
1.5
1.0
0.5
0
O.D.
57
56
55
54
53
52
51
10
20
30
DOSE (nl/mm )

FIG. 35

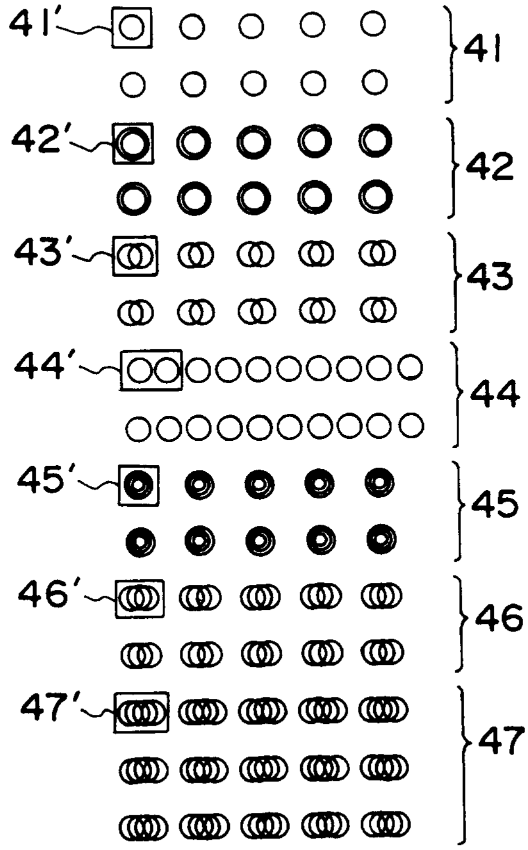


F I G. 34

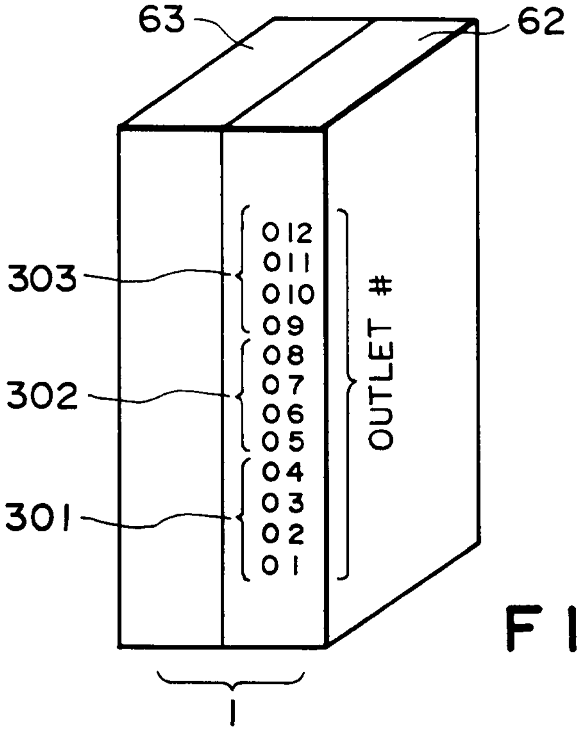
63
62
303
302
301
O12
O11
O10
O9
O8
O7
O6
O5
O4
O3
O2
O1
OUTLET #
1

FIG. 36

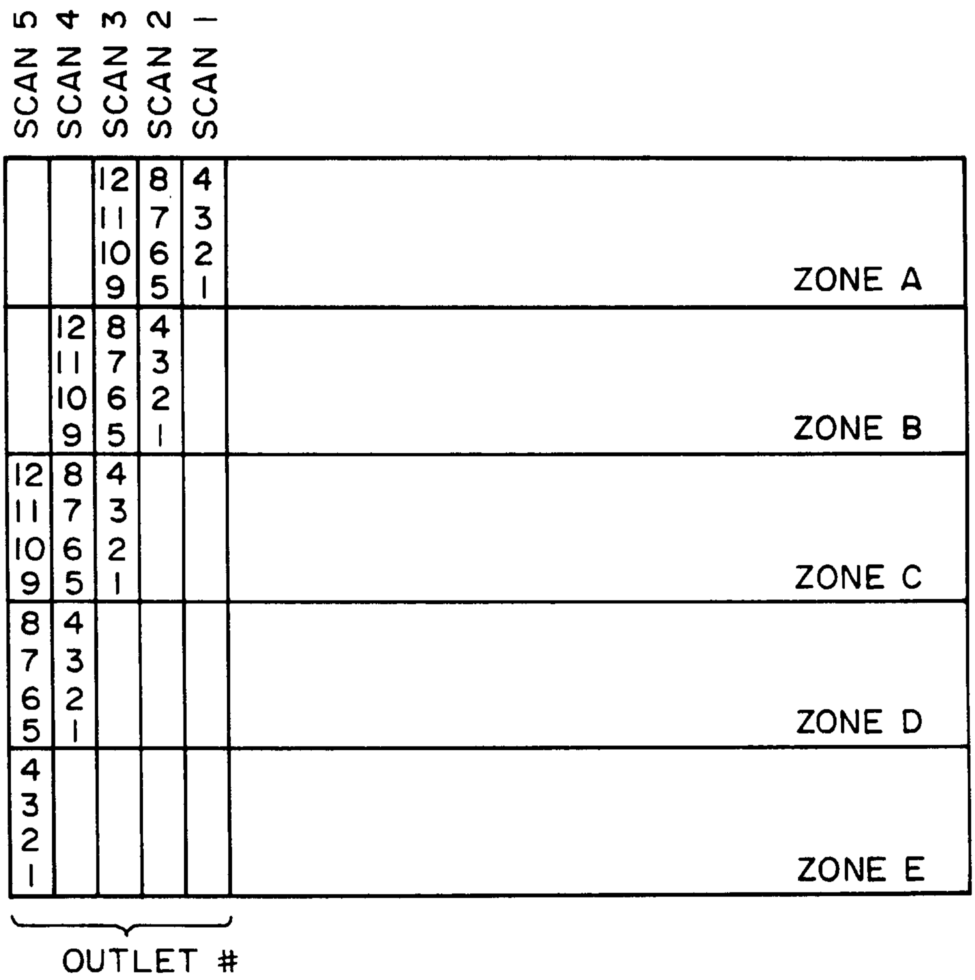
SCAN 5
SCAN 4
SCAN 3
SCAN 2
SCAN 1
ZONE A
ZONE B
ZONE C
ZONE D
ZONE E
OUTLET #

FIG. 37

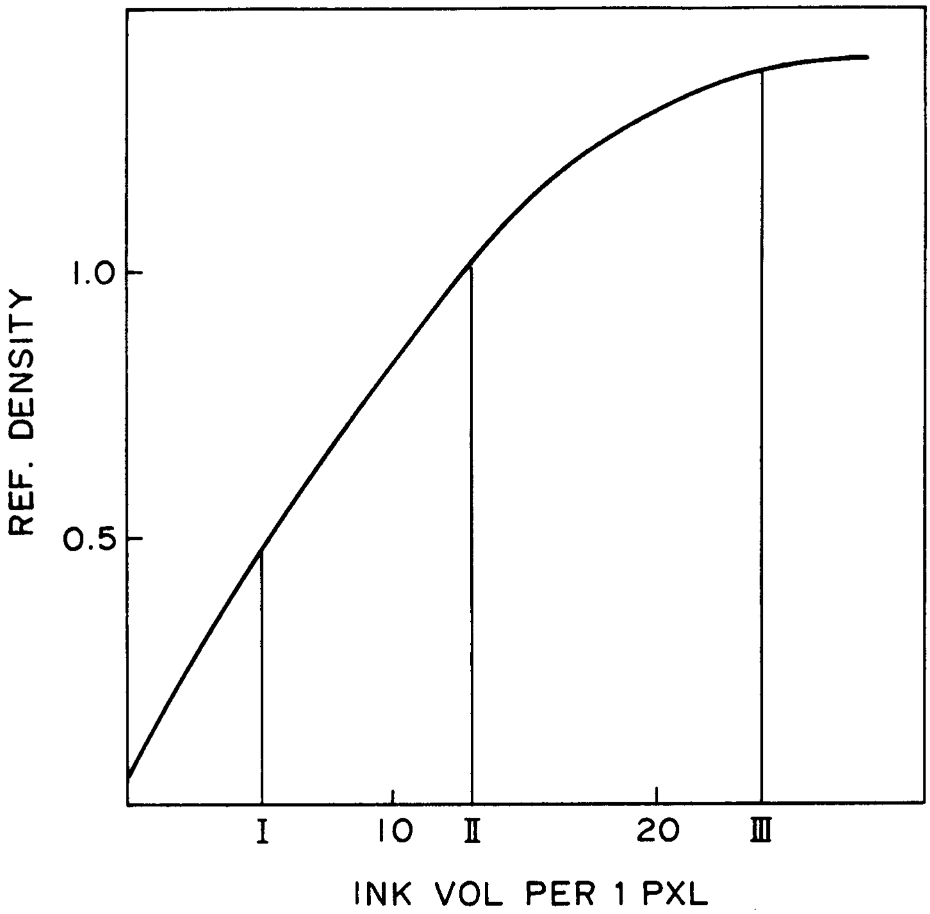
REF. DENSITY
1.0
0.5
I
10
II
20
III
INK VOL PER 1 PXL

FIG. 38

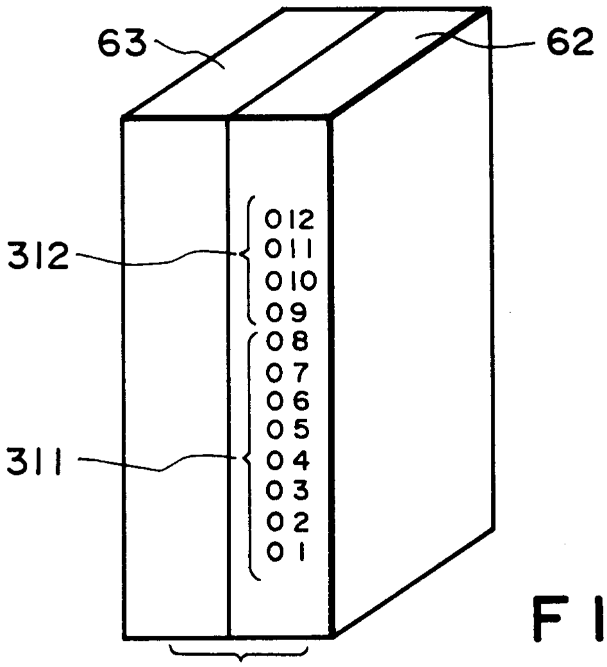
63
62
312
311
O12
O11
O10
O9
O8
O7
O6
O5
O4
O3
O2
O1
1

FIG. 39

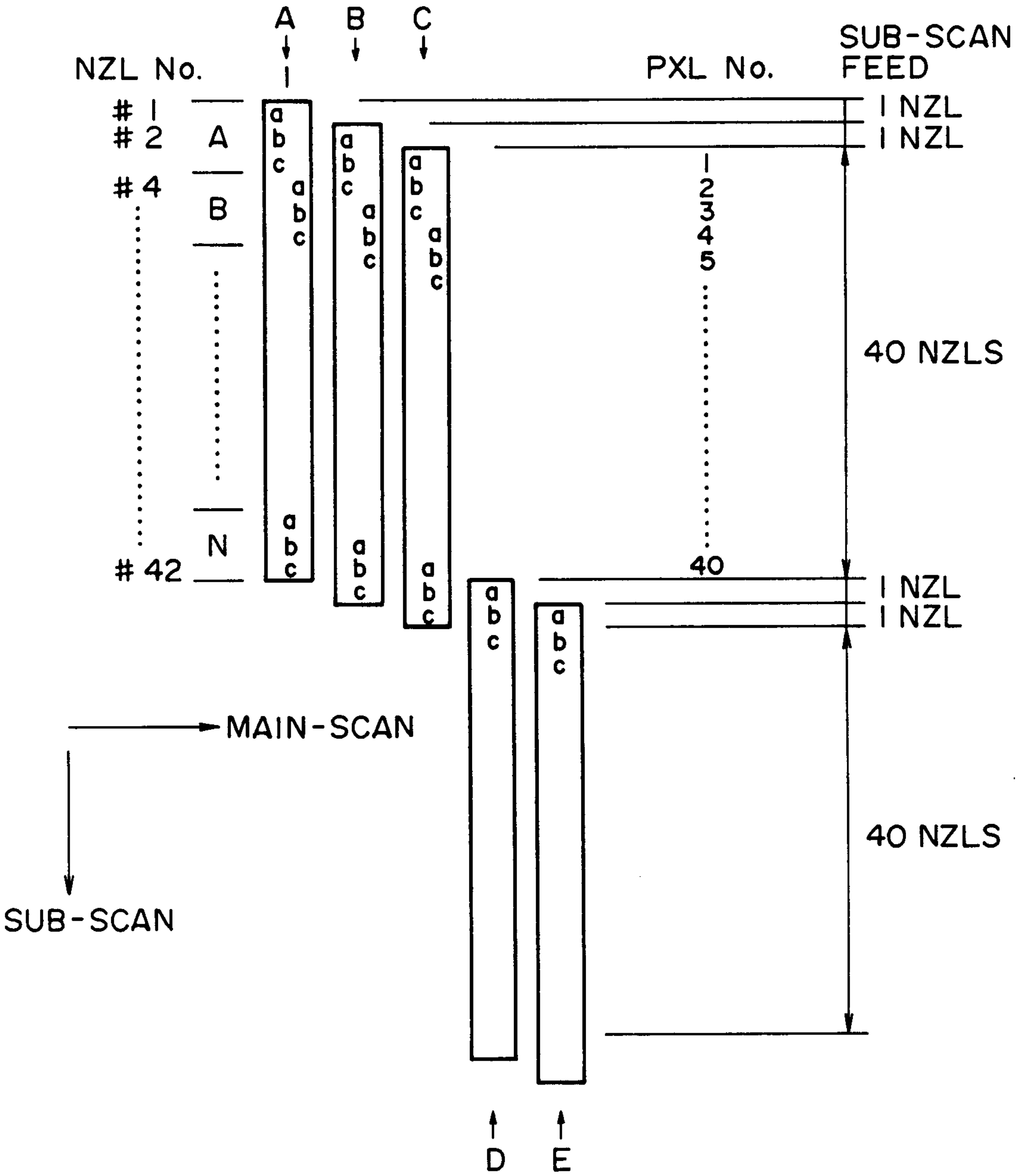
A
B
C
NZL No.
PXL No.
SUB-SCAN FEED
# 1
# 2
# 4
# 42
A
B
N
1 NZL
1 NZL
1
2
3
4
5
40
40 NZLS
1 NZL
1 NZL
40 NZLS
MAIN-SCAN
SUB-SCAN
D
E

FIG. 40

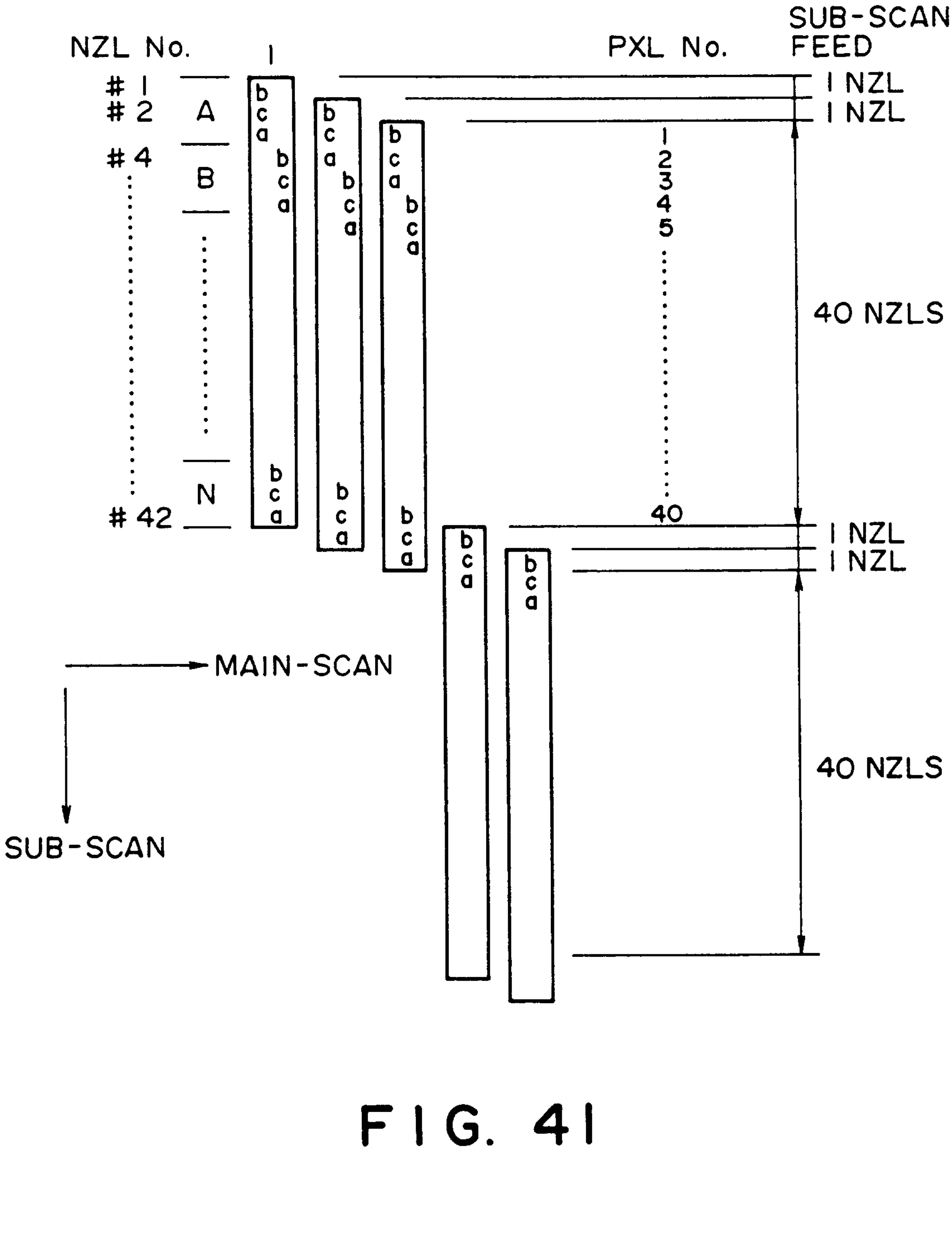
NZL No.
# 1
# 2
# 4
# 42
A
B
N
1
b
c
a
PXL No.
1
2
3
4
5
40
SUB-SCAN FEED
1 NZL
1 NZL
40 NZLS
1 NZL
1 NZL
40 NZLS
MAIN-SCAN
SUB-SCAN

FIG. 41

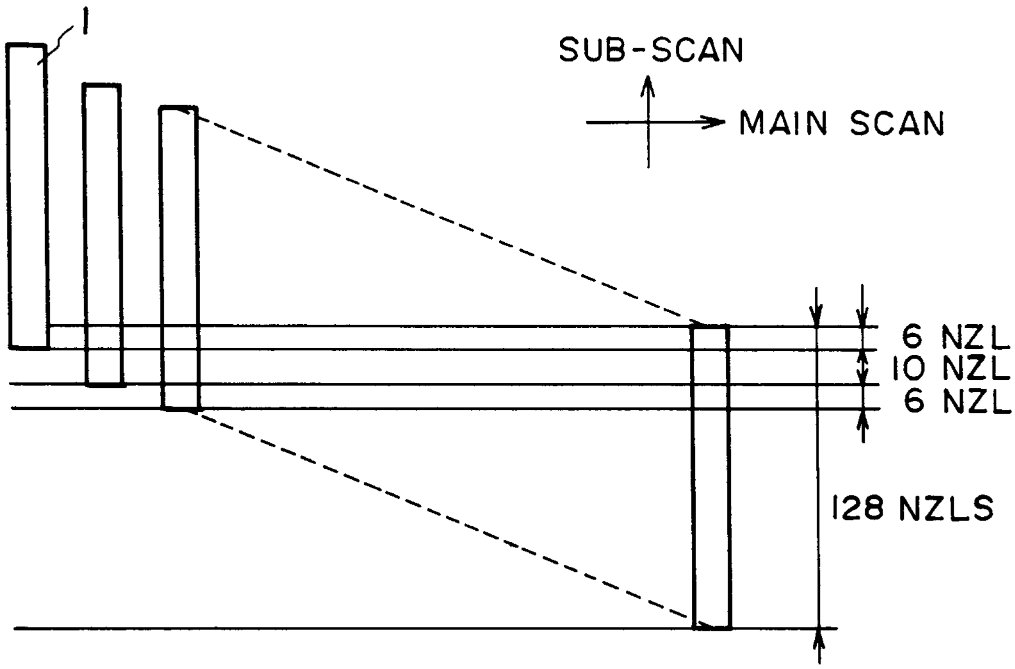
1
SUB-SCAN
MAIN SCAN
6 NZL
10 NZL
6 NZL
128 NZLS

FIG. 42

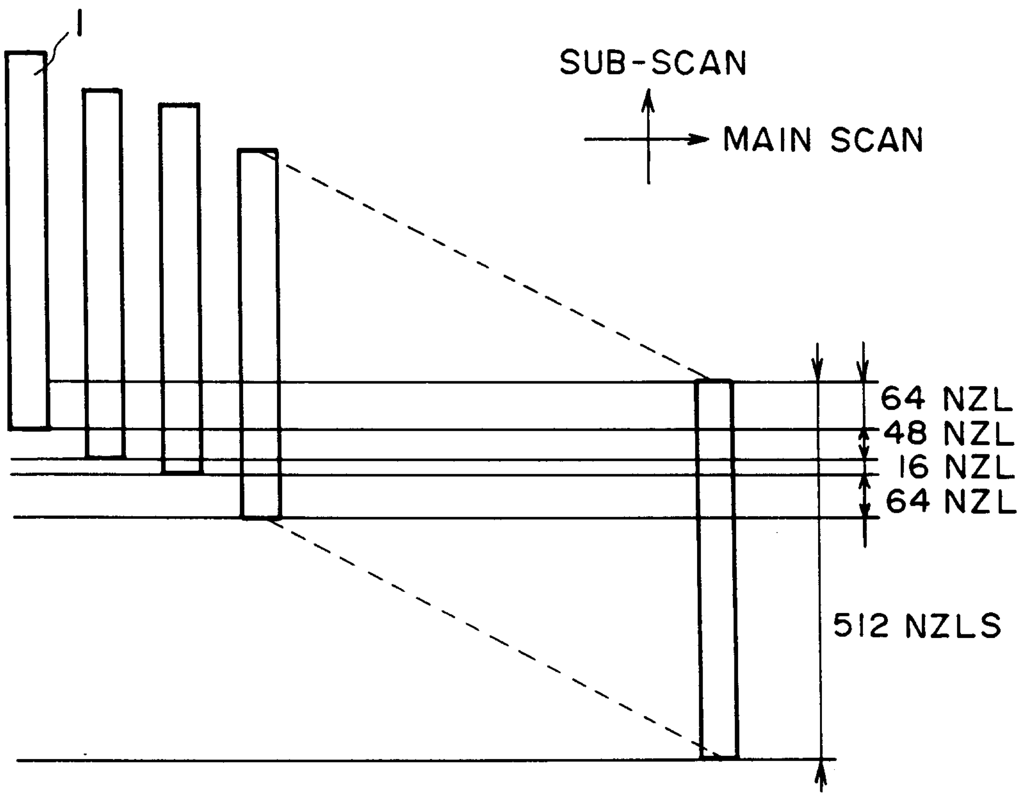
1
SUB-SCAN
MAIN SCAN
64 NZL
48 NZL
16 NZL
64 NZL
512 NZLS

FIG. 43

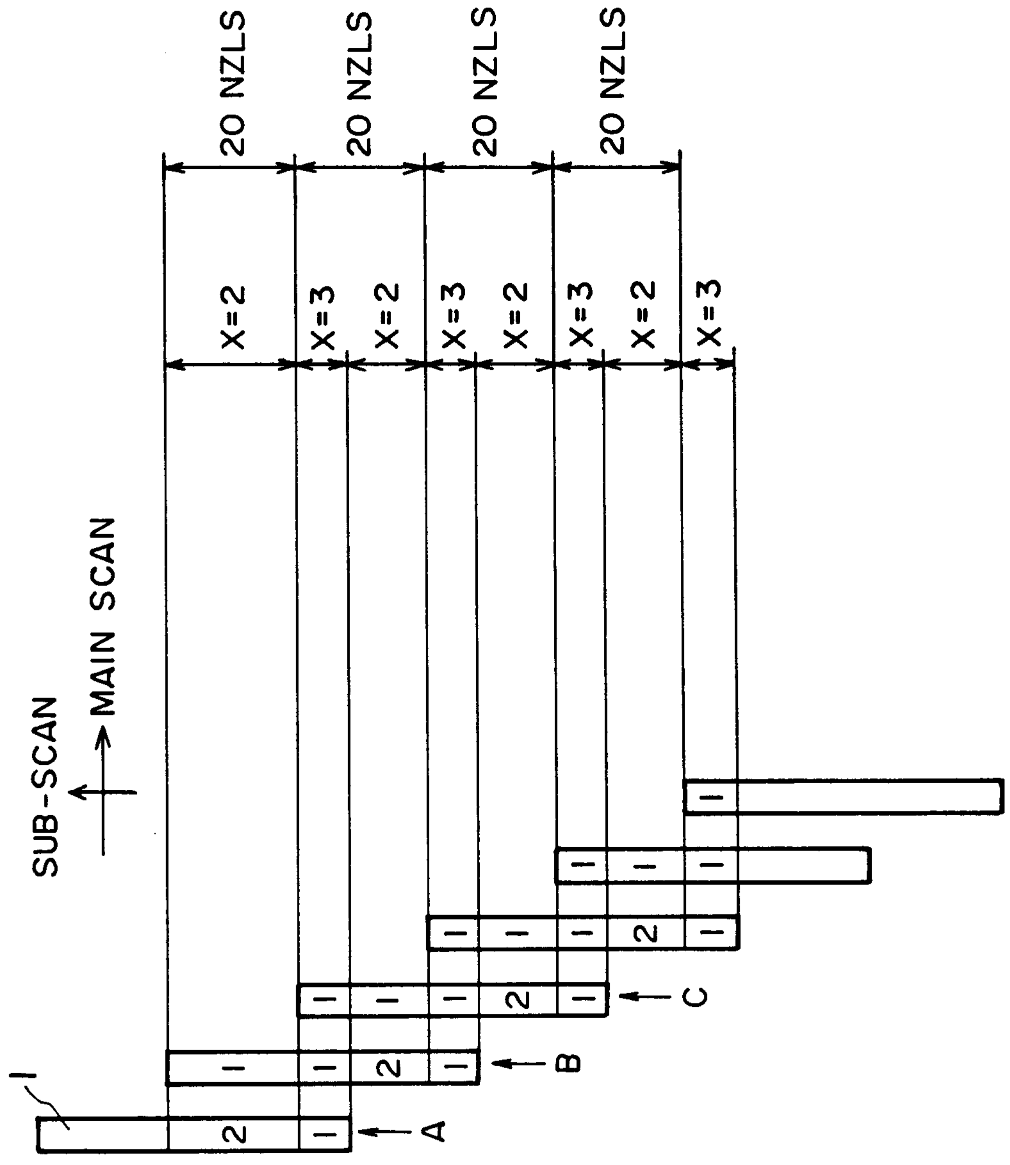
SUB-SCAN
MAIN SCAN
20 NZLS
20 NZLS
20 NZLS
20 NZLS
X=2
X=3
X=2
X=3
X=2
X=3
X=2
X=3
1
2
1
1
1
2
1
1
1
1
2
1
1
1
1
2
1
1
1
1
1
A
B
C

FIG. 44

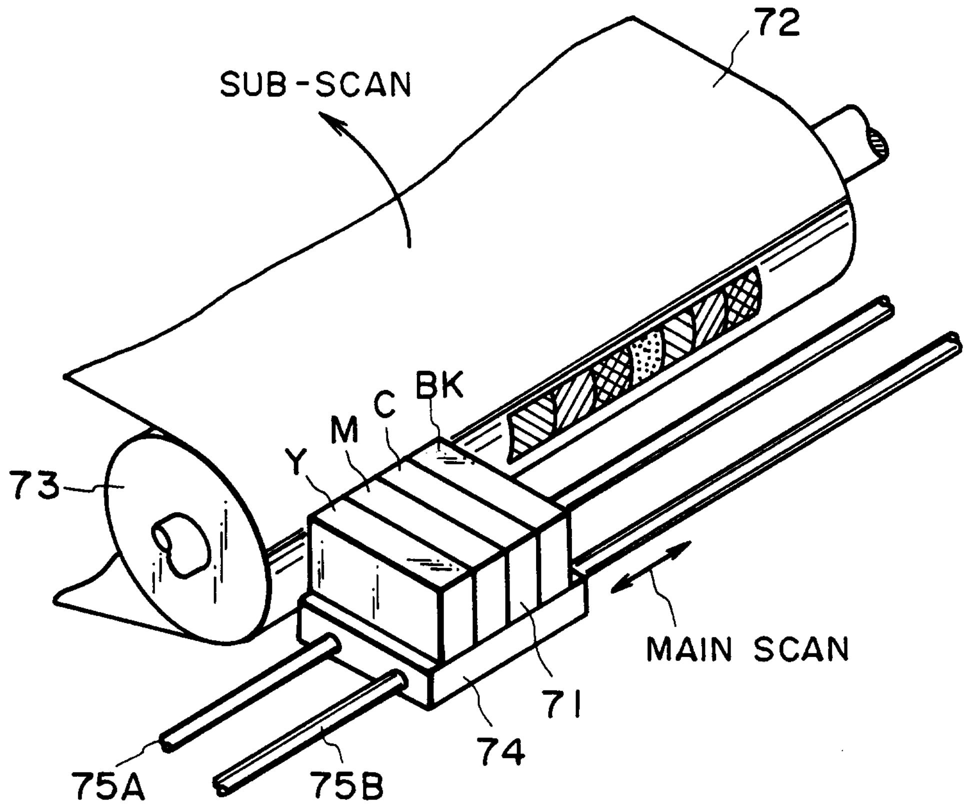
72
SUB-SCAN
BK
C
M
Y
73
MAIN SCAN
71
74
75A
75B

FIG. 45

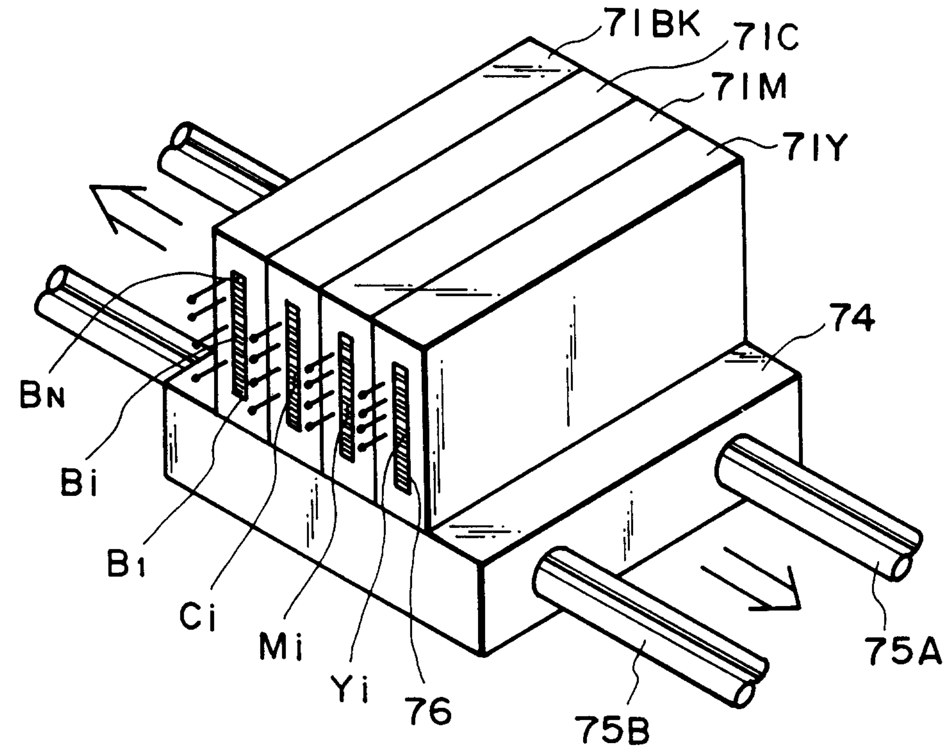
71BK
71C
71M
71Y
74
BN
Bi
B1
Ci
Mi
Yi
76
75B
75A

FIG. 46

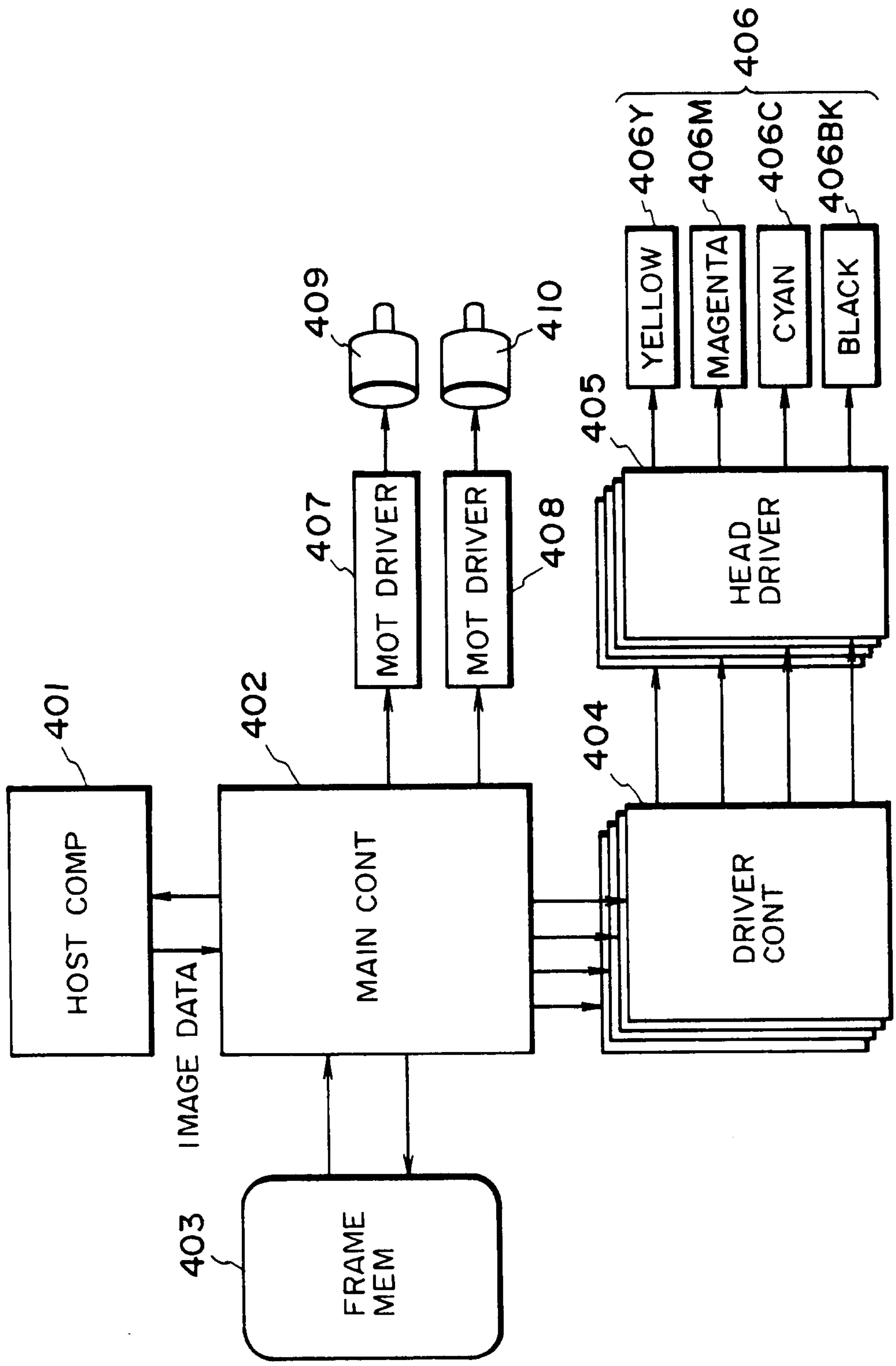
401
HOST COMP
IMAGE DATA
402
MAIN CONT
403
FRAME MEM
404
DRIVER CONT
405
HEAD DRIVER
407
MOT DRIVER
408
MOT DRIVER
409
410
406
406Y
YELLOW
406M
MAGENTA
406C
CYAN
406BK
BLACK

FIG. 47

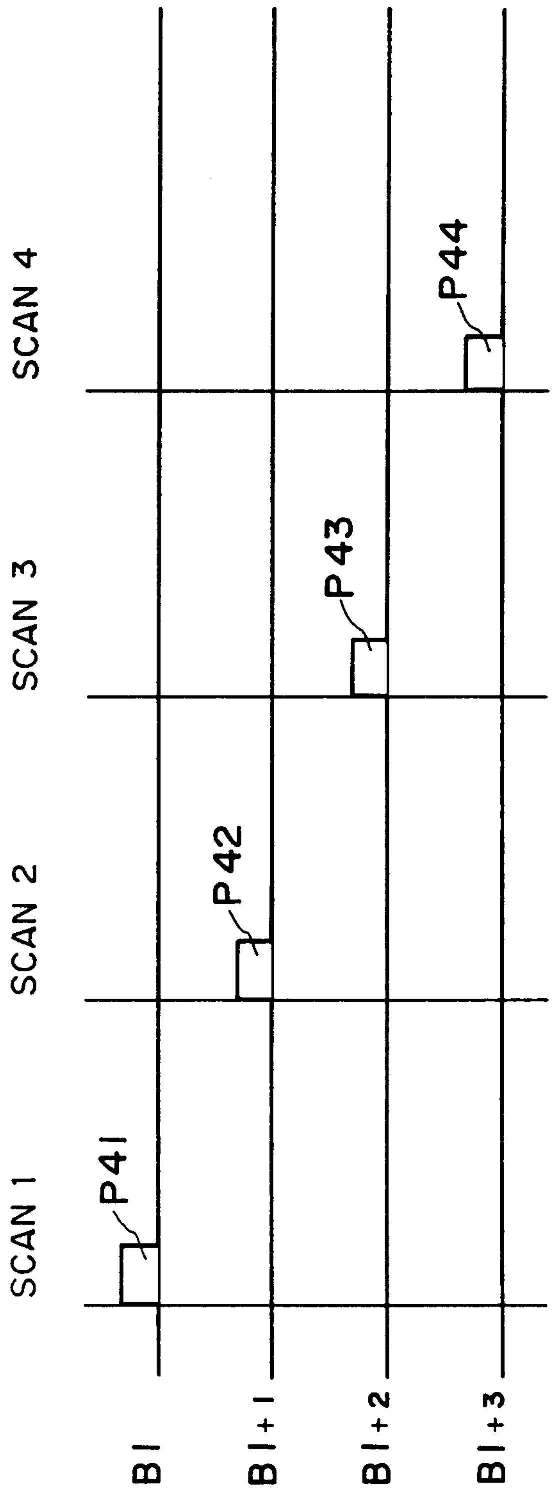


FIG. 48

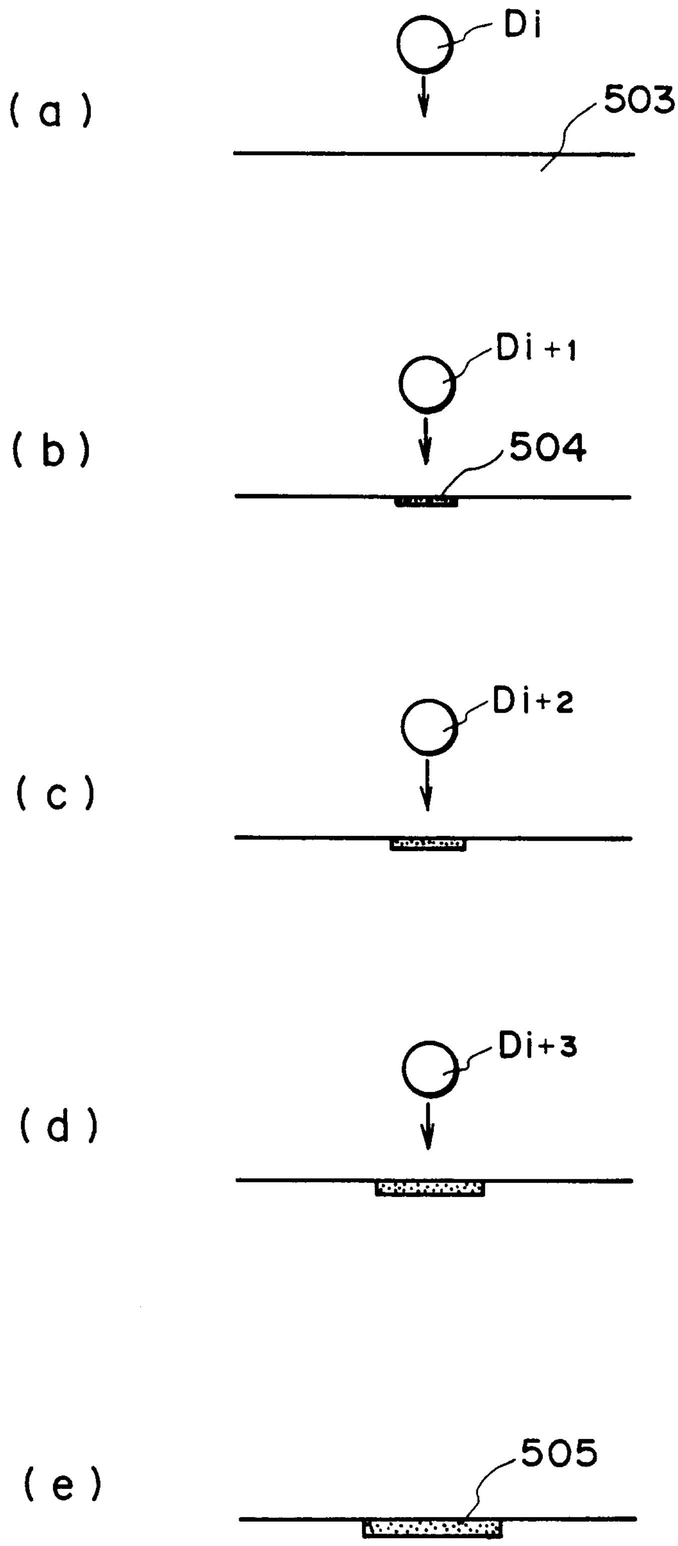


FIG. 49

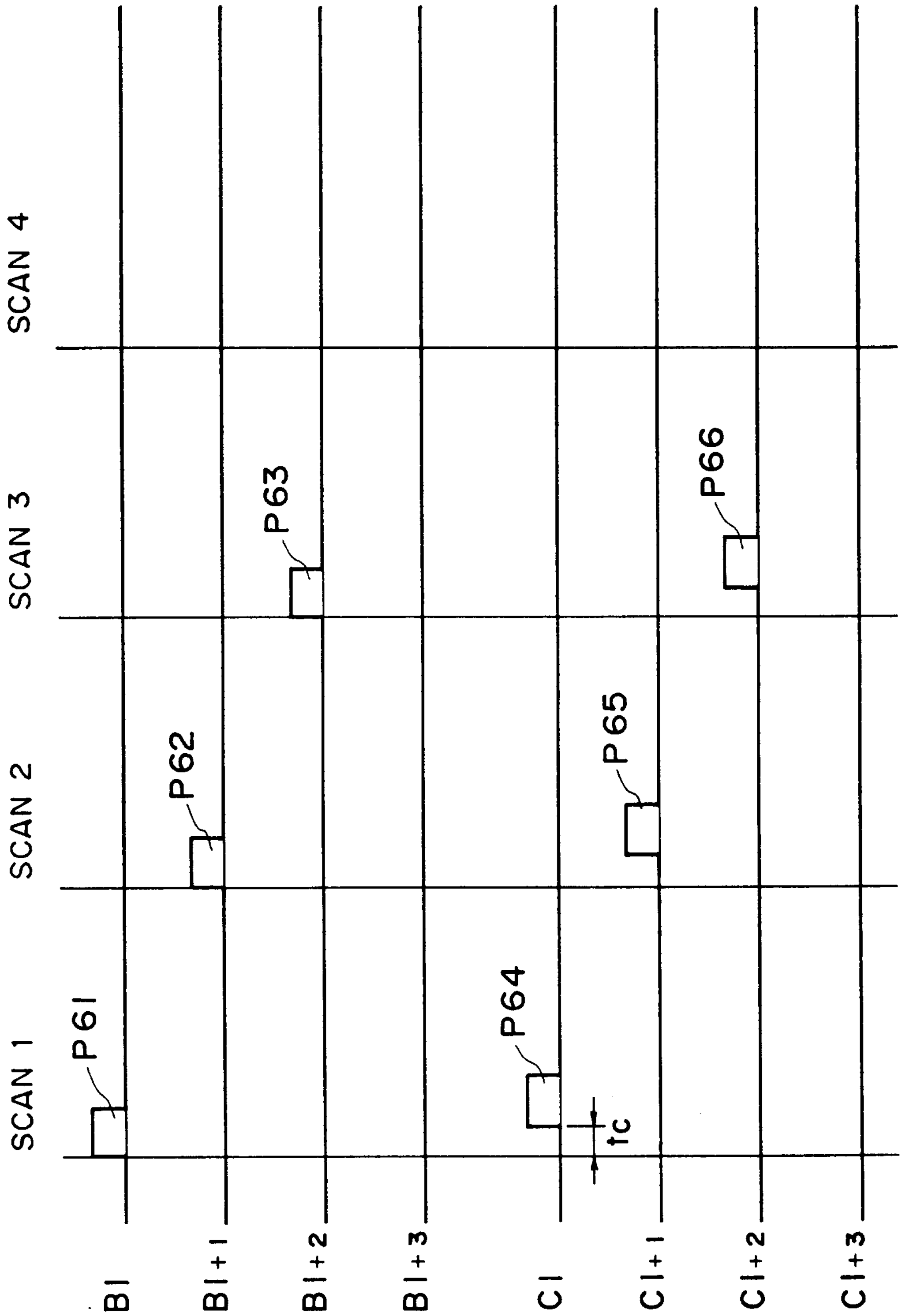
SCAN 1
SCAN 2
SCAN 3
SCAN 4
P61
P62
P63
P64
P65
P66
tc
BI
BI+1
BI+2
BI+3
CI
CI+1
CI+2
CI+3

FIG. 50

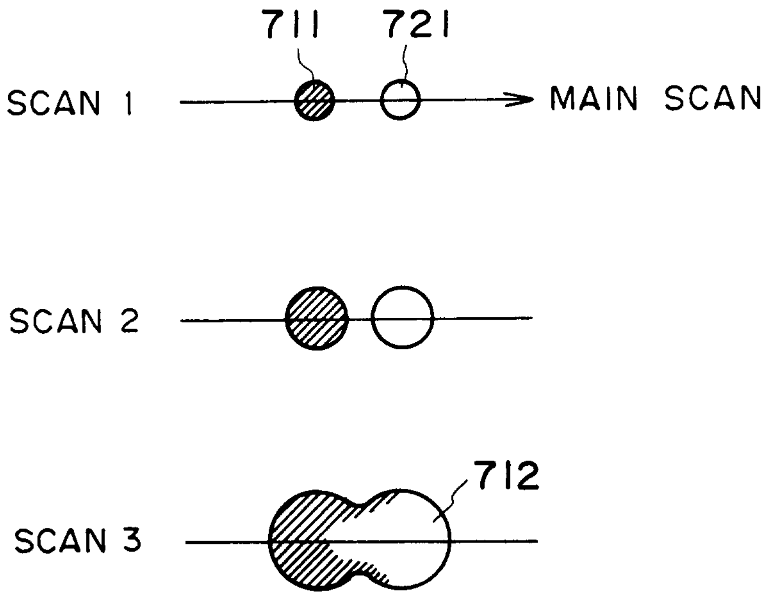
711
721
SCAN 1
MAIN SCAN
SCAN 2
712
SCAN 3

FIG. 51

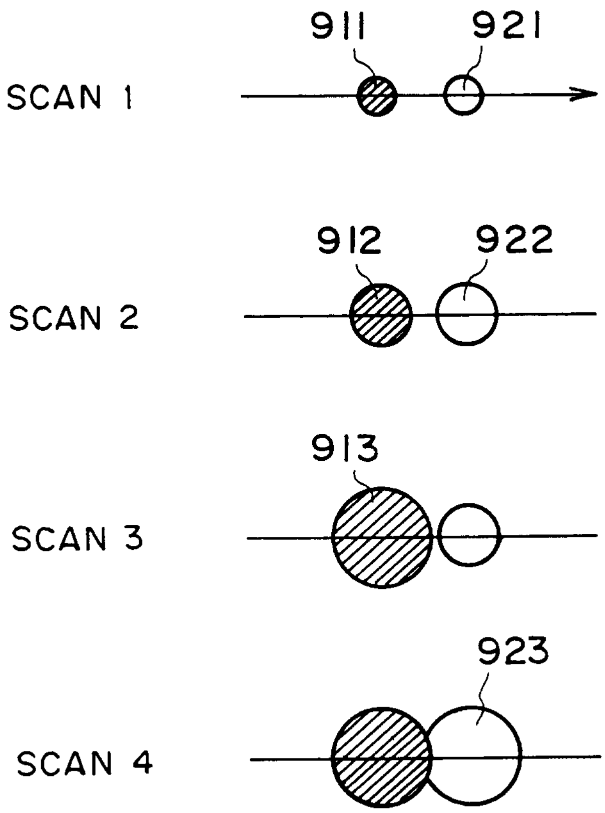
911
921
SCAN 1
912
922
SCAN 2
913
SCAN 3
923
SCAN 4

FIG. 53

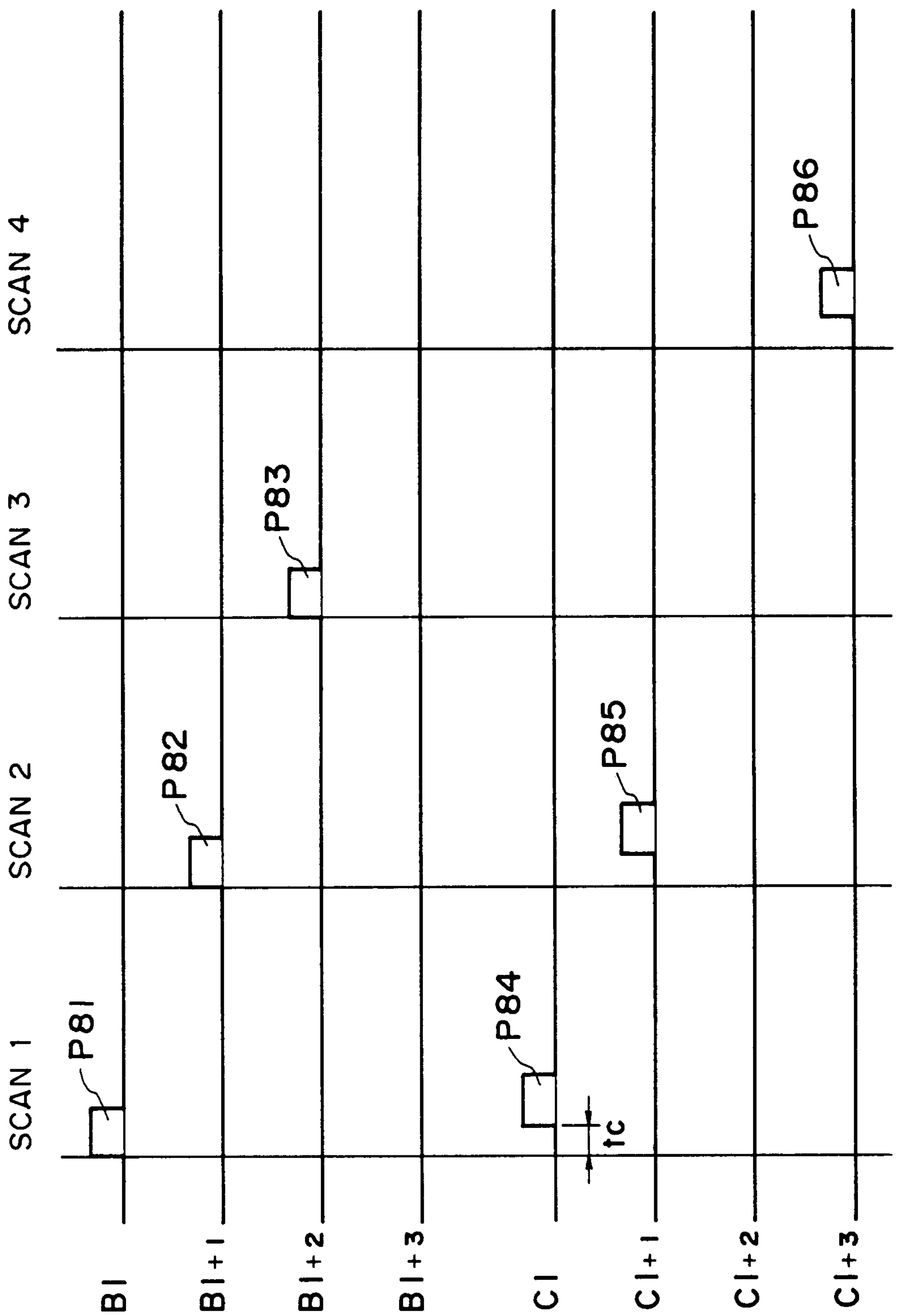
SCAN 1
SCAN 2
SCAN 3
SCAN 4
P81
P82
P83
P84
P85
P86
tc
BI
BI+I
BI+2
BI+3
CI
CI+I
CI+2
CI+3

FIG. 52

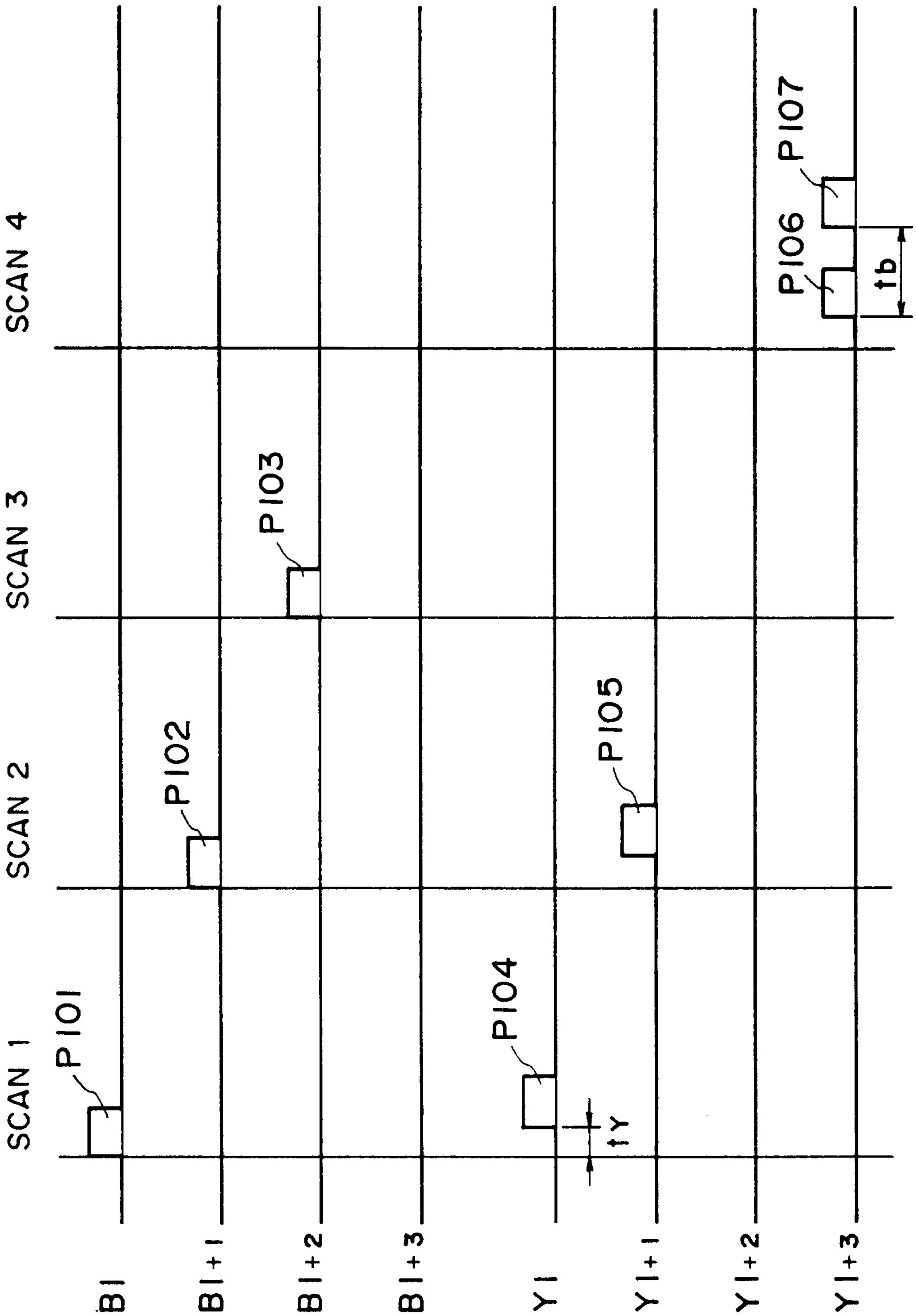
SCAN 1
SCAN 2
SCAN 3
SCAN 4
P101
P102
P103
P104
P105
P106
P107
tY
tb
BI
BI+1
BI+2
BI+3
YI
YI+1
YI+2
YI+3

FIG. 54

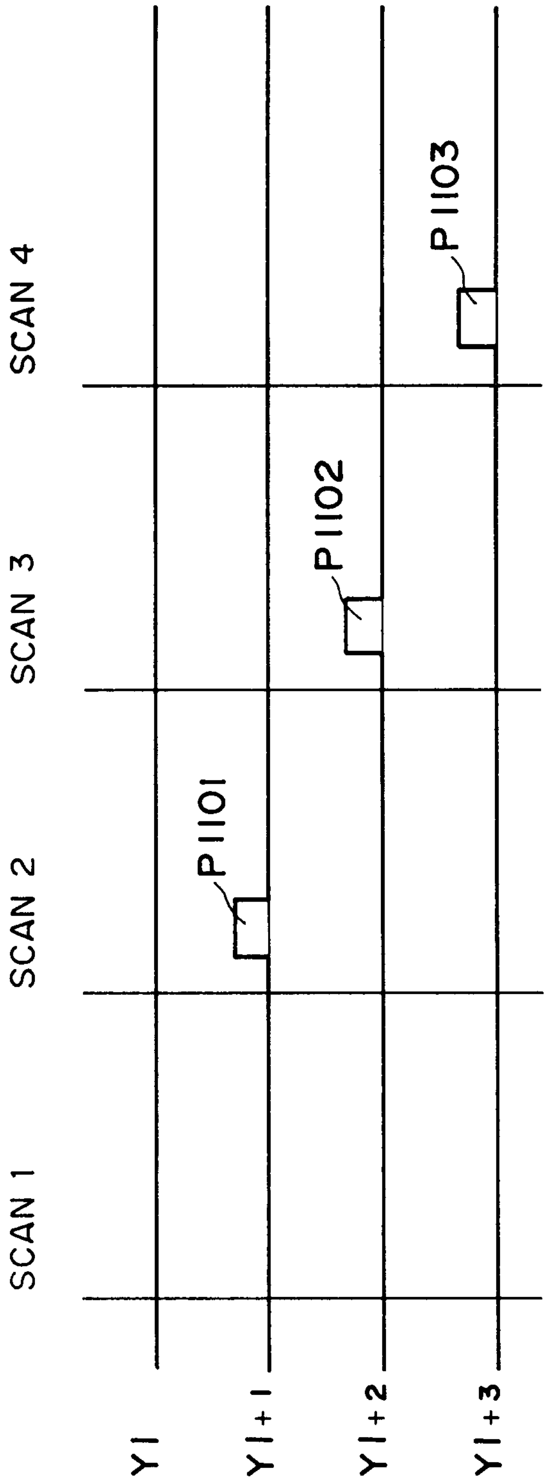


FIG. 55

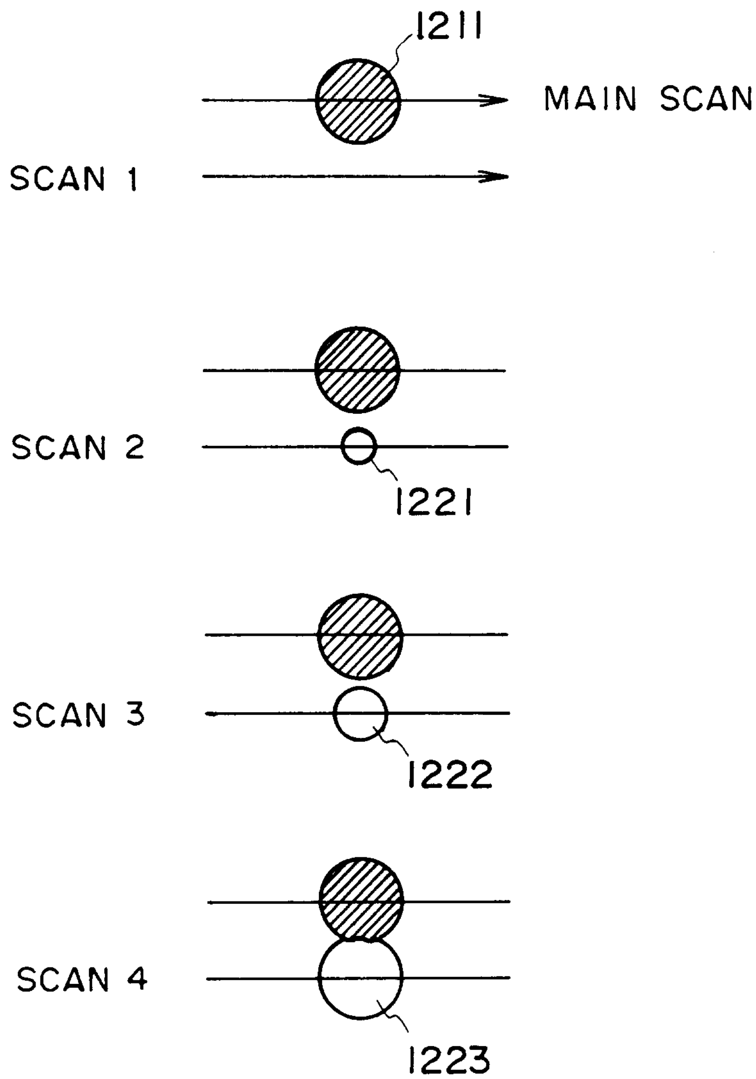


FIG. 56